(19) Europäisches Patentamt
European Patent Office
Office européen des brevets

(11) EP 3 948 475 B1

(12) EUROPEAN PATENT SPECIFICATION

(45) Date of publication and mention of the grant of the patent:
**23.04.2025 Bulletin 2025/17**

(21) Application number: **20782768.4**

(22) Date of filing: **01.04.2020**

(51) International Patent Classification (IPC):
***G06Q 40/04*** *(2012.01)* ***G06N 20/20*** *(2019.01)*

(52) Cooperative Patent Classification (CPC):
**G06N 20/20; G06Q 40/04; G06Q 40/06**

(86) International application number:
**PCT/US2020/026221**

(87) International publication number:
**WO 2020/206001 (08.10.2020 Gazette 2020/41)**

(54) **TRANSFORMATION AND COMPARISON OF TRADE DATA TO MUSICAL PIECE REPRESENTATION AND METRICAL TREES**

TRANSFORMATION UND VERGLEICH VON HANDELSDATEN ZUR MUSIKSTÜCKDARSTELLUNG UND METRISCHEN BÄUMEN

TRANSFORMATION ET COMPARAISON DE DONNÉES COMMERCIALES À UNE REPRÉSENTATION D'UNE PIÈCE MUSICALE ET À DES ARBRES MÉTRIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.04.2019 US 201916373625**

(43) Date of publication of application:
**09.02.2022 Bulletin 2022/06**

(73) Proprietor: **Data Boiler Technologies LLC**
**Wollaston, MA 02170 (US)**

(72) Inventor: **TO, Kelvin Chunkit**
**Wollaston, Massachusetts 02170 (US)**

(74) Representative: **Mewburn Ellis LLP**
**Manchester One**
**53 Portland Street**
**Manchester M1 3LD (GB)**

(56) References cited:
**WO-A1-2018/234922 US-A1- 2003 050 879**
**US-A1- 2004 055 447 US-A1- 2005 240 396**
**US-A1- 2005 240 510 US-A1- 2006 047 590**
**US-A1- 2015 081 505 US-A1- 2018 276 541**

- **VALERO DAVID RIZO: "Symbolic music comparison with tree data structures", 31 August 2010 (2010-08-31), pages 1 - 269, XP055968529, Retrieved from the Internet <URL:https://www.google.com/url?sa=t&rct=j&q=&esrc=s&source=web&cd=&ved=2ahUKEwjR8v3yyc36AhUEiv0HHdx7BeQQFnoECCAQAQ&url=https%3A%2F%2Frua.ua.es%2Fdspace%2Fbitstream%2F10045%2F18331%2F1%2FTesis_Rizo.pdf&usg=AOvVaw0NOWLQG62Kk701t7ceaudQ> [retrieved on 20221006]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 948 475 B1

**Description**

CROSS-REFERENCE TO RELATED APPLICATIONS

The present application is a continuation-in-part of U.S. patent application no. 16/373,625, filed on April 2, 2019, and entitled "EFFICENT USE OF COMPUTING RESOURCES THROUGH TRANSFORMATION AND COMPARISON OF TRADE DATA TO MUSICAL PIECE REPRESENTATION AND METRICAL TREES", which is a continuation-in-part of U.S. patent application no. 14/975,720 filed on December 19, 2015, which claims priority to U.S. provisional patent application no. 62/094,287 filed on December 19, 2014.

FIELD OF THE INVENTION

The present invention generally relates to the field of artificial intelligence. In particular, the present invention is directed to efficient use of computing resources through transformation and comparison of trade data to musical piece representation and metrical trees.

BACKGROUND

One trading discipline employed to evaluate investments and identify trading opportunities is a technical analysis, which assumes that past trading activity and price changes of a security can be valuable indicators of the security's future price movements and focuses on the statistical analysis of price trends and patterns seen on charts. However, technical analysis is time consuming, and the tasks to plot charts and measure vectors graphically can take several minutes or seconds at best. Known methods of technical analysis fail to identify essentials signals or warnings in a timely manner, given that high-frequency trading (HFT) program trading platforms transact a large number of orders in fractions of a second. The HFTs have data velocity that operates at nanosecond speeds, where a thousand trades can happen within 100 milliseconds time span. Thus, the timeliness required for online analytical processing (OLAP) pattern recognition required in technical analyses is inadequate for the Regulatory Agencies, such as the SEC, FINRA, electronic marketplaces, such as the Stock Exchanges, HFTs and any serious market participants trying to achieve best execution. The amount of computer resources required to meet timeliness requirements is quite significant and burdensome.

Further, known methods for analyzing financial instruments and/or market trends for making investment decisions and for time series forecasting are error-prone for both type I (false positives) and type II (false negatives) errors. This is partly due to the lack of pattern recognition accuracy with known methods. Pattern recognition accuracy depends on data veracity; however, timestamps on trade messages (for submitting, modifying, and canceling trade orders and to receive order acknowledgements) are inexact due to unsynchronized clocks. Clock synchronization refers to techniques used to coordinate a common time notion among processes. Currently, the Financial Industry Regulatory Authority (FINRA) rules require a $\pm$50 millisecond tolerance against the atomic clock of National Institute of Standards and Technology (NIST) and a 1 millisecond time stamp granularity for electronic trade messages. The known methods are unable to cope with this timestamp tolerance, leading to errors.

Further, known market surveillance and research techniques rely on humans' comparisons of graphs and charts, which lead to highly subjective evaluations. These known techniques thus lack sufficient objectivity.

Further, the analysis of trade data uses known techniques of data visualization, where vectors are measured graphically. However, these techniques of processing and reviewing graphical representations of large-sized trade data require significant computer resources. The cost of storing compressed trade data is also significant due to the hyper-increase in trade data volume.

Further, the confidentiality and secured delivery and retrieval of trade data in a timely manner is a priority concern. Current methods experience challenges in making access to market data, and thus market access, available to all market participants in a confidential and secure manner at the same speed.

Further, due to the complexity and fragmentation in capital markets, current technological tools are inadequate for aggregating or decomposing trade data such that the interconnectedness across markets and/or asset classes can be meaningfully identified.

Further, despite larger financial institutions and HFTs being equipped with artificial intelligence and supercomputers to advance their market surveillance/ research methods, the efforts of these entities are siloed, which hinders best practices sharing within the industry and may cause a fairness concern for those who cannot afford such technologies. This further hinders collective response capabilities to sudden market surprises or stress conditions.

US 2004/0055447 A1 discloses a musical sonification system and method which sonifies data, such as real-time financial market data, to produce an audio signal output including a musical rendering of the data. A sonification engine converts the data into sound parameters based on configuration data and a sonification and mapping scheme. A sound generator generates the audio output signal from the sound parameters.

The Ph.D. thesis "Symbolic music comparison with tree data" by David Rizo Valero (Universidad de Alicante, August 2010) discloses music comparison with tree representations and computer music algorithms.

## SUMMARY OF THE DISCLOSURE

The present invention is defined in the independent claims. Advantageous modifications of embodiments of the invention are defined in the dependent claims. In the following, the parts of the description and drawings referring to embodiments which are not covered by the claims are not presented as embodiments of the invention but as background art or examples useful for understanding the invention.

In an aspect, a system for processing and monitoring trade data, the system comprising a computing device having at least one processor and configured to perform steps including receiving a plurality of data representing sets of trade activities, receiving a plurality of user inputs from a plurality of user client devices, wherein each user input of the plurality of user inputs further comprises an identification of a datum, representing a set of trade activities, of the plurality of data representing trade activities and an identification of a trade irregularity associated with the set of trade activities, converting the plurality of data representing sets of trade activities and the plurality of user inputs into training data, and generating a classifier as a function of the training data, wherein the classifier receives representations of sets of trade activities as inputs and outputs associated trade irregularities.

In another aspect, a method for processing and monitoring trade data includes receiving, by a computing device, a plurality of data representing sets of trade activities, receiving, by the computing device, a plurality of user inputs from a plurality of user client devices, wherein each user input of the plurality of user inputs further comprises an identification of a datum, representing a set of trade activities, of the plurality of data representing trade activities and an identification of a trade irregularity associated with the set of trade activities, converting, by the computing device, the plurality of data representing sets of trade activities and the plurality of user inputs into training data, and generating, by the computing device, a classifier as a function of the training data, wherein the classifier receives representations of sets of trade activities as inputs and outputs associated trade irregularities.

## BRIEF DESCRIPTION OF THE DRAWINGS

For the purpose of illustrating the invention, the drawings show aspects of one or more embodiments of the invention. However, it should be understood that the present invention is not limited to the precise arrangements and instrumentalities shown in the drawings, wherein:

FIG. 1 illustrates a block diagram of a representative system comprising components for at least the processing and analysis of real-time and/or historical trade order data and/or processed trades according to some embodiments;
FIG. 2 illustrates a computing environment according to some embodiments;
FIG. 3 is a flowchart illustrating a method the processing and sequencing of real-time or historical trade data and/or processed trades, implemented by the data processor, according to some embodiments;
FIG. 4 illustrates an example user interface or display window for trade activities;
FIG. 5 illustrates an example user interface or window panels with various tabs of tuning controls for market dynamics assimilation and depth-of-book replication;
FIG. 6 illustrates a method for transforming, composing, or decomposing of real-time trade order data or processed trades into metrical trees according to some embodiments;
FIG. 7 is a flowchart illustrating a method for providing trade analytics, implemented by the analytical system, according to some embodiments;
FIG. 8 is a flowchart illustrating in more detail the analytics performed by the detection engine according to some embodiments;
FIG. 9 is a flowchart illustrating a pattern recognition process to compare trade order data and/or processed trades with complex event processing (CEP) lessons according to some embodiments;
FIG. 10 illustrates a table of example triggers in the lessons database according to some embodiments;
FIG. 11 is a flowchart illustrating a process implemented by the backstop assurance component according to some embodiments;
FIG. 12 illustrates examples of the identification of synthetically created trades by the basic control component, according to some embodiments;
FIG. 13 is a flowchart illustrating a method of computing and defining parameters and boundaries by the models and logics component according to some embodiments;
FIG. 14 illustrates exemplary frameworks and algorithms for use with the analytical system according to some embodiments of the present invention;
FIG. 15 illustrates a method for determining the reasonably expected near-term demand (RENTD) according to some embodiments;

FIG. 16 illustrates an exemplary method for creating the inventory plan to guide an entity's risk mitigating hedge and liquidity management activities, according to some embodiments;

FIG. 17 is a flowchart illustrating an exemplary method for crowd computing processing according to some embodiments;

FIG. 18 is a flowchart illustrating a method for reconstructing a trade event, implemented by the trade reconstruction component of the review system, according to some embodiments;

FIG. 19 is a flowchart illustrating a method for assimilating market dynamics and back-testing, implemented by the order book replay simulator, according to some embodiments;

FIG. 20 illustrates an example user interface implemented by the trade reconstruction component;

FIG. 21 is a flowchart illustrating a method implemented by the case management component according to some embodiments; and

FIG. 22 is a block diagram of components of a computer system, one or more of which are used to implement various embodiments of the present invention;

The drawings are not necessarily to scale and may be illustrated by phantom lines, diagrammatic representations and fragmentary views. In certain instances, details and/or reference characters that are not necessary for an understanding of the embodiments or that render other details difficult to perceive may have been omitted.

## DETAILED DESCRIPTION

The following description is presented to enable one of ordinary skill in the art to make and use the present invention and is provided in the context of a patent application and its requirements.

The flowchart and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified local function(s).

It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

Embodiments of the present invention provide: more accurate detection of onset signals at accelerated speed while using fewer computer resources; pattern recognition methods that are more tolerable to unsynchronized clocks; more objective and quantifiable ways to surveil or research across the markets and/or asset classes; better data compression and obfuscation techniques to substantially reduce storage requirements while preserving richness and confidentiality of information; simplified way to meaningfully aggregate or decompose financial records which enable a more robust trade reconstruction and order book replay process; and crowd computing and other components where shared best practices and intelligence are developed and used to guide and fine-tune parameters and filtering mechanism used in monitoring and managing trade activities, identifying irregular patterns, and detecting and investigating potential misconducts.

FIG. 1 illustrates a system 0XX0100, comprising components for the processing and analysis of real-time trade order data and/or processed trades according to some embodiments. The system 0XX0100 includes a data processor 1XX1101 for the processing, compressing and sequencing of real-time or historical trade order data or processed trades using an audio or metrical trees approach with tuning and information security controls. The system 0XX0100 further includes an analytical system 2XX0100 for the analyzing of trade activities using a hybrid of rules-based and pattern recognition techniques. The system further includes a review system 3XX0140 for reconstructing trade and market events for the purposes of investigating potential trade misconduct.

Referring now to FIG. 1, components of system 0XX0100, including without limitation, data processor 1XX1101, may be implemented as a computing device and/or a software and/or hardware module operating on one or more computing devices. A computing device may include any computing device as described in this disclosure, including without limitation a microcontroller, microprocessor, digital signal processor (DSP) and/or system on a chip (SoC) as described in this disclosure. Computing device may include, be included in, and/or communicate with a mobile device such as a mobile telephone or smartphone. A computing device may include a single computing device operating independently, or may include two or more computing device operating in concert, in parallel, sequentially or the like; two or more computing devices may be included together in a single computing device or in two or more computing devices. A computing device may interface or communicate with one or more additional devices as described below in further detail via a network interface device. Network interface device may be utilized for connecting a computing device to one or more of a variety of networks, and one or more devices. Examples of a network interface device include, but are not limited to, a network interface card *(e.g.,* a mobile network interface card, a LAN card), a modem, and any combination thereof.

Examples of a network include, but are not limited to, a wide area network (e.g., the Internet, an enterprise network), a local area network (e.g., a network associated with an office, a building, a campus or other relatively small geographic space), a telephone network, a data network associated with a telephone/voice provider *(e.g.,* a mobile communications provider data and/or voice network), a direct connection between two computing devices, and any combinations thereof. A network may employ a wired and/or a wireless mode of communication. In general, any network topology may be used. Information (e.g., data, software etc.) may be communicated to and/or from a computer and/or a computing device. A computing device may include but is not limited to, for example, a computing device or cluster of computing devices in a first location and a second computing device or cluster of computing devices in a second location. A computing device may include one or more computing devices dedicated to data storage, security, distribution of traffic for load balancing, and the like. A computing device may distribute one or more computing tasks as described below across a plurality of computing devices of computing device, which may operate in parallel, in series, redundantly, or in any other manner used for distribution of tasks or memory between computing devices. A computing device may be implemented using a "shared nothing" architecture in which data is cached at the worker, in an embodiment, this may enable scalability of system 0XX0100 and/or computing device.

A computing device, and/or any module and/or component introduced in this disclosure, may be designed and/or configured to perform any method, method step, or sequence of method steps in any embodiment described in this disclosure, in any order and with any degree of repetition. For instance, a computing device and/or module may be configured to perform a single step or sequence repeatedly until a desired or commanded outcome is achieved; repetition of a step or a sequence of steps may be performed iteratively and/or recursively using outputs of previous repetitions as inputs to subsequent repetitions, aggregating inputs and/or outputs of repetitions to produce an aggregate result, reduction or decrement of one or more variables such as global variables, and/or division of a larger processing task into a set of iteratively addressed smaller processing tasks. A computing device and/or module may perform any step or sequence of steps as described in this disclosure in parallel, such as simultaneously and/or substantially simultaneously performing a step two or more times using two or more parallel threads, processor cores, or the like; division of tasks between parallel threads and/or processes may be performed according to any protocol suitable for division of tasks between iterations. Persons skilled in the art, upon reviewing the entirety of this disclosure, will be aware of various ways in which steps, sequences of steps, processing tasks, and/or data may be subdivided, shared, or otherwise dealt with using iteration, recursion, and/or parallel processing.

The data processor 1XX1101 receives a plurality of inputs via a gateway 5AX1307. In some embodiments, the inputs include, but are not limited to: processed trades or a trade order stream 4AA0130; inventory positions and trading books 4BA0132; market data 5XA0131; reference data 5XB0131; outputs from a voice and E-communications surveillance system 5DA9999; and various news feeds 5DB9999. The data processor 1XX1101 includes: a data transform composer 1AX1101; a sequencer 1BX1101; a compression component 1CX9999; an information security component 1DX9999 and an outputs and storage management component 1EX1304. The data processor 1XX1101 and its components are described further below with reference to FIGS. 3-6.

The analytical system 2XX0100 receives rules or control lists 2JA0113 and management plans 2JB0301, and data from other components in the system 0XX0100, as input. The analytical system 2XX0100 uses a set of advanced filtering criteria 2JC1207 and includes: a basic control component 2AX0101; a detection engine 2BX0104; a pattern recognition component 2CX0904; a models and logics component 2DX0105; a backstop assurance component 2EX0106; and a crowd computing component 2FX0107. The analytical system 2XX0100 and its components are described further below with reference to FIGS. 7-17.

The review systems 3XX0140 includes: a trade reconstruction component 3AX1206; an order book replay simulator 3BX0415; and a case management component 3CX0140. The review systems 3XX0140 and its components are described further below with referenced to FIGS. 18-21.

The components of the system 0XX0100 are configured to communicate over various communication channels 5BX1307. The analytical system 2XX0100 and review systems 3XX0140 are configured with access to an audit trails database 3TX0121, a lessons database 2TX0120, and a flag/quarantine database 2TX0122. The data processor 1XX1101 further communicates, via a gateway 5AX1307, with broker or dealer systems 4XX1311, supervisory systems 6XX9999, self-regulatory organizations (SROs) and other trade platforms 5XX9999, voice and e-communications surveillance system 5DX9999, and a clear and settlement 5CX9999 (e.g. a central stock clearing system). The broker-dealers systems 4XX1311 can include order management system and/or execution management system (OMS/EMS) 4AX0211 that interacts with market makers' pricing and quotes systems 4CX9999 and portfolio management system/investment book of records (PMS/IBOR) 4BX0132. The brokers and dealers system 4XX1311 consists of both manual trades by traders 4DX0505 and algorithmic trading by machines 4EX9999.

In some embodiments, the data processor 1XX1101 composes the financial data into audio representation or metrical tree with tuning, compression, encryption, and other functions for: market data distribution and sharing between SROs and other trade platforms 5XX9999 and other market participants, such as broker/ dealers systems 4XX1311; preparing data for analytics by the analytical system 2XX0100 and review by the review systems 3XX0140; and trade reporting, data management, etc.

In some embodiments, the analytical system 2XX0100 uses a hybrid of rules-based and pattern recognition methods to: implement risk and compliance controls; conduct research and market surveillance; and monitor a house's trade activities, market behaviors, etc.

In some embodiments, the review system 3XX0140 serves as outputs and interfaces, implemented by: trade reconstruction component 3AX1206 for the review of the sequence of trade events; order book replay simulator 3BX0415 to simulate market dynamics, back-test and evaluate scenarios; and the case management component 3CX0140 to manage cases (from alerts generated from the analytical system 2XX0100), monitor timely and proper closure of identified issues, document audit trails in the audit trails database 3TX0121, discover lessons learned and feedback through the crowd computing component 2FX0107 for support of customized scrutiny and the fine-tuning of controls, and facilitate on-going improvement actions.

FIG. 2 illustrates a computing environment 0XA1300 according to some embodiments. The computing environment 0XA1300 includes components for the processing, compressing, sequencing of trade data, for reconstructing market events, for monitoring of trade behavior, and for identifying and investigating potential misconduct. The computing environment 0XA1300 comprises high-performance computing components, such as those typically found in a cluster-architecture. The components include, but are not limited to: a computer cluster and login node 0X01306; an administrative node and network switch 0XN1308; and one or more computing components 0XB0109, such as system health module, circuit breaker module, security and privacy module (including encryption servers and key management devices), and business continuity plan (BCP) controller module. The modules 0XB0109 include a processor 0XC1306, memory 0XD1301, power management 0XE0109, and load balancing task executor components 0XF0109. The computing environment 0XA1300 further includes various components that form a communication infrastructure 0XG1307 over which the components communicate, such as connection paths, I/O switch interfaces, and high bandwidth fabrics 0XH0109. The coordination of computer cluster 0XO1306 and communications are monitored via a process launch monitor 0XI0109 and are synchronized according to a synchronization clock 0XJ0109. The computing environment 0XA1300 further includes storage, such as a parallel file system 0XK1304, data storage 0XL1304, and a disaster recovery archive library 0XM1304. Other computing components, such as analytical cubes 0XQ1305 can be configured to communicate with the components in the computing environment 0XA1300. The computer system 0XA1300 resides behind a firewall 0XP1300 for secure communication with external devices 0XZ1311. A display 0XR1310 can further be coupled to the computing components 0XQ1305. In some embodiments, the computing environment 0XA1300 yields accelerated performance to delivery computing results, while requiring fewer computing resources (particularly, less GPU, CPU, memories, and power consumption, as well as substantial reduction in data storage) because the subject no longer requires processing and analyzing lots of images, has fewer complex calculations, and uses other advanced techniques, as described further below.

## DATA PROCESSOR

FIG. 3 illustrates a method for the processing and sequencing of real-time or historical trade data and/or processed trades, implemented by the data processor 1XX1101, according to some embodiments. Unlike conventional approaches that require exactitude of clock synchronization before the sequencing of data, or else it would significantly affect the shape of the plotted charts, which in turn causes much inaccuracy when measuring vectors graphically, some embodiments of the present invention is more tolerable of clock synchronization issues by placing more emphasis on the information hierarchically contained in the tree than on the tree structure, as described further below with reference at least to FIG. 9. At **block 1BA0201,** the data process 1XX1101 receives as input a stream of market data 5XA0131, and possibly also historical processed trade records or a current trade order stream 4AA0130 containing pricing information via protocols or gateways 5AX1307. Market data 5XA0131 may include, but is not limited to: order acknowledgements; order executions; order confirmations; open orders; market orders; basic market data or level one data such as bid price, bid size, ask price, ask size, last price, and last size; volume information; additional market data or level two data, such as market data that relates to order book or depth of the market including highest bid prices that traders are willing to pay to buy a security (e.g. five or ten prices depending on the market); bid sizes (e.g. the number of securities that are available at each of the highest bid prices); lowest ask prices that traders are willing to accept to sell a security; ask prices or the number of securities that are available at each of the lower ask prices; and next best bid; quotes; open interest (e.g. the number of buy market orders before the stock market opens); change in open interest; exchange for related position (EFRP) volume; the number of securities available for sale; the number of securities sought to be purchased at each offer and bid price; information regarding cancelled, non-published, non-completed and/or unexecuted orders; and calculated market data (e.g. imbalances and indices) and other price information. Market data 5XA0131 may also include aggregation of various elements of market data, such as an aggregated set of trading volume information. The market data 5XA0131 may be publicly available or non-publicly available. Market data 5XA0131 may be provided by or generated from a variety of sources. For example, sources of market data may include, but are not limited to: backend order management systems;

order fulfillment systems; exchanges; exchange matching engines (processing buy/sell orders and applying different rules of different exchanges); equity trading facilities such as alternative display facilities (ADFs); electronic communication networks (ECNs) for matching buy and sell orders, used, for example, to connect brokers to individual traders for processing orders; security information processors (SIPs) for carrying trade and order information under the consolidated tape association (CTA) or unlisted trading privilege (UTP) plan; and trade or transaction reporting services (e.g. TRACE). The recipients of market data 5XA0131 may include a variety of stakeholders, some of whom use the market data for various purposes upon receipt. These recipients may include, but are not limited to: institutional traders; brokerages; high frequency traders; retail investors; individual traders; exchanges (because they often consume the data of other exchanges); alternative trading systems (ATS or "dark pools"); and analysts, industry regulators, and market data providers or market data vendors. Market data may be sent shortly after it is generated, and as continuously as possible, subject to consolidation rules for consolidated streams. The sources of market data operate a data service implemented using "send rules" based on continuous sending of market data.

The data processor 1XX1101 can receive market data 5XA0131 from a plurality of different sources of marketplace data, both local and international sources, which are aggregated across asset classes, into a consolidated stream of order book states. The market data 5XA0131 may be provided in the form of raw data, communicated as network packets. In some embodiments, market data 5XA0131 may also be provided as formatted or unformatted data, such as media files or with formatting applied. The information in the market data 5XA0131 may further be provided in a variety of formats, such as, but not limited to, extended markup language (XML), Microsoft Excel spreadsheets (XLS), comma separated values (CSV), text files (TXT), extensible business reporting language (XBRL), etc. Similar to the market data 5XA0131, the house's historical processed trade records or current trade order stream 4AA0130 contain bid price, ask price, and volume information. Traders 4DX0505 (see FIG. 1) at a broker or dealer firm enter orders into an order management system (OMS) or execution management system (EMS) 4AX0211. The OMS/EMS system 4AX0211 records details of a trade that includes information, such as the time, price, order size, and a specification of whether it was a buy or sell order, and create the trade blotter accordingly. A trade blotter is a record of trades and the details of the trades made over a period of time. The purpose of a trade blotter is to carefully document the trades so that they can be reviewed and confirmed by the trader or the brokerage firm. The trade order stream 4AA0130 can also be a live feed running parallel to the OMS/EMS 4AX0211 that encompasses orders, cancellations, or trade amendments initiated from various trading desks 4DX0505, order feeds from algorithmic trading systems 4EX9999, or market makers' pricing/ quote system 4CX9999, locally and internationally, and across asset classes. A market maker is a firm that stands ready to buy and sell a particular stock on a regular and continuous basis at a publicly quoted price. You'll most often hear about market makers in the context of the Nasdaq or other "over the counter" (OTC) markets. Market makers that stand ready to buy and sell stocks listed on an exchange, such as the New York Stock Exchange, are called "third market makers." Many OTC stocks have more than one market maker.

**At block 1BB9999,** the sequencer 1BX1101 audits the incoming data quality to ensure that the input data stream includes essential data elements. If the sequencer 1BX1101 determines that incoming data fails quality requirements, then the data is rejected. Otherwise, the data is accepted **(block 1AA1153).** The data points in the incoming data is transformed to a musical notes or metrical trees representation, as described further below with reference to FIG. 6. In this exemplary embodiment, trade orders from the trade order stream 4AA0130 are modeled after the temporal and hierarchical structure of a music piece. Like a music piece, the trade order stream 4AA0130 includes activities (notes) and inactivity (rests). In music, notes placed on a staff convey the tone or pitch of the note, while the type of note (whole note, half note, quarter note, etc.) conveys the duration of the note. The musical staff includes two types: a treble clef (𝄞) (for the higher tones); and bass clef (𝄢) (for the lower tones). In this exemplary embodiment, trade orders are represented using musical notes on a staff. A note represents a trade order. The placement of the note (i.e., trade order) on the treble clef represents a buy order, while the placement of the note on the bass clef represents a sell order. The pitch of the note represents the price value and how long the trade order will remain open (e.g. notes ascending the staff represents a trading desk with a bullish view, and notes descending the staff represents a trading desk with a bearish view). In music, a piece is divided into measures (or "bars"), where the duration of the measure is defined by a meter or time signature. The total duration of the notes and rests within a measure equals the time signature. The tempo or beat of the music represents the average speed at which a trade order has been filled. The time signature of a measure represents a combination of the trade instrument type, venue, and market conditions of the trade orders. The rhythm of the musical representation may be explicitly encoded or implicitly represented under a pitch class representation method. A "pitch class" in music is a set of pitches that are whole octaves apart (e.g. C pitches in all octaves). In FIG. 6, staffs 1AX1150 and chart 1AX1151 illustrate example pitch classes and their tonal counterparts. This example illustrates a 12-tone equal temperament (i.e., every pair of adjacent pitches are separated by the same interval) chromatic scale on C, with one full octave ascending (noted only with sharps (#)). The trade order patterns, represented as music in the above described manner, is then converted into metrical trees by the data transform composer component 1BX1101. As an example of the pitch class representation, the melody representation 1AX1152 is converted to the metrical tree 1AX1153 as illustrated in FIG. 6. The level of a leaf in the tree 1AX1153 determines the duration of the note it represents. The left to right ordering of tree nodes depicts the time order of the notes in the melody.

Returning to FIG. 3, at **block 1BC1101,** the sequencer 1BX1101 captures the temporal and hierarchical structure and the metrical trees, as well as the metadata, according to trade sequence priorities (e.g. the typical price/time priority where orders are automatically sorted according to price and time-of-entry criteria, or size/time priority where orders are first ranked according to their order size then time). Capital market trade activities are dynamic with many streams of activities, similar to many voices simultaneously playing polyphonic music. To represent multiple streams of activities as polyphonic music, each "voice" or stream is inserted into the same tree in the manner described above, with the voices overlaid. Since buy orders are represented with the treble clef and sell orders are represented by the bass clef, there will typically be at least two layers in the representation, and the number of overlaid layers will increase as the trading volume increases.

FIG. 6 further illustrates an example polyphonic melody representation 1BX1154. The melody representation 1BX1154 may be converted as two monophonic trees 1BX1155 and 1BX1156, with a first tree 1BX1155 representing the top voice in the treble clef, and a second tree 1BX1156 representing the bottom voice in the bass clef. Node labels in trees 1BX1155 and 1BX1156 represent a pitch class per node. Alternatively, both voices are represented in the same tree 1BX1157. In the tree 1BX1157, each node contains all of the notes played at a given time, whose depth is conditioned by the note with the shortest duration. Node labels in tree 1BX1157 represent the set of pitch classes, instead of a single pitch class as with trees 1BX1155 and 1BX1156. A node representing only rests has an empty set.

Optionally, a bottom-up labels propagation may be implemented in order to remove irrelevant information (noise) that would make the classification or identification of main features of the melody (signals) more difficult. As illustrated in tree 1BX1158, node labels are propagated from the bottom-up based on the nodes' positions in the tree.

Returning to FIG. 3, at **block 1BD1158,** the sequencer component 1BX1101 either aggregates polyphonic data for consolidated view and display of data **(block 3AX1206),** where the data is parsed into tracks and tuned for aggregation **(block 1BE1158).** Alternatively, the polyphonic data is decomposed into monophonic tracks for viewing and display of data **(block 3AX1206)** at lower level dimensions or the smallest discrete trading unit, where the data is tuned for decomposition and parsed into tracks **(block 1BF1158).** As used herein, the terms 'discrete unit' or 'trading desk' refer to each discrete unit that is engaged in the coordinated implementation of a revenue-generation strategy and that participates in the execution of any covered trading activity. This includes: (a) each unit being a "trading desk", which may be the smallest unit of an organization used by an entity to structure and control its risk-taking activities and employees; (b) each organizational unit that is used to structure and control the aggregate risk-taking activities and employees of one or more trading units; (c) management or reporting divisions, group, sub-groups, or other intermediate units of organization used to manage one or more discrete trading units; (d) all trading operations collectively; (e) any other unit of organization specified by regulators with respect to a particular financial entity. Multiple discrete units can be aggregated together to form a 'dimension'.

FIG. 4 illustrates an example user interface or display window 3KS9908 for trade activities. In some embodiments, the user interface 3KS9908 is a part of the trade reconstruction component 3AX1206 and the order book replay simulator 3BX0415, used with the composer 1AX1101 and sequencer 1BX1101 to: compile trade activities in-house or in the markets as 'tracks'; aggregate or decompose 'tracks' to upper, lower, or both upper and lower 'dimensions'; and play, edit and save the records. 'Tracks' or 'MIDI tracks' in audio are for recording and playing back parts of sound or music, and each track has a corresponding channel in the audio mixer console. Similarly, financial products are distributed via different channels (e.g. the retirement and insurance channel, retail channel via discount brokerage firms like Charles Schwab, institutional channels (hedge funds, proprietary trading firms), etc.). From a trading operation perspective, there can be multiple trading desks. Some focus on trading foreign exchange (FX), interest rate, other focus on equity markets, fixed-income, or treasury and/or agency products. The trading desks may be organized into groups and sub-groups, such as by countries, or large-cap / thinly traded penny stock, or value vs growth strategy, or algorithm desks versus human traders, etc. Again, each 'track' refers to the smallest 'discrete trading unit' and as used herein, aggregated discrete units form a 'dimension'.

The example user interface 3KS9908 includes a consolidated view of all tracks 3KS9901, a replay at a lower dimension 3KS9902 (e.g. the 'Target' to replay is a ticker symbol), trade data decomposed to a 'discrete unit' 3KS9903 (e.g. trade data for a particular trading desk), a display of the synchronized time 3KS9906, a button 3KS9907 to toggle between an audio spectra display and a traditional chart display, and a control button 3KS9904 to dim other tracks to tune the effect on a particular track ('solo mode'), a change of the display of a target 3KS9905 to 'stereo' mode to show and compare buy/sell-side activities. The user interface 3KS9908 provides an easier way (e.g. by drag-and-drop) to meaningfully aggregate or decompose financial records by using reverb and other tuning or simulation methods to replicate depth-of-book, and assimilate and represent market dynamics. Complex calculations, such as of asset pricing or payoffs, and deciphering correlations between rollup and the underlying dimensions, are avoided, thus saving computing and processing resources.

Returning to FIG. 3, at **block 1DA9999,** the information security component 1DX9999 obfuscates any confidential or sensitive personally identifiable information. Trade strategies are often proprietary secrets, and one's own trade data or how brokerage firms are trading on behalf of clients ought to be properly protected because hackers may use stolen trade data to exploit the trade strategies in illicit front-running or other abusive acts. Therefore, trade data should be encrypted and obfuscated as appropriate. Obfuscation involves modifying the format of the data so that it is not readily readable or accessible. The transformation of trade data into a musical format, as described above, allows for a new obfuscation method to mask or hide the information.

FIG. 5 illustrates an example user interface or window panels 3KS9000 with various tabs of tuning controls for market dynamics assimilation and depth-of-book replication. In some embodiments, the user interface 3KS9000 is part of the trade reconstruction component 3AX1206 and the order book replay simulator 3BX0415, used with the data transform composer 1AX1101 and the sequencer 1BX1101 to assimilate market dynamics and replicate the depth-of-book and other market interactions by mixing and tuning different 'effects'. Conventional approaches rely on queries of internal databases to hopefully find outlier data points, or human "eyeball checking" of comparable graphs and charts, which leads to inaccurate and subjective results. In contrast, the trade reconstruction component 3AX1206 and the order book replay simulator 3BX0415 provide a highly configurable manner of assimilating different market environments and 'what-if' scenarios. As illustrated in FIG. 5, the user interface 3KS9000 includes a tune control panel, which includes a long/short and original/ effect tuning function 3KS9001 representing the relative strengths in bid/ask price and altering steepness of the price curve. Also, a default view 3KS9002 showing a national best bid and offer (NBBO), where a "double-click" of a mouse expands the display to include the BBO and details of a particular venue. The tune control panel 3KS9000 further includes tabs 3KS9001 showing other tuning effects, such as: treble, mid, bass representing activities of ATS (dark pools), systematic internalizers (SIs), and exchanges; fader representing relative activities or interactions between banking sector versus shadow banking; and obfuscate by boosting the loudness, simulate the relative activities or interactions between buy/sell-side by tuning the left/right balance. The user interface 3KS9000 further includes a simulator 3KL9999, which includes an instruments sampler 3KM9999 for tradable objects (e.g. equity, fixed income, commodity, etc.), triggers and genres of lessons, such as market manipulation and synthetically created trades, which are described further below with reference to FIGS. 9-11 and 17.

Using the user interface 3KS9000 illustrated in FIG. 5, the data is obfuscated by boosting the loudness to introduce background noise. In this exemplary embodiment, the data is not altered *per se,* instead, the 'loudness' distorts the dynamic range, linearity, frequency response in order to 'mask' data signals under the guise of noise frequencies. By making the data incompatible, depth-of-book and trade volume details would not be as transparent, while the best bid-and-offer pricing information remains unchanged. Other obfuscation techniques can also be used, including, but not limited to: 'introduction of random noise' (mashup newly generated noise data to existing good data) and 'separate and scramble' to make it more complicated to decipher details via over simplify the data (e.g. remove trading desk data field) or aggregate at a rollup level (e.g. market wide trade statistics rather than traceable to individual firm's trade strategy). To reverse the obfuscation, either the one who obfuscated the information shares the technique used or trial and error or reverse engineering methods are applied. Noises or randomness can also be introduced using the tuning function of the order book replay simulator 3BX0415 to resist pattern recognition techniques. Referring to FIG. 3, the information in the data can be separated using a decompose and parse feature and scrambling the signal using the simulator 3BX0415 to increase the difficulty of theft of the data. Alternatively, information can be aggregated via the aggregation function to simplify the contents; hence lower dimension information is hidden. Any combination of these obfuscation techniques can be used according to security protection requirements.

Returning to FIG. 3, at **block 1CA9999,** the compression component 1CX9999 compresses the data stream at a compression ratio that provides a compression rate greater than the data storage rate. Any variety of non-compressed or compressed file formats may be used, including, but not limited to: Pulse-Code Modulation (PCM); Waveform Audio (WAV), Audio Interchange File Format (AIFF); MPEG-1 Audio Layer 3 (MP3); Advanced Audio Coding (AAC); Free Lossless Audio Codec (FLAC); and Apple Lossless Audio Codec (ALAC). In some embodiments, a sending entity, such as an electronic exchange 5XX9999 (see FIG. 1), or an entity in communication with the exchange 5XX9999, leverages audio codecs in the compression and encryption.

**At block 1DB9999,** the information security component 1DX9999 encodes and encrypts the compressed data with time-locked audio codecs. Time lock encryption is a method to encrypt data such that it can only be decrypted after a certain deadline has passed. To promote the fair availability of market data 5XA0131 to market participants, time lock encryption prevents the protected data from being decrypted prematurely. In an exemplary embodiment, only a decryption key is required to access the data. An independent time-aware trusted third-party (TTP), such as NIST atomic clock, can be used. A sender of the encrypted data uses secret sharing to split the key between the data receiver and the TTP. In secret sharing, each member of a group is allocated a share of the key. The key can only be reconstructed when a sufficient number of shares are combined together. Individual shares are of no use on their own. The TTP also receives a representation of when the contents can be decrypted. For decryption, the receiver contacts the TTP, and the two parties use secure multi-party computation to generate the decryption key. In secure multi-party computation, the receiver and TTP jointly compute a function over their inputs (their share of the key) while keeping those inputs private. The multi-party computation can include an embedded current time value and the representation of when the contents are allowed to be decrypted. The benefits of the time lock encryption include: (a) the receiver will already have the encrypted contents and TTP doesn't have to store it; (b) the entirety of the decryption key is not released to any single entity, thus the theft from one entity does not compromise the key; and (c) the decryption time could be kept private even from the TTP, if needed. To avoid reuse of the decryption key, new keys and new time limits can be refreshed periodically. Also, eradication techniques (e.g. overwriting data that aims to completely destroy all electronic data residing on a digital media) can be used to remove data as soon as it has been transmitted or used.

**At block 1EA1304,** the outputs and storage management component 1EX1304 stores the encrypted and compressed data. In an exemplary embodiment, the data is stored in a designated top tier parallel file system 0XK1304 or in a tier 2 storage 0XL1304 with periodic separating and purging of archived data in the disaster recovery archive library 0XM1304 (see FIG. 2) according to data loss prevention and business continuity planning policies and available budget. Data loss prevention (DLP) refers to software products which allow administrators to use business rules to classify and protect confidential and critical information so that unauthorized end users cannot accidentally or maliciously share data. Business continuity planning is the process of creating systems of prevention and recovery to deal with potential threats. Optionally, the encrypted and compressed data can be streamed via some protocols or gateways to another system or a third party system **(block 1EB9999).**

**In block 1EC9999,** the external access format and other requirements for the encryption and compressed data are validated. Example formats include, but are not limited to: JSON; CVS; XBRL; or XML. In **block 1AB9999,** the data can be converted between music notes, metrical trees representation, traditional financial data format, or other desirable formats, if needed, before compression. The encrypted and compressed data can then be shared **(block 1ED9999).**

**In block 1EE9999,** when data is received from a third party, the data is decrypted with the audio codec by the information security component 1DX9999 (block 1DC9999) and decompressed by the compression component 1CX9999 **(block 1CB9999).**

**In block 1AC9999,** links of relevant reference data 5XB0131, outputs from voice and e-communications 5DA9999, news feeds 5DB9999, and other market events records are tagged when pulling event timelines during the trade reconstruction process **(block 3AX1206),** described further below with reference to FIG. 18. This data is tagged with the corresponding trade order stream 4AA0130 or market maker's pricing records 4CX9999 in the same time span, as appropriate.

ANALYTICAL SYSTEM

FIG. 7 illustrates a method for providing trade analytics, implemented by the analytical system 2XX100, according to some embodiments. The analytical system 2XX100 receives the outputs from the data processor 1XX1101. Alternatively, the analytical system 2XX100 receives the trade order stream 4AA0130 and reference data 5XB0131 directly from the OMS/EMS 4AX0211. Alternatively, the analytical system 2XX100 receives the quotes, orders, and trades information from the market maker's pricing/ quoting systems 4CX9999 that can be used as a substitute to the trade order stream 4AA0130 from the OMS/EMS 4AX0211. Other sources of input data can be used as a substitute to the trade order stream 4AA0130 include, but not be limited to data resided at: the SEC's Market Information Data Analytics System (MIDAS) 6XX9999 or the FINRA's "Order Audit Trail System" (OATS) or the Consolidated Audit Trail (CAT) system, self-regulatory organizations (SROs) or other trade platform, for example, the NYSE or NASDAQ Stock Exchange 5XX9999; and clearing house's systems, for example, DTCC (5CX9999).

**In block 2AX0101,** the basic control process 2AX0101 reviews the trade orders against a control list or predefined rules 2JA0113. In some embodiments, the control lists or predefined rules 2JA0113 are desk or trader specific. For example, the management policy 2JB0301 may prohibit certain order types, leverage, or derivatives depending on a trading desk's nature or the trade limits set for different traders. When a control violation is found, the basic control process 2AX0101 either rejects the trade order or the trade is flagged or quarantined and stored in the flag/quarantine database 2TX0122.

**In block 2BX0104,** for the trade orders which pass the basic control process, the detection engine 2BX0104 examines the trade orders to determine which series of trade orders or processed trades match patterns of irregularities, which may indicate potential market manipulation, or other onset signals stored in the lesson database 2TX0120. When trades match patterns of irregularities, the detection engine 2BX0104 flags the matters in flag/quarantine database 2TX0122 for management actions. In **block 2DX0105,** the detection engine 2BX0104 further applies more rigorous checks or filtering processes using the models and logics component 2DX0105 and advanced filtering criteria 2JC1207. Hence, the detection engine 2BX0104 applies a hybrid approach which combines the use of pre-configured detection algorithms and pattern recognition techniques to provide effective detection and identification of abnormal or undesirable trade activities (e.g. conflict of interest with clients).

FIG. 8 illustrates in more detail the analytics performed by the detection engine 2BX0104 according to some embodiments. At **block 2BA0801,** the detection engine 2BX0104 sets the initial score for the trade order at the beginning of the process implemented by the detection engine 2BX0104. The initial score is set according to the management plans 2JB0301, particular the risk appetite statement. The initial score can be customized for particular trading desks(s) and/or trading group(s) in order to reflect, for example, different risk exposures for different trading operations. The initial score can be adjusted by using the scrutinize-as-fit method, as described further below with reference to FIG. 17. The scrutinize-as-fit method puts things into context and ensures fit-for-purpose to tighten or relax the respective controls (e.g. order is initiated by a trader on the scrutinize traders list, or different market environments, nature of trades with clients or counterparties, characteristics of trade instruments, risks, liquidity conditions, and inventory portfolio consideration factors). Various parameters in the advanced filtering criteria 2JC1207 that the detection engine 2BX0104 uses to compare against may be configured via the customization process, described further below with reference to FIG. 17. In **block 2BE0206,** trade activities with scores meeting a configured threshold may be deemed to be normal or desirable (or reasonable in the context of Volcker compliance). Those trade activities with scores that fail to meet the configured threshold may be deemed trade irregularities or undesirable (or not meeting particular exemption criteria in the context of Volcker compliance) and be flagged or quarantined in the flag/quarantine database 2TX0122.

The detection engine 2BX0104 leverages computation results from models and logics 2DX0105 to objectively perform multiple rule-based processes in parallel. Through the review of factors, such as the frequency in trading certain products at certain venues, a score for a trading order being processed is skewed to reflect either a higher or lower likelihood of irregularities. When the trade is not a frequently traded instrument or venue for the trading desk 4DX0505, the models and logics component 2CX0105, described further below, are used to perform an ABC analysis **(block 2DD0805)** lookup to identify the value category for the trade. In **block 2BB0812,** the score is adjusted accordingly, considering any updated filtering criteria 2JC 1207, to reflect the higher likelihood of that the trade should be flagged or quarantined. An ABC analysis is an analysis of a range of items that have different levels of significance and should be handled or controlled differently. Most frequent trade instruments and venues are assigned the highest value, while the least trade instrument and venues are assigned the lowest value.

The detection engine 2BX0104 determines if market making or underwriting trade orders may cause the running inventory figure to exceed Reasonable Expected Near-Term Demand (RENTD) forecast or determines if risk mitigating hedges exceed hedge exposure limits or treasury trades exceed funding need for liquidity management inventory plan. The RENTD and the inventory plan are computed in order to set boundaries to consider if trade activities may be outside the ’reasonable’ range and/or market-time. RENTD and the inventory plan are further described below with reference to FIGS. 15 and 16. If the trade order would cause an excess over the limit or timing irregularity, then the detection engine 2BX0104 determines whether the trade activity is associated with a sudden market disruption (e.g. rapid market decline as calculated by some frameworks and algorithms). That excess during sudden market disruption may qualify for exemption under the Volcker Rule, if the trade meets certain risk mitigating hedge exemption requirements. If there has not been a sudden market disruption, then that particular trade may be considered as risky proprietary trade warrants appropriate skewing of the score **(block 2BB0812)** to be flagged or quarantined for management action Also, if a non-customer transaction short sells in anticipation of customer sell orders, this can cause unnecessary risk exposure to a bank. Hence, the score should be appropriately adjusted. If the trade does not exceed the limit, then the detection engine 2BX0104 determines whether the trade is beyond the life of the hedge (i.e., the duration of the hedge protection, described further below with reference to FIG. 16), which is yet another trigger of concern that the beyond life of hedge trade activity should be flagged or quarantine for management action.

In an exemplary embodiment, when the trade is not a customer transaction, and when the risks and market price moved per a pattern recognition process, the score is adjusted accordingly **(block 2BB0812)** based on the magnitude of the movement, where the larger the movement, the higher the likelihood that the trade order should be a concern for flag or quarantine. "Market price moved" refers to an act that creates a buy or sell-momentum effect in the market. Risk measurements per the framework and algorithms may be used to gauge a market situation, so that entities may change hedging instruments or quantity in order to adjust to the movements. Regardless of whether the trade is a customer transaction, when the trade order is likely to result in a disproportionally large daily trading volume with a non-customer, score is adjusted based on the magnitude of the disproportion **(block 2BB0812),** where the larger the disproportion, the higher the likelihood of a potential conflict with customer **(block 2BD0814).**

In another embodiment, through the review of factors, such as agency trade on behalf of customers while the trade size or trade timing being inconsistent, a score for a trading order being processed is skewed **(block 2BB0812),** where the larger the deviation, the higher it is suspicious that it may allegedly be front-running or other unethical behaviors if other symptoms are presented. These symptoms include, but not limited to, flipping the switch of a ’client’ account to a ’counterparty’ when a bank wants to escape fiduciary responsibility, then flipping the switch back to ’client’ in order to qualify for some exemptions in fending off regulatory scrutiny. Another symptom could be significant change in the market maker’s risk profile per computation by models and logics component 2DX0105 (i.e., the risk characteristics of the positions taken in the context of the type of market making) being beyond certain threshold **(block 2BC0811).** The score is adjusted based on magnitude of the change **(block 2BB0812).**

In another embodiment, when the trade is related to risk mitigating hedge, the detection engine 2BX0104 determines whether the trade is to buy Credit Default Swap (CDS), yet the house’s inventory position 4BA0132 (from portfolio management system (PMS) or investment book of records (IBOR) 4BX0132 indicates that the firm does not hold any related position (i.e. buying a CDS "naked", which is a high risk proprietary bet). The purpose of a CDS is for hedge protection. However, there would be nothing to protect against if the firm does not hold any related position. Thus, naked CDS would not be qualified for risk mitigating hedge exemption requirements under the Volcker Rule, or the risky nature of such trade activity warrants appropriate skewing of the score to generate an alert or escalate the matter **(block 2BB0812).**

In another embodiment, when the trade is related to underwriting, the detection engine **(block 2BG0706)** determines whether the trade is a bond swap, an option, a short sell, or whether the trade activity is beyond underwriting period of the respective underwriting lot, or the bank is a syndicate member of the respective underwriting lot. When the trade is a bond swap, the trade may only be qualified under market making exemption, but not satisfying Volcker's underwriting exemption requirements. When the trade order is an option and it is placed during a falling market, the trade may only be qualified under the risk mitigating hedge exemption instead of the Volcker's underwriting exemption. When the trade is a short sell, the detection engine 2BX0104 examines the underwriting log-book 2DB0421 (see FIG. 15) to determine if there may be a price restriction for the specific underwriting lot. If the short sell order is placed during a falling market, then the trade may only be qualified as a risk mitigating hedge exemption instead of the Volcker's underwriting exemption. If the trade order is beyond the underwriting period that remarks in the underwriting log-book 2DB0421, and if the bank is not a syndicate member of the respective underwriting lot but exceeded the non-member threshold as set by the relevant underwriting agreement, then the trade order fails to meet the parameters and warrants the skewing of the score (block 2BB0812), which may lead to the generation of an alert **(block 2BF0207)** or the escalation of the matter.

In another embodiment, 'toxicity or profit analyzers' may be implemented in conjunction with the scoring and filtering approach according to embodiments of the present invention to holistically track and respond to "toxic" order flow. A toxic order flow occurs in scenarios where trade would result in expected losses larger than a threshold or worsen a maximum draw-down rate or Sharpe ratio. The mechanism for onset detection, modeling of investment strategies, and the ability to generate timely and meaningful alerts can also be directed to trade analytics for monitoring market liquidity, best execution, or in pursuit of alpha opportunities. Embodiments of the detection engine 2BX0104 are not driven only by a set of pre-defined rules. Instead, the detection engine 2BX0104 uses a hybrid approach involving both a set of rules and a pattern recognition process to identify irregular trading activities.

FIG. 9 illustrates a pattern recognition process to compare trade order data or processed trades with complex event processing (CEP) lessons according to some embodiments. As trade patterns are converted to metrical trees by the data processor 1XX1101, the trade reconstruction component 3AX1206 of the review system 3XX0140 sets up corpora or CEP lessons, which are then stored in the lessons database 2TX0120, described further below with reference to FIG. 18. Market manipulation often involves a series of trades rather than a single trade. It involves deceptive price movements or the appearance of market force(s) on an instrument, from which profit is then unfairly realized from the trading of the instrument in a direction opposite to the created false or misleading market environment, which may be a prohibited act under U.S. or international securities regulations. Deceptive market manipulation typically comprises characteristics resembling a mix of, but not limited to, the following 'triggers':

(a) continuous alpha trade with large accumulated losses;
(b) unusual trade volume (rigged-up volume with precipitous price fall);
(c) inexplicable price run-ups, run-downs, or spike(s);
(d) suspicious mark price near time of market close;
(e) trade style inconsistency with quick reversal of direction;
(f) frequent buy and/or sell among the bank holding company (BHC) or affiliates;
(g) dealing with concentrated group of dealers;
(h) suspicious price speculation on or around an initial public offering (IPO) date;
(i) infrequent trade small-cap asset irregular activities (for small-cap securities where volumes are typically not high, a sudden large number of shares being traded may be a sign of market manipulation);
(j) cumulated outsized positions with size that is greater than a configured percentage of supply;
(k) dominated long position with series of heavy sell orders;
(l) off-load substantial poor performing asset to retail;
(m) retail rarely squared-off their pumped positions;
(n) erosion of market liquidity with raising of perceived liquidity;
(o) suspicious off-street financing corner with a squeeze;
(p) flooding of market with devalued collaterals;
(q) wave of margin calls in case of a sell-off;
(r) suspicious set price using long call with synthetic call;
(s) trading glitch with algorithm deploy error or control being off;
(t) risk, volatility and/or market prices moved with destabilization;
(u) tight two-way price quotes with wave of cancelled trades;
(v) substantial orders placed with quote amendments.

Any single 'trigger' listed above may not be a violation. However, the legitimacy of trade activities may be challenged if they occur in an order resembling a set of triggers in the lessons database 2BX1104, examples of which are set forth in Table 1, illustrated in FIG. 10.

As illustrated in FIG. 10, the segmentation and grouping of trade styles or patterns helps to expedite the comparison process in the comparative analysis, described below, by avoiding the need to compare against all of the lessons in the lessons database 2TX0120. The segmentation and grouping of trade styles or patterns can also be representing market change signals, suitable for use in reconfiguring, customizing, and updating the control lists 2JA0113 and advanced filtering criteria 2JC1201. Historical cases can be used as CEP lessons stored in the lessons database 2TX0120 to train the analytical system 2XX0100 through the crowd computing component (block 2FX0107), as described further below, to improve the ability of the detection engine 2BX0104 to recognize the symptoms of market manipulation, market change signal, synthetically created trades, or likelihood that the set of trade activities will result in a market price move of one or more financial assets against plans, or other signals.

Referring to FIG. 9, a matching process is performed, which compares the 'tracks' with the 'triggers' stored in the lesson database 2TX0120. When the pattern of the tracks resembles the pattern of a trigger **(block 2CM1105),** a trigger counter is updated **(block 2CN1104).** The score for the trade order is adjusted as a fit for this trigger. The trade order can then be scrutinized as needed by the crowd computing component 2FX0107. It is also determined whether the tracks resemble a set of triggers in the lessons database 2TX0120 **(block 2CO1104).** If so, it is determined whether the resemblance indicates a market change signal (described further below with reference to FIG. 19), or signifies a risk and market price moved for the earlier described detection engine process (FIG. 8), or recognizes as synthetically created trades (described further below with reference to FIG. 11).

A monophonic approach, a polyphonic approach, or a combination of monophonic and polyphonic approaches can be used to compare the trade data with the lessons database 2TX0120. Regarding the monophonic approach, the pattern recognition component 2CX0904 performs a trade normalization process **(block 2CA1101),** where the trade data is parsed into the lowest dimension and segregated. For example, any canceled trades and bid/ ask orders are parsed and segregated into 'tracks'. Then, the pitch and rhythm are encoded **(blocks 2CB1101 and 2CC1101)** using the tuning function of the data transform composer 1AX1101 and spotting any abnormal activities in 'solo' mode (see FIG. 4) **(block 2CE1104).** Simpler patterns, such as the payoff curves illustrated in FIG. 12, may be stripped from the 'tracks' and 'triggers' **(block 2CD1101).** The melodic matching process **(block 2CF1104)** compares the stripped out 'tracks' with 'triggers' stored in the lesson database 2TX0120. These 'triggers' can be simple payoff patterns of a long, short, covered call, protective put, butterfly, or strangle (see FIG. 12). Although, the monophonic approach is relatively slow compared to the polyphonic approach, the monophonic approach allows more details to be shown as proofs. Also, the 'triggers' help to form the basis upon which to determine if a combination of trades may become synthetically created trades, which are reviewed by the backstop assurance component 2EX0106.

Regarding the polyphonic approach, the pattern recognition component 2CX0904 captures the temporal and hierarchical structure when converting trade information into metrical trees using the data transform composer 1AX1101 **(block 2CH1101).** When the same genres cases are over a configured threshold **(block 2CI1101),** then the cases are denoted as 'systemic'. Machine-learning methods may be used in a similarity analysis **(block 2CJ1104)** to look for similarities between trade data and 'polyphonic' triggers or lessons in the lessons database 2TX0120. Such similarity analysis is quicker than conventional approaches, partly due to the smaller size of the metrical tree structure, thus saving processing and other computing resources. The accuracy of the similarity analysis depends partly on the quality of the polyphonic triggers or lessons. Thus, the training set can be configured to minimize over-fit or under-fit of the model. Alternatively, once the metrical trees are constructed **(block 1AA1153,** see FIG. 6), a comparison **(block 2CL1104)** can be performed using a propagation or partially labelled tree approach **(block 2CK1104)** that gives more emphasis to the information hierarchically contained in the tree than to the tree structure. In some embodiments, the partially labelled tree approach encompasses: (1) compute the average of chances of finding a labelled leaf in the descendant of a non-labelled inner node; (2) compute recursively until no match of trade activities/metrical tree similar to a trigger stored in the lesson database 2TX0120 is found within the corresponding time span (i.e. no match, hence passing the pattern recognition 2CX0904 checkpoint); (3) measure distances between the metrical tree with other metrical trees in the lessons stored in the lesson database 2TX0120 using a nearest neighbor rule and/or other classification protocol and/or algorithm; (4) organize lessons in lesson database into genres (with reference to the later described FIG. 17) and use a trigger counter 2CN1104 to identify a set of possible matching lessons; and using the distances, genres, and trigger counter, identify lessons that match the metrical tree. The trigger counter is used to identify a subset of the lessons which may match the metrical tree, where subsequent comparisons are performed only for the subset. For example, referring to Table 1, when the trigger 'j' is matched, the trigger counter for 'j' is updated. The matching process is able to determine from the updated trigger counter for 'j' that the lessons (i) and (vi) are possible matches while the others are not. The matching process then proceeds to only compare the subset of lessons and foregoing comparisons with the remaining lessons, thus optimizing the matching process. The score for the trade activity is adjusted with increasing weight with each match to a trigger in a lesson. For example, referring again to Table 1, the score is adjusted in response to a match to trigger 'b' in lesson (i). As the matching process subsequently matches trigger ’e’, ’n’, and ’o’, the score is adjusted in increasing weights, i.e., reflect increasing likelihood of trade irregularities, where the match of ’o’ has the most weight.

Continuing to refer to FIG. 9, nearest neighbor rule, or other classification process and/or classifier may be implemented using a classification algorithm and/or a process for creation of a classifier. As used in this disclosure, a classification algorithm defined as a processes whereby a computing device derives, from training data, a model known as a "classifier" for sorting inputs into categories or bins of data. Classification may be performed using, without limitation, linear classifiers such as without limitation logistic regression and/or naive Bayes classifiers, nearest neighbor classifiers such as k-nearest neighbors classifiers, support vector machines, least squares support vector machines, fisher’s linear discriminant, quadratic classifiers, decision trees, boosted trees, random forest classifiers, learning vector quantization, and/or neural network-based classifiers.

As a non-limiting example, and still referring to FIG. 9. A computing device may be configured to classify and/or generate a classifier using a K-nearest neighbors (KNN) algorithm. A "K-nearest neighbors algorithm" as used in this disclosure, includes a classification method that utilizes feature similarity to analyze how closely out-of-sample- features resemble training data to classify input data to one or more clusters and/or categories of features as represented in training data; this may be performed by representing both training data and input data in vector forms, and using one or more measures of vector similarity to identify classifications within training data, and to determine a classification of input data. K-nearest neighbors algorithm may include specifying a K-value, or a number directing the classifier to select the k most similar entries training data to a given sample, determining the most common classifier of the entries in the database, and classifying the known sample; this may be performed recursively and/or iteratively to generate a classifier that may be used to classify input data as further samples. For instance, an initial set of samples may be performed to cover an initial heuristic and/or "first guess" at an output and/or relationship, which may be seeded, without limitation, using expert input received according to any process as described herein. As a non-limiting example, an initial heuristic may include a ranking of associations between inputs and elements of training data. Heuristic may include selecting some number of highest-ranking associations and/or training data elements.

With continued reference to FIG. 9, generating k-nearest neighbors algorithms may operate by calculating a degree of proximity between two or more elements of data, and identify the k nearest training data elements to an element being analyzed according to such a distance and/or proximity calculation. For instance, a k-nearest neighbors algorithm may generate a first vector output containing a data entry cluster, generating a second vector output containing an input data, and calculate the distance between the first vector output and the second vector output using any suitable norm such as cosine similarity, Euclidean distance measurement, or the like. Each vector output may be represented, without limitation, as an n-tuple of values, where n is at least two values. Each value of n-tuple of values may represent a measurement or other quantitative value associated with a given category of data, or attribute, examples of which are provided in further detail below; a vector may be represented, without limitation, in n-dimensional space using an axis per category of value represented in n-tuple of values, such that a vector has a geometric direction characterizing the relative quantities of attributes in the n-tuple as compared to each other. Two vectors may be considered equivalent where their directions, and/or the relative quantities of values within each vector as compared to each other, are the same; thus, as a non-limiting example, a vector represented as [5, 10, 15] may be treated as equivalent, for purposes of this disclosure, as a vector represented as [1, 2, 3]. Vectors may be more similar where their directions are more similar, and more different where their directions are more divergent; however, vector similarity may alternatively or additionally be determined using averages of similarities between like attributes, or any other measure of similarity suitable for any n-tuple of values, or aggregation of numerical similarity measures for the purposes of loss functions as described in further detail below. Any vectors as described herein may be scaled, such that each vector represents each attribute along an equivalent scale of values. Each vector may be "normalized," or divided by a "length" attribute, such as a length attribute *l* as derived using a Pythagorean norm: $l = \sqrt{\sum_{i=0}^{n} a_i^2}$, where $a_i$ is attribute number *i* of the vector. Scaling and/or normalization may function to make vector comparison independent of absolute quantities of attributes, while preserving any dependency on similarity of attributes; this may, for instance, be advantageous where cases represented in training data are represented by different quantities of samples, which may result in proportionally equivalent vectors with divergent values.

A k-nearest neighbors algorithm and/or other proximity-based classification algorithm may additionally employ any other norm and/or distance calculation between any two data structures, such as without limitation distances computed as described herein between trees such as metrical trees.

The partially labelled tree comparison algorithm is based on the assumption that the match value between a labelled leaf and a non-labelled inner node should be the average of chances of finding that leaf in the descendants of that inner node. This comparing method omits the accounting of the insertion or deletion of nodes and just measures the chance of finding coincident labels, which gives more importance to the information hierarchically contained in the tree than to the tree structure. In this exemplary embodiment, when considering two trade sequences playing at different tempos, perfecting the clock synchronization is analogous to aligning and altering the two tracks to the same tempo before measuring the similarities. The two tracks can have the same tempo, for example, ’long, long, short, long, short, short’

structural connections or relative distances across levels in temporal hierarchical structure. Thus, a 'jiggling' process to insert or deletion of nodes in a fully labelled tree only matters to the 'tree structure' (i.e. 'shape' of the plotted charts that 'technical analysis' rely on, and in turn causes much inaccuracy when measuring vectors graphically - e.g. change in shape would affect the degree angle of a linear vector), but fails to measure or 'emphasize' the information 'hierarchically'. For 'partial labelled tree' approach, the match values are considered as distances and, following a nearest neighbor rule, the melody classification of trade activities closest to the query is taken as the corpus lessons stored in the lessons database 2TX0120. This leads to more accurate results and findings than conventional methods **(block 2CG0904),** with fewer errors and greater clock synchronization tolerance. The analysis is also performed faster than conventional methods, further saving processing and other computing resources.

In some embodiments, the choice between monophonic and polyphonic approaches is selected manually by users. In other embodiments, the selection is performed automatically, without user intervention, where the approach with the quickest paths and fewest errors for the use cases and the appropriate fit-for-purpose are selected, as described further below with reference to FIG. 17.

FIG. 11 illustrates a process implemented by the backstop assurance component 2EX0106 according to some embodiments. The backstop assurance component 2EX0106 performs gatekeeping trade activities that were undetected by the basic control component 2AX0101 and the detection engine 2BX0104, but which posts material risk or significant irregularities, such as synthetically created trades to bypass controls or potential implications resulting from lack of actions towards temporary tolerance or overdue cases.

The backstop assurance component 2EX0106 performs multiple processes to reexamine the trades in parallel. In a first process, using outputs from the models and logics component 2DX0105, the backstop assurance component 2EX0106 determines whether the aggregate risks match any predetermined criteria 2DA0906, i.e., results in "outside parameter" situation **(block 2EF0906).** If the aggregate risks do not match any of the predetermined criteria, then the backstop assurance component 2EX0106 determines there is no 'red-flag' based on this criteria. If the aggregate risks match any of the predetermined criteria, then the backstop assurance component 2EX0106 determines that the trade activity results in material exposure, a material conflict of interest, or poses a safety and soundness threat to the entity; and in response, flags the trade as having 'materiality' concern **(block 2EG0909).** In this exemplary embodiment, the predetermined criteria include, but are not limited to: whether an individual non-bank counterparty exposure exceed a threshold; whether a bank's CET1/Tier 1 capital is within a threshold; whether a related party's exposure is less than a single or connected party's transactions; whether related party transactions or write-off's exceed a threshold; and whether a net exposure on a particular asset class and/or instrument exceeds a threshold. Each of the thresholds listed here may be configured by a user and takes into account the exemption justification associated with the trade order. The models and logics component 2DX0105 keep running figures of these measurements, hence whenever the next trade activities may cause a potential outside parameters situation, the case is escalated **(block 2EE0212)** for management consideration of possible stop loss or other actions as appropriate. This feature of the invention addresses an industrywide problem that, despite an entity having risk models to identify large exposure, the entity does not have a robust control mechanism to stop losses in time to avoid the consequences of the exposure.

In a second process, the backstop assurance component 2EX0106 examines a series of trade activities in corresponding time span identified as synthetically created trades **(block 2EA0901)** by the pattern recognition process **(block 2CX0904)** (described above with reference to FIG. 9). FIG. 12 illustrates examples of the identification of synthetically created trades that resemble the payoffs of trade order data or processed trades that may otherwise be restricted by the basic control component 2AX0101, or has the effect of gaming the controls of the detection engine 2BX0104, according to some embodiments. A synthetically created trade is a financial instrument that is created artificially by simulating another instrument with the combined features of a collection of other assets. For example, as illustrated in chart A, if a trader is trying to produce a payoff of a short put for legitimate trade purpose, but put option is not available in the market, the trader may rightfully use financial engineering method to long the securities position and combines it with a corresponding short call option at particular strike price along the same time span to yield the same effect. There are other payoff replications, such as, but not limited to, the typical effect of a Put (chart B), a Call (chart C), a Short Call (chart D), a Butterfly (chart E), or a Strangle (chart F). Charts A through F illustrate the option model, Black-Scholes's Put-Call Parity formula, which is known in the art and is not further described here.

Returning to FIG. 11, when a trade order and the series of recent trade activities are determined to be a synthetically created trade **(block 2EA0901),** using the hybrid of monophonic and polyphonic partially labelled tree approach (described above with reference to FIGS. 6 and 9) to propagate the equivalent trade patterns. To determine whether the synthetically created trade is being abused, the backstop assurance component 2EX0106 sends the equivalent trade patterns to the basic control component 2AX0101 and the detection engine 2BX0104 for reexamination **(block 2EB0902),** which determine whether are any effects of gaming the basic control process's controls **(block 2EC0902).** If there are effects, then the trade order is flagged by the backstop assurance component **(block 2ED0910).**

For example, assume that a dealer wants a position that will profit if bond prices decline. The dealer simultaneously enters into a reverse repurchase and sale of collateral. The dealer borrows the bond and sells it, and uses the proceeds of the sale to lend into the reverse repurchase. At the end of the term of the repurchase, the dealer's loan is repaid with the agreed upon interest, and the dealer buys the bond back in the open market to deliver into the reverse repurchase agreement. It is due to example activities such as this that pattern recognition is needed on the trade order and a series of trade activities in corresponding time span. If the trade order and a series of trade activities in corresponding time span do not have the effect of a synthetic short sell, then the backstop assurance component 2EX0106 determines whether the trade activities have the effect of a total return swap or synthetic forward. A total return swap involves an agreement in which one party makes payments based on a set rate, while the other party makes payments based on the return of an underlying asset, which is usually an equity index, loans, or bonds. A synthetic forward involves a single investor simultaneously holding both a long call option and a short put option. The trade would be legitimate in the context of Volcker compliance if the trade activities do not have the effect of a total return swap or synthetic forward. If the trade activities do have the effect of a total return swap or synthetic forward, then the effect is input into the basic control component 2AX0101 and the detection engine 2BX0104, which returns a score adjusted to account for the 'effect'.

In a third process, when a temporary tolerance approved for the trade is received via a case management system 3CX0140, the trade is further subjected to follow-up monitoring (block **2EH0908),** and the aggregate risks are further evaluated to determine whether there continues to be a matter of concern which should be flagged (i.e. gaming of controls) **(blocks 2EC0902 and 2EC0910).** Temporary tolerance may be granted under certain conditions, such as when an excess has to be squared-off within a certain time frame. The follow-up monitoring verifies that the conditions are properly fulfilled by the set time frame. By closely monitoring and prioritizing the temporary tolerances or overdue un-closed cases in the case management system 3CX0140, the backstop assurance component 2EX0106 assures that the cumulative effects of such tolerances or overdue cases do not inadvertently lead to other problems that may cascade or lead to uncontrollable or difficult to control consequences, or prevents the abuse of the temporary tolerance process to bypass detections. The models and logics component 2DX0105 would periodically keep count and report back how much risk is hidden in temporary tolerance and overdue cases. In turn, trade irregularities are flagged and sent to the case management component 3CX0140 for further processing **(block 3CX0140).**

FIG. 13 illustrates a method of defining parameters and boundaries by the models and logics component 2DX0105 according to some embodiments. The models and logics component 2DX0105 begins with a set of assumptions. In this exemplary embodiment, the assumptions are obtained from the management plans 2JB0301. The assumptions may include, but not be limited to: markets; client/counterparties; instructions; risk; liquidity; and inventory (see FIG. 14). The models and logics component 2DX0105 receives the results and finding from the pattern recognition component 2CX0904. In **block 2DH0304,** the models and logics component 2DX0105 performs data mining of the data from the pattern recognition component 2CX0904, as well as from other sources, (such as market data 5XA0131, reference data 5XB0131, voice and e-communications surveillance systems 5DX9999, and news feeds 5DB9999, as well as cases in the Audit Trail database 3TX0121) to discover relevant business intelligence to strengthen the framework and algorithms (described below with reference to FIG. 14-16). The findings are used to substantiate any changes to the models and logics, which can be input into the crowd computing component 2FX0107 and lead to further adjustments. Using frameworks and algorithms **(block 2DI0304 and 2DJ9999),** the models and logics component 2DX0105 computes results for back-testing and what-if evaluations in conjunction with the simulator 2BX0415. Using the results of the evaluation, a set of parameters and boundaries, and anything that may be considered to be 'out-of-whack', are defined **(block 2DG0320),** described further below with reference to FIG. 19. The parameters and boundaries are used to define or update control lists or rules 2JA0113 used by the basic control component 2AX0101 and advanced filtering criteria 2JC1207 used by the detection engine 2BX0104 and the backstop assurance component 2EX0106. The detection engine 2BX0104 and the backstop assurance component 2EX0106 guide the analytical system 2XX0100 in the detection of irregularities, the monitoring of trade behavior, the identification and investigation of potential trade misconduct. Problematic trade orders detected are then sent to the case management component 3CX0140 and the order book replay simulator 3BX0415 for further processing. The detection engine 2BX0104 and backstop assurance component 2EX0106 draws upon the results from the models and logics component 2DX0105 in configuring the inventory plan **(block 2DC0701)** and RENTD **(block 2DB0703)** (with consideration of observed realities) and in computing the gross and aggregate risk exposure **(block 2DA0906)** (described above with reference to FIGS. 8 and 11). Results from the models and logics component 2DX0105 are further used by the detection engine in computing market maker risk profiles **(block 2DF0811),** to look for size/market timing inconsistencies **(block 2DE0810),** and to perform the ABC analysis 2DD0805 (described above with reference to FIG. 8). The simulator 3BX0415 also drawings upon the results of the models and logics component 2DX0105, including the set parameters and boundaries and the hypothetical profit and loss (P&L), Sharpe ratio, drawdown rate, etc. (described below with reference to FIG. 19), as computed by the models and logics component 2DX0105.

FIG. 14 illustrates exemplary frameworks and algorithms for use with the analytical system 2XX0100 according to some embodiments of the present invention. The frameworks and algorithms are used to gauge a plurality of factors, for example market micro-structure, clients/counterparties, instruments, risk, liquidity, capital, inventory, and other considerations to determine suitable parameters for the filtering criteria 2JC1207. The frameworks and algorithms define the what, when, and where there may be irregularities and sets appropriate parameters to guide the related controls. Financial institutions typically have many performance indicators, such as risk, liquidity, capital, etc. These measurements are prepared by different departments in silos. The framework illustrated in FIG. 14 creates an equivalent of a balanced scorecard, with appropriate focus drawn to the external markets, clients versus counterparties (e.g. in avoidance of conflicts), responsible use of financial instruments, maintain sufficient liquidity, and optimize risk, capital, and securities inventory.

FIG. 15 illustrates a method for determining the reasonably expected near-term demand (RENTD) according to some embodiments. The trading desk's inventory would have to be designed not to exceed, on an ongoing basis, the RENTD of customers based on such things as historical demand and consideration of market factors. In additional, RENTD is a requirement to gauge the reasonableness of market timing and order size for an entity's securities inventory to fulfill an entity's market making and underwriting plans. For market making activities, two approaches may be used. One approach is based on a recurring plan model, and the other approach is based on an event-driven model. For deterministic aspects of the capital market that follows historical projections, a recurring plan model may be used. For the recurring plan model approach, the Economic Order Quantity (EOQ) model is applied to financial instrument inventory to determine what "reasonable" inventory is for the RENTD. The EOQ may be viewed as the quantity that minimizes the total inventory holding costs and ordering costs, balancing the trade-off between them. Variables considered include the unit purchase price, order quantity, optimal order quantity, annual demand quantity, fixed cost per order, and annual holder cost per unit.

As illustrated in FIG. 15, in implementing the recurring plan model, the models and logics component 2DX0105 computes the acquisition costs **(block 2DB0401),** such as by using the transaction cost analyzer (TCA) that rates the difference between price of a particular transaction if it were executed at the prevailing price at the time the portfolio manager decided to buy or sell and the actual price of the transaction, including commissions, taxes and other costs (i.e., "slippage"), and the holding costs **(block 2DB0402)** that depends on the entities' cost burden (i.e., capital adequacy requirements for banks, or the cost of raising capital or debt in order to carry the inventory) in holding various risky assets. In this exemplary embodiment, total acquisition (setup) costs = cost of placing order (S) $*$ demand (R) / economic order size (Q). In market making, the acquisition costs can generally be referred to as the "expected transaction costs", $C(\overline{Q})$. Many factors influence the expected transaction costs, including, but not limited to, the competitiveness of market makers and trading platforms, tick size (minimum price movement of a trading instrument), market fragmentation, and costs of a bid-ask spread (amount by which the ask price exceeds the bid). In one exemplary embodiment, either a linear model or a square root model, such as the below, may be used to compute the acquisition costs:

$$C(\bar{Q}) = \bar{\sigma}\left[\bar{K}_o \cdot \bar{W}^{-\frac{1}{3}} + \bar{K}_I \cdot \bar{W}^{-\frac{1}{3}} \cdot \frac{|\bar{Q}|}{\bar{V}}\right] \qquad \text{Linear Model;}$$

and

$$C(\bar{Q}) = \bar{\sigma}\left[\bar{K}_o \cdot \bar{W}^{-\frac{1}{3}} + \bar{K}_I \cdot \bar{W}^{-\frac{1}{3}} \cdot \frac{|\bar{Q}|}{\bar{V}}^{1/2}\right] \qquad \text{Square Root Model,}$$

where

$\overline{K}_o$= bid-ask spread,
$\overline{K}_I$ = market impact cost,
V = trading volume,
W = trading activity,
$\bar{\sigma}$= daily returns volatility, and
$C(\overline{Q})$ = stock-specific cost of executing a bet of $\overline{Q}$ shares.

Alternatively, an entity can use another model determined to best represent the entity's trading desk's order taking, execution, record keeping, exchange costs, hedging costs, and any costs related to the facilitation process and maintenance of the equilibrium of the bid-ask spread. Any model used may be customized through the use of input parameters, including configurable parameters and assumptions applicable to specific trading desks.

In this exemplary embodiment, the holding cost is expressed as a fraction of the unit cost (C) in EOQ or the price of security in trading. When a market maker relies on self-financing, the cost of carrying inventory is the opportunity cost of capital (funding costs) with adjustments to reflect the market maker's risk aversion. Preferably, an additional risk premium (i.e., an expected return on a risky asset exceed the known return on a risk-free asset) be included to take into account any borrowing costs when the market maker's capital is debt-financed. As with computing acquisition costs, any model used may be customized through the use of input parameters, including configurable parameters and assumptions applicable to specific trading desks.

Once the acquisition costs and holding costs are computed, the trade-off between these two costs are optimized to determine a reasonable inventory **(block 2DB0403).** In this exemplary embodiment, the trade-off is optimized to minimize inventory costs. Chart A in FIG. 15 illustrates graphically the trade-off between the acquisition costs and the holding costs. The graph illustrates a holding costs curve 2DB0440, an acquisition (setup or ordering) curve 2DB0441, and a total cost curve 2DB0442. The bigger the inventory of the market maker, the higher will be the average cost of capital, and the wider will be the bid-ask spread. Hence, the holding costs curve 2DB0440 slopes upward in relation to re-order quantity. The acquisition costs curve 2DB0441 slopes downward in relation to re-order quantity due to the economy of scale. The EOQ (2DB0443) is set to optimize the trade-off between the holding and acquisition costs 2DB0440 - 2DB0441 to produce a minimum inventory cost. Here, the length of the recurring order cycle = periodic demand divided by EOQ, where the re-order point equals normal consumption during lead-time plus a safety buffer. The length of an "order cycle" refers to the time interval between successive reorder actions. When inventory levels reach a reorder point, then that is the time to replenish the inventory. Otherwise there would not be enough "lead time" to obtain the inventory before it runs out. A firm may want to include a "safety buffer" rather than letting the inventory run out. Stylized facts are empirical findings that have a consistency that are qualitatively accepted as true, within a margin of error configured based on observed realities. The stylized facts are incorporated into the EOQ computation **(block 2DB0404).** In **block 2DB0405,** the replenish cycle and reorder point are computed using the EOQ formula.

Some stochastic or event-driven aspects of the capital market do not follow a historical projection or statistical properties of the EOQ described above. For these activities, an event-driven approach may be used. For the event-driven model approach, this exemplary embodiment uses the Grossman Miller Model to determine what "reasonable" inventory is for the RENTD. With the Grossman Miller Model, market liquidity is modeled as being determined by the demand and supply of immediacy. Generally, the number of market makers adjusts to equate the supply and demand for immediacy. This determines the equilibrium level of liquidity in the market. Alternatively, the computation of RENTD forecast may use "market timing" prediction methods such as Conditional Expectations, Bayesian Estimation, Kalman Filtering, Martingales Measures, or any combination of these models, instead of or in conjunction with the Grossman Miller Model.

**In** applying the Grossman Miller Model, two categories of players in the market are assumed: fundamentalists (informed) and chartists (uninformed). Core market makers can be considered fundamentalists, while the other participants in the market may be considered chartists. An entity or trading desk determines the number of fundamentalists based on their own experience and competitive strengths in their specific markets. The Grossman Miller Model defines $M = \sigma^2_v \sigma^2_u / A$, where:

M = number of core market makers;
$\sigma^2_v$ = observed variance on asset payoff;
$\sigma^2_u$ = observed variance on noise traders' inventory; and
A = expected Sharpe ratio available from trading.

Market price moves quickly and frequently in microseconds, especially in the equity, derivatives, and commodity markets. History is often a poor predictor of the future in these markets. The computation of 2DB0703 RENTD/ inventory forecast gauges demand at a certain fair price and gauges when related trade activities may be considered "reasonable". Under the Volcker Rule, variations in price (i.e., delta market value) are a concern for inventory revenues. Through observation and scanning of the market data feed of orders in the market data 5XA0131, the frameworks and algorithms (see FIG. 14) can identify order imbalances (a situation resulting from an excess of buy or sell orders for a specific security on a trading exchange, making it impossible to match the buyers' and sellers' orders) and any liquidity shocks or constraints occurring in the market. In some cases, these indicators may be included in an entity's market data subscription. Based on a standard deviation of noise traders' inventory ($\sigma_u$), observed standard deviation on asset payoff ($\sigma_v$), and an expected Sharpe ratio (A) available from a trading desk, the computation of RENTD forecast uses the adverse selection model from Grossman Miller to compute the market depth as $\lambda = A(\sigma_v/\sigma_u)$ **(block 2DB0411).** Market depth refers to the size of an order needed to move the market price by a given amount. The Sharpe ratio is a measure for calculating risk-adjusted return and is the average return earned in excess of the risk-free rate per unit of volatility or total risk. Using the market depth ($\lambda$), other parameters may be extracted, including the observed mean ($\mu$) and variance ($\sigma^2_v$) on asset payoff, as well as the standard deviation of chartists' inventory ($\sigma_u$). The capital market consists of two types of players, fundamentalists and chartists, are then inputted **(block 2DB0412).** Fundamentalists trade with or against chartists regularly, and the demand quantity ($\bar{u}$) from the chartists players form a rational basis for what is "reasonable" and available to trade for the market makers.

The chartists inventory is then used to gauge the fair price for a reasonable timing **(block 2DB0413).** Market maker trading profits is a function of the expected squared Sharpe ratio available from trading, from which can be computed the "fair price": $P = (\sigma_v / M) * u - \mu$, or alternatively $P = (A \cdot \sigma_v \sigma_u) * \bar{u} - \mu$, where:

M = number of core market makers;
$\sigma^2_v$ = observed variance on asset payoff;
$\sigma^2_u$ = observed variance on noise traders' inventory;
A = expected Sharpe ratio available from trading;
$\mu$ = observed mean on asset payoff; and
$\overline{u}$ = noise traders buy quantity.

These optimal price points are then substituted as the reasonable market timing in order to gauge whether the market makers are faithfully facilitating or providing liquidity to the market with a reasonable bid-ask spread. By applying the Grossman and Miller Model and/or any alternate models to compare the prevailing mean and fair price multiplied by the expected market makers' price stabilizing effect, the computation of 2DB0703 RENTD forecast is able to forecast or determine what should be the "reasonable" market making inventory that the banking entity or trading desk should carry, as $\chi = M \cdot (\mu - P) / \sigma^2_v$ **(block 2DB0414).** Alternatively, interactions between players can be simulated via the simulator 3BX0415 to simulate player's' interactions, what-if scenarios, to tune and consider stylized facts, and to perform back-tests to ensure no 'out-of-whack' scenarios, described further below with reference to FIG. 19, to gauge reasonable time and trade range. The RENTD computed by the models and logics component 2DX0105 is then output by the analytical system 2XX0100 **(block 2DB0415)** to the review system 3XX0140 in order for users to review and back-test the results. Optionally, the models and logics component 2DX0105 for RENTD forecast may receive adjustments to the inventory level from users, based on, for example, the users' expectations and synchronization with their risk management policies 2JB0301. Each adjustment would be accompanied by documented justifications and rationale for the adjustments. Once the inventory level is finalized, the computation of RENTD forecast can be used to set boundaries of what constitute as 'reasonable' range of trade and market-time, and what may consider as 'out-of-whack', and the advanced filtering criteria 2JC1207 are updated accordingly, as described with reference to FIGS. 13, 17, and 19. For underwriting activities, the goal of computing the RENTD forecast is to capture and register key parameters pertaining to each underwriting activity. When an entity has an existing equity and/or debt capital market underwriting system, the processing of underwriting activities for the RENTD forecast may be optional or may be integrated into the existing system for registering new, or updating existing, equity or debt offerings, so that the related underwriting inventory figures and timings can be populated into the inventory plan to set parameters and boundaries. The models and logics component 2DX0105 processes underwriting activities according to underwriting mandates (a part of the 2JB0301 management plan). The underwriting mandate may include, but is not limited to, the following information: the type of instrument, the lot size or number of shares being sold and for which the banking entity is responsible for; any offering price restriction; duration of offers; and green-shoe options, where a special provision in an initial public offering (IPO) prospectus allows underwriters to sell investors more shares than originally planned by the issuer.

The models and logics component 2DX0105 for RENTD forecast captures and registers the key parameters in a log book for each underwriting job (block 2DB0421). Under the Volcker Rule, new underwriting lots must be registered for subsequent associating or linking of related trade activities with the specific lot. Any updates to a registered lot must be supported by proper justifications captured and documented in the audit trails database 3TX0121. The models and logics component 2DX0105 for RENTD forecast also inputs sales targets by underwriting lot for different sales teams **(block 2DB0422).** Example inputs of sales targets by underwriting lot may be for, but are not limited to: mutual fund distribution; retirement plan and endowments; high net-worth investors; and retail sales desks. In a process to determine the price of an asset in the marketplace, roadshows and solicitation campaigns may be run by the banking entity or sales desk to gauge the market interests in the investment. Institutional investors may provide their indications of interest (IOI) for their commitments to buy certain number of shares from the underwriting lots at various prices. From this information, the models and logics component 2DX0105 for RENTD forecast may anticipate how much will be bought by non-IOI customers from different sales channels. The models and logics component 2DX0105 for RENTD forecast then models the underwriting sales targets **(block 2DB0423)** and validates the sales target by using the simulator's 3BX0415 'What If' scenarios and back-testing functions. Success or completion of underwriting mandates is often a function of a variety of factors, including, but is not limited to: market sentiment; entity or sales teams' marketing power to lock in sizeable commitments; and effectiveness of solicitation campaigns. These factors are modeled into an algorithm for forecast and prediction by the models and logics component 2DX0105 for RENTD forecast. Historical data, consistent with correlations between sales efforts, market environment, and sales effectiveness, may be cross-referenced by the algorithm to validate the sales targets.

In this exemplary embodiment, the allotment committed by the banking entity to underwrite, either with or without a green-shoe option, is the forecast or expected shares to have in inventory. Adjustments may be made to customize for prevailing market sentiments, available competing products with similar risk and return attributes, and changes in customer appetites. The timing (i.e., underwriting job duration) and inventory figures are then populated into the securities inventory plan to set parameters and boundaries of what constitute as 'reasonable' range of trade and market time, and what may consider as 'out-of-whack', described further below with reference to FIG. 19.

FIG. 16 illustrates an exemplary method for creating the inventory plan to guide an entity's risk mitigating hedge and liquidity management activities, according to some embodiments. Risk mitigating hedge and liquidity management categories are not technically a "demand" from a customer in the context of RENTD for Volcker compliance, but rather are activities necessary for trading operations. However, these activities affect how much inventory the entity should have in order to manage its solvency and risk exposure and are thus considered in creating the inventory plan. The inventory plan is a document summarizing the RENTD outputs, assumptions, plan changes over time, and the related rationale for the changes. A banking entity can use the inventory plan to demonstrate to regulators the reasonableness in establishing the basis of the banking entity's inventory level. For the risk mitigating hedge category, the risk to hedge against is registered in this category **(block 2DC0310),** and the expected exposure and life of the hedge is entered **(block 2DC0311).** The models and logics component 2DX0105 for inventory plan forecast computes the expected delta hedge position for linear hedge positions **(block 2DC0313)** and performs a correlation analysis for non-linear hedges or receives pre-calculated input from internal or external sources **(block 2DC0312).** Based on the expected delta hedge position, the composition of the portfolio may be adjusted in order to remain compliant, if necessary **(block 2DC0316).** The models and logics component 2DX0105 for inventory plan forecast then models and validates the expected delta hedge position or the non-linear hedges using the simulator's 3BX0415 'What If' and back-testing functions.

For the liquidity management category, the models and logics component 2DX0105 for inventory plan forecast computes or receives the liquidity coverage ratio (LCR) and the statistical funding needs of the financial institution positions from internal or external sources **(block 2DC0314),** determines the contingent liquidity premia inherent in the products **(block 2DC0315),** and may make adjustment to the composition of the portfolio as needed to fulfill the liquidity management plan, if necessary **(block 2DC0316).** Any adjusted portfolio composition is fed back to the models and logics component 2DX0105 to amend the inventory plan or update the advanced filtering criteria 2JC1207, if necessary, via the crowd computing component 2FX0107, described further below with reference to FIG. 17.

Returning to FIG. 7, after the detection engine 2BX0104 examines the trade activities, the trade activities outside of the allowable parameters are filtered. The scoring method used is based on the magnitude of the resulting implications of related trades, or a system user may scrutinize particular traders, tradeable objects or targets, or a particular trade pattern or some triggers within a pattern by skewing the respective scores to tighten or loosen the filtering mechanism (see FIG. 8). The scoring process performed by the detection engine 2BX0104 is particularly useful for addressing trade orders that are in the "grey" areas (e.g. a particular trade or order may look legitimate and comply with desk specific controls 2JA0113, while a series of trades in combination may signify abnormal trading activities or where the aggregate risk levels are beyond a predefined threshold that are deemed 'material' requiring appropriate management attention). When a trade order or a series of trades is identified as failing to meet the threshold, the trader 4DX0505 associated with the trade order may be scrutinized in the later described crowd computing process 2FX0107 (FIG. 17). The identified trader and the reason why the trade activity is being flagged or quarantined are saved in the flag/quarantine database 2TX0122. Upon passing the check points in detection engine 2BX0104, the trade is subjected to further review by the backstop assurance component **(block 2EX0106).** When scores meet certain customizable threshold, alerts are generated or the trade order and/or processed trade records are tagged with escalate notifications and sent to the case management component 3CX0140. A copy of the trade orders and/or processed trade records that were tagged with alerts and escalate notifications are stored in the flag/quarantine database 2TX0122. Alternatively, the tagged trade orders are stored in the quarantine/flag database 2TX0122 in order to withhold the trade order from further processing in the OMS/EMS 4AX0211 per management discretions.

The analytical system 2XX0100 can be fine-tuned by the crowding computing component 2FX0107. The actions taken in the case management system 3CX0140 and re-learning false positive and false negative cases can be used to continually fine-tune the filtering algorithms in the analytical system 2XX0100.

FIG. 17 illustrates an exemplary method for crowd computing processing according to some embodiments. An exemplary embodiment leverages the collective intelligence from a network of users (i.e., the "crowd") to monitor market behavior, combat misconduct, learning exceptions, and to customize the various processes performed by the analytical system 2XX0100. The crowd computing component 2FX0107 continuously fine-tunes the filtering rules in an active learning loop. The crowd computing component 2FX0107 receives input from internal and external sources, including data and metadata from within the analytical system 2XX0100 (e.g. lessons database 2TX0120, audit and trails database 3TX0121, and flag/quarantine database 2TX0122, etc.) and from sources outside the analytical system 2XX0100. These inputs are processed and used to update the rules/ control lists 2JA0113 and advanced filtering criteria 2JC1207. The crowd computing component 2FX0107 further fine-tunes the filtering scores used by the detection engine 2BX0104 and the backstop assurance process 2EX0106. Users may customize how each pattern and new rule affects the scoring table by region or desk to determine how it can best be used within their organization. Users are also allowed to share with other crowd users any best practices 2FS1209 that they have discovered.

As a non-limiting example, a device and/or component of system, such as without limitation an order book simulator as described in further detail below, may receive a plurality of data representing sets of trade activities, according to any process and/or process step for receiving data representing sets of trade activities, as described above. Computing device and/or component may receive a plurality of user inputs from a plurality of user client devices; each user input of the plurality of user inputs may include an identification of a datum, representing a set of trade activities, of the plurality of data representing trade activities and an identification of a trade irregularity associated with the set of trade activities. Identified trade irregularity may include any trade irregularity as described in this disclosure.

Still referring to FIG. 17, computing device and/or component may convert the plurality of data representing sets of trade activities and the plurality of user inputs into training data. "Training data," as used in this disclosure, is data containing correlations that a machine-learning process such as a nearest-neighbors classifier or the like may use to model relationships between two or more categories of data elements. For instance, and without limitation, training data may include a plurality of data entries, each entry representing a set of data elements that were associated, recorded, received, and/or generated together; data elements may be correlated by shared existence in a given data entry, by proximity in a given data entry, or the like; as a non-limiting example, such data entries may be created according to identifications in user inputs as described above. Multiple data entries in training data may evince one or more trends in correlations between categories of data elements; for instance, and without limitation, a higher value of a first data element belonging to a first category of data element may tend to correlate to a higher value of a second data element belonging to a second category of data element, indicating a possible proportional or other mathematical relationship linking values belonging to the two categories. Multiple categories of data elements may be related in training data according to various correlations; correlations may indicate causative and/or predictive links between categories of data elements, which may be modeled as relationships such as mathematical relationships by machine-learning processes as described in further detail below. Training data may be formatted and/or organized by categories of data elements, for instance by associating data elements with one or more descriptors corresponding to categories of data elements. As a non-limiting example, training data may include data entered in standardized forms by persons or processes, such that entry of a given data element in a given field in a form may be mapped to one or more descriptors of categories. Elements in training data may be linked to descriptors of categories by tags, tokens, or other data elements; for instance, and without limitation, training data may be provided in fixed-length formats, formats linking positions of data to categories such as CSV formats and/or self-describing formats such as XML or XBRL, enabling processes or devices to detect categories of data. Alternatively or additionally, training data may include elements in musical piece and/or metrical tree forms, for instance including musical piece and/or metrical tree representations of trade activity data, as described above.

Alternatively or additionally, training data may include one or more elements that are not categorized; that is, training data may not be formatted or contain descriptors for some elements of data or does not have data schema (i.e. unstructured data). Machine-learning algorithms and/or other processes may sort training data according to one or more categorizations using, for instance, natural language processing algorithms, tokenization, detection of correlated values in raw data, NoSQL object oriented programing, schemaless or schema-agnostic multi-model database, and the like; categories may be generated using correlation and/or other processing algorithms. As a non-limiting example, in a corpus of text, phrases making up a number "n" of compound words, such as nouns modified by other nouns, may be identified according to a statistically significant prevalence of n-grams containing such words in a particular order; such an n-gram may be categorized as an element of language such as a "word" to be tracked similarly to single words, generating a new category as a result of statistical analysis. Similarly, in a data entry including some textual data, a person’s name may be identified by reference to a list, dictionary, or other compendium of terms, permitting ad-hoc categorization by machine-learning algorithms, and/or automated association of data in the data entry with descriptors or into a given format. The ability to categorize data entries automatedly may enable the same training data to be made applicable for two or more distinct machine-learning algorithms as described in this disclosure. As a non-limiting illustrative example, boosting, bootstrap aggregating, stacking are "meta-algorithms" machine learning approaches to combine several machine learning techniques into one predictive model in order to decrease bias via boosting, reduce variance via bootstrap aggregating, or improving the predictive force through stacking alias ensemble. Boosting is a two-step approach, where one first uses subsets of the original data to produce a series of average performing models and then "boost" their performance by combining them together using a particular function, which may include as a majority vote function in order to reduce model bias. Bootstrap Aggregating generates additional data for training from original dataset, for example using combinations with repetitions to produce multisets of the same cardinality/size as the original data, and by increasing the size of the training set, model variances are decreased. Stacking apply several models to the original data, so that, not only there is empirical formula for weight function, it introduced meta-level and use another model or approach to estimate the input together with outputs of every model to estimate the weights, in order to increase predictive force based on determining which model yield the best outcomes. Training data used by a computing device as described in this disclosure may correlate any input data as described in this disclosure to any output data as described in this disclosure. As a non-limiting illustrative example, training data may related inputs representing patterns and/or sets of trade activity to or with outputs representing trade irregularities.

In this exemplary embodiment, the case management system 3CX0140, and via the simulator 3BX0415, may determine whether flagged alerts are false alarms, affirm genuine cases, and seek management approval for any temporary tolerance, change, and improvement actions, including but not limited to changes to: trade order amendment;

cancelation; management plans 2JB0301; control list 2JA0113; and advanced filtering criteria 2JC1201. This may be performed, without limitation, as part of generation of training data. For instance, and without limitation, converting plurality of data representing sets of trade activities and the plurality of user inputs into training data may include classifying each user input and datum to a previously identified genre of trade activity. Classification may be performed, without limitation, using any classification algorithm and/or classifier as described in this disclosure. A computing device and/or case management system 3CX0140 may convert the plurality of data representing sets of trade activities and the plurality of user inputs into training data as a function of the classifying, for instance by creating one or more sets of training data pertaining to one or more genres, such that further classification, as described in further detail below, may be performed within each genre. Processes including classification to and/or identification of genres may be used as a filter to exclude some entries from inclusion in training data. As a non-limiting example, a computing device and/or case management system 3CX0140 may receive, from at least a user client device of the plurality of user client devices, an indication that a given pattern representing a set of trade activities is a false positive and/or false negative, match a set of trade activities to the pattern representing a false positive and/or false negative, and include the set of trade activities so indicated in the training data. As a further non-limiting example, processes of converting data to training data may include classifying a set of trade activities to a genre identifying false positives, defined as described above, and including the set of trade activities in the training data so indicated. Genres may represent new genres, which a computing device and/or component of system may identify, without limitation, by running a classification process to classify a given pattern to a genre, determining that the classifier does not classify a pattern being analyzed to an existing genre, and generating a new genre matching the pattern; generating may include, without limitation, receiving a user identification of a new genre and/or identifying a cluster of patterns distant, under a distant metric, from existing genres and proximate to the pattern under analysis. New genres may be modified using any process for modification of existing genres. Converting into training data may include matching a set of trade activity from the plurality of sets of trade activities to a stored pattern using a nearest-neighbors algorithm, where matching may be performed using any process described herein for matching any pattern of trade activity to any other pattern. Additional processes may include, without limitation, simulation, back-testing, and/or detection of relationships as described in further detail below in reference to FIG. 19. As a non-limiting example, computing device and/or a device or component of system 0XX0100 may be configured to detect hidden models and/or simulate at least a model trade using an element of training data, for instance as described in further detail in reference to FIG. 19. Patterns of trade activity may be identified and analyzed, and/or converted to training data, without limitation, as described below in reference to FIG. 19.

Alternatively or additionally, crowd computing component and/or other components of system may classify and/or match a pattern under analysis to a current genre. For instance, and as illustrated at **block 2FA1202,** the crowd computing component 2FX0107 may look up similar cases in the lesson database 2TX0120 and organize the cases into genres; for instance, classification to genres may include classification to database entries, and/or be used to generate queries to database entries. The genres may include, but are not limited to: affirmed cases; false positives; and false negatives of different types of trade patterns, such as potential market manipulation, market change signal, synthetically created trades, or likelihood that the set of trade activities will result in a market price move of one or more financial assets. The crowd computing component 2FX0107 may determine whether there are cases in the same genres **(block 2FB1208),** for instance using classification and/or database lookup as described above. As part of the active learning process, the analytical system 2XX0100 can associate trader identifiers with trade patterns identified through the pattern recognition processing (described above with reference to FIG. 9) of the detection engine 2BX0104. This may be accomplished, without limitation, by identifying training data associated with a particular trading desk, and generating a trade pattern classifier classifying sets of trading data to the particular trading desk. Analytical system 2XX0100 may use the patterns associated with a particular trading desk identifier to compare consistency in trading styles with patterns detected from other trading desks. This is helpful to determine whether the same genre cases indicate repeated offenses (i.e. systemic **block 2FC1203)** by a rogue trader regardless of which trading desk the trader may be "hopping" in the network. If so, then the score can be skewed so that the behavior associated with a pattern of trading activity is scrutinized and the advanced filtering criteria 2JC1207 are updated. Methods for detection of rogue trading as described above can confer further advantages when coupled with the rapid detection of patterns enabled by other factors described herein, such as without limitation matching to genres prior to matching to patterns, and/or representations and matching processes using metrical trees; such features may thwart attempts to bypass controls by rogue traders through, for example canceling a trade whenever being checked on and followed that by replacing the bet using a different instrument or a combination of synthetic trades or by hopping across trading desks to avoid detection.

Still referring to FIG. 17, a computing device and/or module as described in this disclosure may generate a classifier that receives representations of sets of trade activities as inputs and outputs associated trade irregularities as a function of the training data; this may be accomplished using any classification algorithm and/or classifier as described above, including without limitation any classification process and/or classifier as described above in reference to FIG. 9. As a non-limiting example, a classifier and/or classification algorithm may include a nearest-neighbors classifier and/or algorithm. A nearest-neighbors classifier and/or classification algorithm may be configured to compute distances between trees using match values as described above; for instance, a distance from a trigger tree of the plurality of trigger trees to the metrical tree may be computed as an average chance of finding a labeled leaf from the a tree in the training data in leaf nodes connected to unlabeled internal nodes of the metrical tree. Classification may include, without limitation, identifying matching trees having a minimal distances to a metrical tree. Classification algorithm and/or classifier may be generated using training data associated with a single genre; in an embodiment, current set of trade activity may, for instance, be classified and/or matched to a genre as described above, after which classification of current set of trading activity may proceed within the genre to identify a specific trade irregularity or the like. In a non-limiting example, where current pattern of trade activity is classified to a genre associated with false positives as described above, system 0XX0100 may indicate that current pattern of trade activity is likely not associated with a trade irregularity, and/or may decrement an irregularity and/or risk score as described above. Where classifier further includes a trade pattern classifier, trade pattern classifier may be used to identify a possible desk-hopping scenario, defined as a trader engaging in an identified pattern may have moved from one trading desk to another to attempt to elude detection; identification of a desk-hopping scenario may enable detection of such behavior without requiring identification of a trader and/or personal identifying information of the trader. As a non-limiting example, where current set of trade activities is associated with an identifier of a first trading desk, system 0XX0100 may classify the current set of trade activities to a pattern of trades occurring at a second trading desk, wherein the first trading desk is distinct from the second trading desk, and identify a possible desk-hopping scenario as a function of the classification.

Further referring to FIG. 17, above-described methods may be performed by a centralized hub and/or cluster of machines in close proximity, after which training data and/or models may be transmitted and/or distributed to localized machines, permitting such localized machines to utilize such models for rapid detection of trade irregularities. In an embodiment, this may enable slower, resource-intensive processes for aggregation and analysis of training data and/or transformation of training data into data structures such as without limitation musical piece representations, metrical trees, or the like to be performed by dedicated resources, while computing devices local to a given occurrence of a trade activity pattern may be able to analyze that training pattern locally using less memory-intensive and/or computationally intensive comparisons of the training pattern to models, data structures, and/or training data as described above.

In an embodiment, and continuing to view FIG. 17, classifying and/or matching current set of trade activities to a genre, followed by classification within the genre, may advantageously make identification of trade irregularities faster and more efficient; as the categorization to a genre may require fewer points of comparison and impose a lesser standard of exactitude as compared to the more fine-tuned matching and/or classification to particular patterns of trade irregularity, initially placing a current set of trade activities to a genre and subsequent classification using training data within the genre and/or a genre-specific classifier may result in far fewer computational cycles required for classification, as contrasted with comparison to the entire lesson database. This advantage may be further added to by use of additional data structures and processes as described in this disclosure, including without limitation metrical tree, kernel, nearest neighbor, and/or random forest/ decision tree methods. Furthermore, combination of genre-matching and/or classification with other methods of classification described herein may yield synergistic results, as too much data may be a weakness for conventional K-nearest neighbor algorithms owing to difficulty in managing exponential growths in numbers of decision points. By setting up corpora and group them into genres, system 0XX0100 is able to focus on matching only those relevant sub-sets instead of the entire populations.

Upon accumulating sufficient experience with same genre cases (block 2FB1208), the crowd computing component 2FX0107 prompts the users for changes in the controls or filters. The amount of accumulated experience considered to be "sufficient" depends upon the genre and is configurable. Users can mine data, or through an automated mining or crawling method across the analytical system 2XX0100 and the review systems 3XX0140, to substantiate any change, and determine if risk associated with the change is acceptable (block 2FD1211). The amount of risk considered acceptable is configurable and can be based on business and strategic level considerations. By mining the data of how approvers reviewed various cases in the case management system 3CX0140 and mining approval justifications stored in the audit trail database3TX0121, field experience of the approvers are aggregated to become insights that are continuously fed back into the analytical system 2XX0100. In this manner, the analytical system 2XX0100 learns and re-learns from any false positive or negative cases.

If risk is not acceptable **(block 2FD1211),** top management may decide if management plans 2JB0301 need appropriate revision. Also, management has the discretion to freezing of a trader's system access **(block 2FF9999)** or particular algorithmic trading may be halted ('circuit-break', **block 2FG9999)** as needed for any urgent and significant risk events that not acceptable according to management plans/ policies. If risk is acceptable on a strategic level, but not acceptable for other reasons (e.g. different control rules for different countries/ regions) **(block 2FH1212),** then customized changes are implemented. Optionally, the acceptable risk level may be overridden, and if so, **(block 2FI1213),** then the parameters of the models and logics component 2DX0105 are adjusted. Through the crowd computing component 2FX0107, data results may be mined via the models and logics component 2DX0105 to substantiate the changes. When setting the initial score in 2BX0104 detection engine (FIG. 8), a control officer may custom skewing the score of any trades submitted by a particular trader or trading algorithm, and/or discourage the use of certain financial instruments / trade venues for a period of time by skewing the ABC analysis, and/or skewing the corresponding score for a particular 'trigger'/ 'pattern' (FIG. 10) in order to scrutinize related trade activities **(block 2FJ0802)** . The approval grid and empowerment level for the case management system 3CX0140 (described further below) can be revised **(blocks 2FK1211 and 2FL1211).** The approval grid used with the case management component 3CX0140 can be revised. For example, if the crowd computing component 2FX0107 determines that 'flags' of a certain nature are being approved repeatedly, appropriate powers may be given to junior approvers, relieving top management involvement in operating details. Similarly, when junior approvers make repeated mistakes in approving cases, then the empowerment level may be adjusted back to the senior management. Any of the controls within the detection engine 2BX0104 and the backstop assurance component 2EX0106 can be turned on or off **(blocks 2FM1211 and 2FN1211).** Optionally, new controls can be defined and added. The control lists 2JA0113 or the advanced filtering criteria 2JC1207 can be updated as per approved actions in 3CX0140 case management system **(block 2FO1211).** Other customized changes can also be implemented to train the system 0XX0100. In addition to using knowledge from domain experts, the crowd computing component 2FX0107 trains the system 0XX0100 through the simulation of 'what if' scenarios and record lessons by the simulator 3BX0415. Users may record a lesson pertaining to changes and the corresponding impacts of the changes in the lessons database 2TX0120 **(block 2FP1206).** Using machine learning - reinforcement model, the lessons in the lessons database 2TX0120 and accumulated cases are used to train the system 0XX0100 and improve the accuracy of the analytical system 2XX0100 **(block 2FQ1206).** The training of the computer may involve comparing the training set (new lesson) with the untrained nearest-neighbor rule with reference to the earlier described FIG. 9 using the simulator 3BX0415. If the new lesson does not reduce the amount of false positives or negatives, then the lesson may consider as useless. Otherwise, the new lesson is useful and fit for improving the accuracy of onset detection.

Every entity may have their own unique experience or specialties on particular markets, instruments, and/or counterparties to trade with and/or against. The definition of "sufficient" experience may vary across entities. Factors may include, but are not limited to, risk management experience, domain knowledge about supply/demand shift, and understanding of behavior differences by geographic regions. If the entity does not have sufficient experience, then the crowd computing component 2FX0107 displays rules or best practices recommended by the crowd through a notify and share function **(block 2**FR1209**).** The crowd computing component 2FX0107 thus provides users the option to adopt, adjust, or not adopt a certain system logic set up by other entities within the network. User may compare the recommended rules or best practices with against their house's cases **(block 2FT1210).** By using the back-testing function via the simulator 3BX0415, described further below with reference to FIG. 19, the back-test results help to determine if the crowd's best practices may be suitable for use 'as-is' **(block 2FU1209)** or appropriate adjustments or customization (via **blocks 2FH1212, 2FJ0802, 2FL1211, 2FN1211, and 2FO1211)** may be needed in order to make the case applicable. The crowd's best practices may be evaluated to determine whether the risk is acceptable at a strategic level **(block 2FD1211).** If not, then the management plans 2JB0301 may be revised accordingly **(block 2FE1211).**

Customization of the criteria or feedback of analytical components' effectiveness in this manner may help financial institutions with large number of local trading desks or multiple algorithmic trading across geographic locations and/or asset classes to work in harmony with headquarter and across-teams. Instead of headquarter guiding every moves of order routing and trade execution, which may create a large amount of unnecessary back-and-forth that often delays decision-making and results in missing the best market-timing for trading or risk mitigating hedge opportunities in a dynamic electronic trading environment, embodiments described in this disclosure may enable appropriate discretion to be given to local trading desks (4DX0505) and/or algorithmic trading (4EX9999), whilst permitting headquarters (4XX1311) to coordinate an overall macro-strategy and analyze a longer-term direction in order to keep pace with markets.

Further, customization of the criteria or feedback of analytical components' effectiveness in this manner may help to reduce false positives and false negatives. Over time, a high level of customization can be achieved to more accurately discern between "reasonable" versus "out-of-whack" conditions. The crowd computing processing component 2FX0107 may also discover cases that denote a possible stress scenario, financial stability threat, or possible crisis situations where the entity may be alerted for possible reforecasting of the RENTD 2DB0703 or for revisiting the inventory plan 2DC0701 to consider possible hedging protections.

Optionally, a "Stress RENTD" trigger may be invoked via the crowd computing component 2FX0107 and the later described simulator 3BX0415, where the inputs and parameters in the RENTD calculation is analyzed against actual market conditions to assess market dynamics in real-time (e.g. macro view of toxic asset distribution, who is standing-by to provide liquidity, and who is under squeezed during market crash). This allows for more timely intervention among the industry and regulators. In one exemplary embodiment, through the crowd computing component 2FX0107, stakeholders can collectively determine the appropriate time to declare a "Stress RENTD" situation, which is a situation in which timely injection of liquidity into the market is essential to prevent a taxpayer bailout of the financial sector.

REVIEW SYSTEMS

The review systems 3XX0140 include three components: the trade reconstruction component 3AX1206; the order book replay simulator 3BX0415; and the case management component 3CX0140 (see FIG. 1). FIG. 21 illustrates a method implemented by the case management component 3CX0140 according to some embodiments. The case management component 3CX0140 receives and displays a queue of alerts **(block 3CA0141),** stored in the flag/quarantine database 2TX0122, from the analytical system 2XX0100. At **block 3CM1210,** the case management component 3CX0140 also displays the alerts as part of a management dashboard. Through the management dashboard, users can view key performance indicators, for example number of open cases, number of prioritize cases that required escalated attention because of materiality or systemic issues, and turnaround time in closing cases, which 'target' or 'trader' may be currently under scrutiny. At **block 3CN1208,** through the management dashboard, a user can further review closed flags or overdue cases (i.e. timeliness in closing case versus standard turnaround time is monitored and tracked by the case management component 3CX0140) and document the results in the management dashboard to ensure that previously closed cases are resolved and addressed. The user may further re-open a closed 'flag', which places the closed case back on the alert queue where the case is reinvestigated **(block 3CB0140).** The user may further follow up a long outstanding (O/S) unclosed case by escalating, hence any material, systemic, or long outstanding cases would be prioritized for review **(block 3CO0140)**. In the exemplary embodiment, in the review of closed or overdue cases, compliance and control officers may obtain a list of trader identifiers from the management dashboard with the most repeated offenses or flagged or quarantined transactions for proper follow-up and investigation or individual performance review. Particular activities of traders with certain identifiers can be scrutinized and their score skewed accordingly by the crowd computing component 2FX0107. In investigating open flags **(block 3CB0140),** the case management component 3CX0140 also identifies false negative cases (i.e. 'undetected surprises'/ type II error) through the correlation process via the simulator 3BX0415. By identifying and processing these false negative cases, the case management component 3CX0140 minimizing the reoccurrence of false negatives by sharing the false negatives via crowd computing component 2FX0207 and having the false negative cases reflected in the RENTD/ inventory plan.

In investigating cases on the alert queue **(block 3CB0140),** the review system 3XX0140 reconstructs the trade event and replays the order book. FIG. 18 illustrates a method for reconstructing a trade event, implemented by the trade reconstruction component 3AX1206 of the review system 3XX0140, according to some embodiments. The trade reconstruction component 3AX1206 receives data from the data processor 1XX1101 over communication channel 5BX1307. The trade reconstruction component 3AX1206 allows users to select a time span or a previous recorded lesson in the lessons database 2TX0120 **(block 3AB9999)** and chooses one or more target trading records from the lessons database 2TX0120 to play **(block 3AC9999)** and retrieves these trading records **(block 3AD9999).** A target can be, but is not limited to, the followings: a particular stock ticker symbol; Committee on Uniform Security Identification Procedures (CUSIP) of a debt instrument; a hybrid instrument (e.g. Trust Preferred Securities (TruPS); any tradeable object; an entire asset class; trade transacted in particular geographic regions; the smallest discrete unit of a particular trader or trading desk (i.e. a single 'track' in musical terms); or a mix-and-match of 'dimensions'.

FIG. 20 illustrates an example user interface 3KS1206 implemented by the trade reconstruction component 3AX1206. Referring to both FIGS. 18 and 20, the trade reconstruction component 3AX1206 displays the retrieved records in a first window 3KF9991 **(block 3AF9999)** that allow users to decompose, drill down, or aggregate (roll-up) 'tracks' **(block 3AG9999)** and display the lower and upper dimensions **(block 3AH9999).** The user interface 3KS1206 allows users to magnify the activities via zoom-in and zoom-out or other similar functions **(block 3AI9999),** magnify the activities (e.g. view the activities in microsecond, or millisecond, or a tick-by-tick playback) or view activities over a longer period of time **(block 3AJ9999).** The trade reconstruction component 3AX1206 displays on a second window 3KE9992 a blotter for particular trade (i.e., a record of the particular trade and the details of the trade made over a period of time) and key statistics for the time span, such as high, low, and volume weighted average price (VWAP) **(block 3AE9999),** that would be updated along with changes in the first window 3KF9991 **(block 3AK9999).** The trade reconstruction component 3AX1206 displays on a third window 3KM9993 the 'depth-of-book' information (3KM9993) about bids and offers inferior to the best prices that exist nationally (NBBO) **(blocks 3AL9999 and 3AM9999).** Users may drill down to see a particular lit trading venue, for example a stock exchange, best bid and offer, at a particular point in time **(blocks 3AN9999 and 3AO9999).** A user may pull the event timeline consisting of information from market event records **(block 3AP9999).** Market event records may include: outputs from voice or e-communications surveillance systems and news feeds 5DB9999 and audit trails in the audit trails database 3TX0121 that correspond to the select time span of trade activities; tagging coded-links of reference data 5XB0131 and other market event records with the corresponding order books or pricing records in, for example, the prefix of music formatted files or data streams, as appropriate. The trade reconstruction component 3AX1206 displays the relevant timeline's event log files in a forth window 3KQ9994 **(block 3AQ9999),** which operates like a 'file explorer', and overlays a fifth display 3KR9995 on the first display 3XF9991 **(block 3AR9999),** showing arrows and log references. A user can mouse-over or click to view a particular event record. The user interface 3KS1206 provides control buttons 3KS9996 for various functions **(block 3AS1206),** which may include but not be limited to: play; stop; pause; rewind to beginning to replay a trade sequence; cut; or edit. The reconstructed trade event can be recorded as a lesson in the lessons database 2TX0120 to be referenced by the analytical system 2XX0100 or the case management component 3CX0140 may set up a corpora, record and/or turn off or on CEP lessons 3CJ1102 with reference to FIG. 21, or export file to a third party. The controls can further include a toggle to change the first display 3KF9991 to show either audio spectrum or traditional chart view. Trade order details (audit trail) are shown in 3KQ9997. These functions allow a user to interact with the order book replay simulator 3BX0415, the case management component 3CX0140, and the crowd computing component 2FX0107.

FIG. 19 illustrates a method for replaying the order book, implemented by the order book replay simulator 3BX0415, according to some embodiments. The simulator 3BX0415 replays the order book, assimilates the market dynamics, observes possible market interactions to conduct back-testing and evaluates different 'what if' scenarios. The simulator 3BX0415 assimilates market dynamics **(block 3BD9999)** by reconstructing the house trades 3AX01206, as described above with reference to FIG. 18, and combining the reconstruction with historical or hypothetical trade records in the market. The simulator 3BX0415 uses a lesson from the lessons database 2TX0120 **(block 3BA9999),** or retrieves trade records at a particular time span, as basis to simulate the market or stack up tracks using the data processor's 1XX1101 aggregation (propagation) function to replicate particular interactions between market participants and introduce background tracks to represent the hypothetical market **(block 3BB9999).** Considering possible market change signals via the pattern recognition component 2CX0904, the simulator 3BX0415 may modify the simulated market **(block 3BC9999)** via the data processor 1XX1101 tuning and composing techniques available in the tune control panel 3KS9000 (FIG. 5). Example tuning includes, but is not limited to: 'reverb' representing the market depth; 'treble/ mid/ bass' representing activities of 'dark pools' (i.e., trading venues that give investors the opportunity to place orders and make trades without publicly revealing their intentions during the search for a buyer or seller); systematic internalizers (i.e., an investment firm which, on an organized, frequent systematic and substantial basis, deals on its own account when executing client orders outside of trading venues); and lit venues (i.e., opposite of dark pools, where venues display the various bids and offers in different stocks); 'fader' representing relative activities or interaction between banking sector and shadow banking; and boosting loudness or introduce random noise to obfuscate a lesson stored in the lesson database 2TX0120. The crowd computing component 2FX0107 may customize the control filters applying in the simulated environment. In turn, the house trades, the background tracks representing the simulated market, the framework (e.g. maker-taker model, price/ time/ size priorities) from models and logics 2DX0105, and applicable filtering controls would be assimilated for the evaluation of market dynamics (block **3BD9999).**

The simulator 3BX0415 validates the assimilated model for any 'out-of-whack' situations **(block 3BE0415).** Example out-of-whack situations include, but are not limited to, pricing contradictions between house trades and the model, or unrealistic volatility in a given market (in other words, "unreasonable", opposite and far-off from the range of the previously set RENTD. If no out-of-whack situations are found, then back-testing is performed **(block 3BF0415).** If out-of-whack situations are found, then the model is re-customized again, as described above and with reference to FIG. 17, before performing back-testing.

At block 3BF0415, back-testing refers to the process of applying a trading strategy (e.g. a series of house's trades) or analytical method to historical data or simulated environment to see how accurately the strategy or method would have predicted actual results and/or to observe how the strategy would have interact with other market participants **(block 3BG1205).** Back-testing simulation is also suitable for evaluating the performance of a trading algorithm 4EX9999. The simulator 2BX0415, based on back-testing results and through the models and logics component 2DX0105, computes the hypothetical profit and loss (P&L), Sharpe ratio, drawdown rate, etc. to evaluate the trade strategy. The simulator 2BX0415 can also be informed by models and logics component 2DX0105 to apply baseline or various stress scenarios and simulate multiple "What if" scenarios (3BJ9999). These "What if" scenarios are helpful to evaluate what trading algorithms are best suit for different market conditions, so there will be timely switching of trade strategies when the pattern recognition component 2CX0904 picks up or detect a desired market change signal.

The simulator 3BX0415 bases on back-testing results to accesses the correlation against outputs from voice and e-communication surveillance system 5DA9999 and a variety of news feeds 5DB9999. The observed interactions from back-testing results can include, but are not limited to: house trades causing a bias in market mechanism (e.g. tricking the market into believing what false, or violating the efficient market hypothesis); and having or not having an effect on altering worth of a tradeable object (moved the market price). If the trade event does not cause a bias in the market mechanism **(block 3BH9999),** then the trade event is flagged as a false positive. If so, then the simulator 3BX0415 determines whether the trade event has the effect of altering the worth of the target **(block 3BI9999).** If not, then the trade event is flagged as a false positive. Otherwise, the simulator affirms the case being rightfully flag/quarantine by the 2XX0100 analytical system or it may also be flagged as a false negative if the trade event wasn't previously flagged by the 2XX0100 analytical system. Cases that are affirmed, false positives, and false negatives are reported to the case management component 3CX0140.

Again, the simulator 3BX0415 may continue the back-testing with other 'What If' scenarios **(block 3BJ9999)** by re-tweaking the simulated 'model' and customizing the used cases, lessons, or genres. The 'What If' choices are evaluated **(block 3BK9999)** to yield optimal risk-and-reward results for a trading algorithm. Alternatively, the 'What If' choices are used to rule out or eliminate any irrational investing or 'out-of-whack' situations, hence supporting the affirmation of flagged trade activities as being misconduct and/or unreasonable. In this case, a correlation is established for a potential market abuse or manipulation), and the trade case is recorded in the lessons database 2TX0120 or exported to a third party for further action via the case management component 3CX0140 (in particular, the block 3CJ1102 with reference to FIG. 21).

Still referring to FIG. 19, system 0XX0100 and/or a computing device and/or module included in system may employ an additional machine-learning process to detect additional patterns and/or models of potentially irregular trade activity in data describing trade activity and/or training data as described in this disclosure. Additional machine-learning processes may include, without limitation, using a supervised and/or an unsupervised machine-learning process and/or method to discover at least a hidden model in the plurality of sets of trade activities, and converting the plurality of sets of trade activities to training data using the plurality of user identifications and the at least a hidden model; i.e. the hidden model may be used as a new stored pattern, or to form a new genre of stored pattern. Unsupervised machine-learning process may include, without limitation, Partially Observed Markov Decision Process (POMDP). A POMDP may include a generalized Markov decision process in which a decision process of an agent that cannot detect an underlying state of a system having dynamics determined by Markov decision processes is modeled. An agent in a POMDP may maintain a probability distribution over a set of possible system states, which may be calculated and updated based on observations, observation properties, and a Markov decision process. Repeated interactions with an environment or system may result in periodic recalculations of probability distribution of state, improving predictive accuracy of resulting models. As a result, a POMDP may detect previously unknown relationships between data elements in training data and/or in trade data sets, which may in turn be used as additional models and/or to update existing models used in system 0XX0100. In an embodiment, using POMDP may include operating a model recognizer that can detect a semantic of a previous identified model trade, operating a node generator to generate and synthesis (bootstrap aggregating) the insertion of newly generated nodes that sequenced into tracks and be aggregated into dimensions, and operating a dialogue management component that allows tracking of model trade paths other than just the most likely path in order to interact with user via a user client device in suggesting an alternate or new genre category of the element of training data. Although POMDP has been described as an exemplary process for discovery of hidden models, alternative processes, such as partially observable stochastic games (POGS) using Nash equilibrium may alternatively be employed. Also, as mentioned earlier, boosting, bootstrap aggregating, and stacking are "meta-algorithm" machine learning approaches to combine several machine learning techniques into one predictive model, which reduces bias, decreases variance and improves predictive force. Iterative learning, unlearning, and relearning relevant contexts, conditions, and relevant models throughs boosting, bootstrap aggregating, stacking, POMDP, POGS, deep-learning, and/or other machine learning approaches may help to enable trading desks and algorithmic trading to become resilient and smart alongside market developments.

Still referring to FIG. 19, hidden patterns may be tested and/or evaluated for effectiveness and/or usefulness generally, or in one or more contexts, using simulation methods as described above and as further elaborated herein. For instance, and without limitation, such process may include retrieving a plurality of stored models of trade activity, simulating at least a model trade using the hidden model and/or the plurality of stored models, calculating an outcome of the at least a model trade, and determining a suitability of the hidden model as a function of the outcome. Plurality of stored models may be retrieved to simulate a given set of market conditions. For instance, a plurality of stored models representing patterns of trade activity that have previously been detected together in trade activity data collected, analyzed, and/or stored according to any process, process steps, and/or combination thereof as described in this disclosure may be retrieved. Patterns may be grouped according to one or more market and/or activity-based context; for example, various scenarios that have previously existed, a newly identified hidden pattern may be simulated as a pattern of trade activity. Outcome of the hidden pattern, so simulated, may be measured and compared to a threshold, where an outcome that is insufficiently positive, including without limitation a money-losing outcome and/or an outcome in which gains are minimal, may be used to reject the hidden pattern as a pattern to use in training data, for instance under an assumption that trading pattern that does not result in financial gain is not likely to be repeated frequently by traders acting in self-interest. Such outcome-testing may be performed generally or per context; where outcomes fail thresholds for a given context, pattern may be rejected for that context, while pattern may be used as training data in a context where thresholds are met; classification of current trading pattern to patterns in training data may subsequently be run against sets of training data matching a context that matches current trading pattern; contexts may be organized according to genres such that classification to a genre results in retrieval of trading patterns in a relevant context. Contexts used for such outcome and/or simulation testing may be identified using classification of hidden pattern and/or related and/or co-occurring data to genres and/or contexts as well. Outcomes may be determined and/or measured using any suitable method, including without limitation RENTD/inventory plan, Grossman-Miller, EOQ or the like, for instance as further described in this disclosure. Contexts and/or genres may include any factors affecting trade patterns, including without limitation types of securities traded, market situations, types of institutions represented, or the like.

Classifying, simulating, and back-testing's effectiveness in this manner may help improve detection accuracy in trade research and/or monitoring of "known" cases (i.e. develop a test hypothesis, then designing experiment and see if the result would be within range of known possibilities). Such processes may also help discover and prepare for unexpected market scenarios (i.e. "unknown unknowns", such as Flash Crash). Given that consequences of crash events could be devastating if not being detected timely, it may be highly beneficial to better understand how flash crashes happened, determine effective early warning signals to detect potential crashes, and choose appropriate risk hedges that are most effective to different crash scenarios by to reducing the amount of false negatives, "unknowns", or hidden models. Therefore, machine-learning approaches as described above may serves significant purposes to promote the safety and soundness of global financial system.

Returning to FIG. 21, the case management component 3CX0140 further remarks on the investigation findings in the audit trails database 3TX0121 and closes flags of any false alarms **(block** 3CC0210). All false positives and false negatives (i.e. type I and type II errors) are fed back to the crowd computing component 2FX0107. The case management component 3CX0140 reviews the affirmed cases **(block 3CD0140),** identifies any corrective actions **(block 3CE0140),** and approves the corrective actions (block 3CF0213). Corrective actions may include, but are not limited to, making changes to the filtering mechanism in the analytical system 2XX0100 or allowing temporary tolerance to a situation. Information securities controls may be implemented to preserve the privacy and confidentiality of individual trader and trade strategies. For example, designated approvers, according to an approval grid with reference to FIG. 17), are only allowed to see and process flagged/quarantined trade orders in their assigned queue, such as by trading desk or by region or jurisdiction, and traders are only tagged using unique trader identifiers. The case management component 3CX0140 generates reminders of the expiry of any approved temporary tolerance (block 3CG0907). The backstop assurance component 2EX0106 ensures that the cumulative effects of tolerance cases would not inadvertently lead to other problems that may cascade or lead to uncontrollable or difficult to control consequences, or prevents one from abusing the temporary tolerance process to bypass detections, as described above with reference to FIG. 11.

The case management component 3CX0140 applies the changes according to the approved corrected actions and documents the corrective actions taken in the audit trails database 3TX0121 (block 3CH1211). The case management component 3CX0140 monitors and tracks the timeliness in completing the required changes and closes the case (block 3CI0140). The status of any overdue or long outstanding unclosed cases may be displayed in the management dashboard. The monitoring process involves the use of the simulator 3BX0415 for back-testing and basing on the back-testing results to consider if further changes to corrective/ improvement actions need to be made or further investigation may be required until the number of outliers or exceptions are below a configured threshold (block 3CL0213) . Once fully satisfied, the case management component 3CX0140 closes the flag. The lesson learned is recorded in the lesson database 2TX0120 (block 3CJ1102). Stakeholders, such as the Regulators are notified as appropriate (block 3CK9999). The false positives, false negatives, and learned lessons are fed into the crowd computing component 2FX0107, as described above with reference to FIG. 17.

FIG. 22 is a block diagram of components of a computer system, one or more of which are used to implement various embodiments of the present invention. The components of computer system 2200 may include, but are not limited to, one or more processors or processing units 2206, memory 2201, and bus 2209 that couples various system components, including the memory 2201 to the processor 2206. The bus 2209 represents one or more of any of several types of bus structure, including a memory bus or memory controller, a peripheral bus, an accelerated graphics port, and a processor or local bus using any of a variety of bus architectures. The memory 2201 may include computer readable media in the form of volatile memory, such as random access memory (RAM) 2202 or cache memory 2203, or non-volatile storage media 2204. The memory 2201 may include at least one program product having a set of at least one program code module 2205 that are configured to carry out the functions of the illustrative embodiments of the present invention when executed by the processor 2206. The computer system 2200 may also communicate with one or more external devices 2211, such as a display 2210, via I/O interfaces 2207. The computer system 2200 may communicate with one or more networks via network adapter 2208.

The present invention can take the form of an entirely hardware embodiment, an entirely software embodiment or an embodiment containing both hardware and software elements. In a preferred embodiment, the present invention is implemented in software, which includes but is not limited to firmware, resident software, microcode, etc.

Furthermore, the present invention can take the form of a computer program product accessible from a computer usable or computer readable storage medium providing program code for use by or in connection with a computer or any instruction execution system. For the purposes of this description, a computer usable or computer readable storage medium can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include compact disk - read only memory (CD-ROM), compact disk - read/write (CD-R/W) and DVD. A computer readable storage medium, as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire.

A data processing system suitable for storing and/or executing program code will include at least one processor coupled directly or indirectly to memory elements through a system bus. The memory elements can include local memory employed during actual execution of the program code, bulk storage, and cache memories which provide temporary storage of at least some program code in order to reduce the number of times code must be retrieved from bulk storage during execution.

Input/output or I/O devices (including but not limited to keyboards, displays, point devices, etc.) can be coupled to the system either directly or through intervening I/O controllers.

Network adapters may also be coupled to the system to enable the data processing system to become coupled to other data processing systems or remote printers or storage devices through intervening private or public networks. Modems, cable modem and Ethernet cards are just a few of the currently available types of network adapters.

CONCLUSION

Embodiments of an improved system for the detection and analysis of trade data is described above. In some embodiments, as described above with reference to FIG. 6, data points in the trade activities are transformed into a music piece representation. The music piece representation is converted into metrical tree. This yields a data structure with a smaller size than conventional technical analyses using vectors, resulting in reduced storage resource requirements. The storage resource savings increases as the volume of trade data increases. The comparison process, described above with reference to FIGS. 9-10, are performed using the metrical tree to analyze trends in tradeable instruments or markets, thus, reliance on plot charts and the measuring of vectors graphically, as in conventional methods, are avoided. Further, the smaller size of the metrical tree allows the comparison process to be performed more quickly and more timely than conventional technical analyses. This in turn reduces the latency in the comparison process, allowing for the identification of essential signals or warnings in a timely manner for the regulatory agencies, such as the SEC, FINRA, electronic marketplaces (such as the stock exchanges, HFTs and any serious market participants trying to achieve best execution. The use of the smaller metrical tree structure in the comparison process (see FIGS. 9-10), with the CEP lessons in the lessons database 2TX0120, avoid the complex calculations of conventional technical analysis techniques, thus reducing computing resource requirements. The CEP lessons in some embodiments include hypothetical 'What scenarios instead of relying only on historical data sets, thus allowing forward looking analysis to prevent undesirable outcomes, such as inadvertently causing a potential market manipulation or conflict with customer, before implementation. The comparison process is able to process a large amount of trade data in real-time, pre-trade, or at trade order analysis, which cannot be reasonably realized through monitoring by a human.

In some embodiments, once the metrical trees are constructed, the comparison process can be performed using a propagation or partially labeled tree approach that gives more emphasis to the information hierarchically contained in the tree than to the tree structure. This leads to more accurate results and findings with fewer errors and greater clock synchronization tolerance.

In addition, audio compression techniques may be leveraged to achieve greater compression of the metrical tree than under conventional financial data compression approaches. In some embodiments, flexibility is improved for a variety of coding methods for lossless or lossy data compression. Lossy methods are able to realize a greater compression ratio than typical financial data compression approaches. In some embodiments, the use of metrical tree representations optimizes the trade-off between acceptable loss of quality and gains in transmission speed and reduction of storage size. Audio codecs can further be leveraged in the obfuscation and encryption of the data in the metrical trees for data protection and other purposes.

In some embodiments, the compressed data is encrypted with time-locked audio codecs, preventing premature access and promoting the fair availability of market data to market participants.

In some embodiments, the system 0XX0100 quantifies the trade data into scores and uses feedback via the crowd computing component 2FX0107 to improve the accuracy of the pattern recognition.

In some embodiments, feedback from crowd sources, via the crowd computing component 2FX0107 and the simulator 3BX0415, are leveraged to improve the lessons in the lessons database 2TX0120 and accumulated cases used to train the system 0XX0100, improving the accuracy of the analytical system 2XX0100. The parameters, lists, and filtering criteria used by the analytical system 2XX0100, including RENTD and the inventory plan, can also be fine-tuned. A "Stress RENTD" trigger may be invoked via the crowd computing component 2FX0107, where the inputs and parameters in the RENTD/ inventory plan calculations by different users of the 0XX0100 platform are analyzed against actual market conditions to assess market dynamics in real-time via the 3BX0415 simulator, allowing for more timely intervention that cannot be reasonably realized if the calculations are performed by humans.

In some embodiments, the trade reconstruction component and order book replay simulator provide an objective correlation of trade events with facts in a market event timeline. Trade activities that may or may not have an effect in altering a worth of a targeted financial instrument may be objectively affirmed as suspicious cases. Conventional methods reliance on subjective human comparison of charts or graphics to identify suspicious case, are avoided.

In some embodiments, a user interface is provided which gives an easier way to meaningfully aggregate or decompose financial records by using reverb and other tuning or simulation methods to replicate depth-of-book, and assimilate and represent market dynamics. Complex calculations, such as of asset pricing or payoffs, and deciphering correlations between rollup and the underlying dimensions, are avoided, thus saving computing and processing resources.

## Claims

**1.** A system for processing and monitoring trade data, the system comprising a computing device having at least one processor (1XX1101), the computing device configured to:

receive data representing a set of trade activities;
transform the data representing the set of trade activities to a musical piece representation;
convert the musical piece representation to a metrical tree, wherein notes of the musical piece representation are recorded in labeled leaf nodes of the metrical tree, and the labeled leaf nodes are connected to unlabeled internal nodes;
set an initial default value of a score representing a probability of trade irregularity;
compare the metrical tree to a plurality of trigger trees stored in a lessons database (2TX0120), each trigger tree of the plurality of trigger trees representing a trade irregularity;
identify at least one trigger tree of the plurality of trigger trees indicating at least a closest match to the metrical tree using a nearest-neighbors algorithm, wherein using the nearest-neighbors algorithm further comprises:

computing distances between trees using match values, wherein the distance from a trigger tree of the plurality of trigger trees to the metrical tree is an average chance of finding a labeled leaf from the trigger tree in leaf nodes connected to unlabeled internal nodes of the metrical tree; and
identifying at least a trigger tree having a minimal distance to the metrical tree;

modify the score to represent an increased probability of trade irregularity as a function of the identification of the at least one trigger tree;
compare the score to a preconfigured threshold; and
execute a corresponding action by a review system (3XX0140) as a result of the comparison.

**2.** The system of claim 1, wherein the transforming comprises:

representing trade activities in the set as notes and trade inactivity as rests in the musical piece representation, wherein each note represents a trade order in the set of trade activities;
placing each note representing a buy order on a treble clef in the musical piece representation;
placing each note representing a sell order on a bass clef in the musical piece representation;
setting a pitch of each note in the musical piece representation according to a price value and a length of time a corresponding trade order will remain open;
setting a tempo of the musical piece representation according to an average speed at which trade orders were filled; and
setting a time signature of the musical piece representation according to a combination of trade instrument type, venue, and market conditions of the set of trade activities.

**3.** The system of claim 1, wherein the converting comprises:
converting each note in the musical piece representation to a leaf node in the metrical tree by the data processor (1XX1101), comprising:

setting, by the data processor (1XX1101), a level of the leaf node in the metrical tree according to a duration of a corresponding note in the musical piece representation;
ordering, by the data processor (1XX1101), a plurality of nodes in the metrical tree according to a time order of the notes in the musical piece representation;
parsing the metrical tree into plurality of tracks, wherein each track comprises a smallest discrete trading unit of the set of trade activities;
aggregating tracks into dimensions using a partially labelled tree comparison method, wherein each dimension is an organized group of multiple discrete trading units.

**4.** The system of claim 1, wherein each trigger tree of the plurality of trigger trees includes data representing a pattern selected from a group consisting of potential market manipulation, market change signal, synthetically created trades, and probability that the set of trade activities will result in a market price move of one or more financial assets.

**5.** The system of claim 1, wherein comparing further comprises:
recursively performing a computation of an average of chances of finding a labelled leaf in a descendant of a non-labelled inner node in the metrical tree until no matching trigger tree is found describing trade activity having a time span matching a time span of the data representing the series of trade activities.

**6.** The system of claim 1, wherein the computing device is further configured to store the data representing the set of trade activities using time-lock cryptography.

**7.** A computer implemented method for processing and monitoring electronic trade data, comprising:

receiving data representing a set of trade activities by a data processor (1XX1101);
transforming the data representing the set of trade activities to a musical piece representation by the data processor (1XX1101);
converting the musical piece representation to a metrical tree by the data processor (1XX1101), wherein notes of the musical piece representation are recorded in labeled leaf nodes of the metrical tree, and the labeled leaf nodes are connected to unlabeled internal nodes;
setting an initial default value of a score representing a probability of trade irregularity;
comparing the metrical tree to a plurality of trigger trees stored in a lessons database (2TX0120), each trigger tree of the plurality of trigger trees representing a trade irregularity;
identifying at least one trigger tree of the plurality of trigger trees indicating at least a closest match to the metrical tree using a nearest-neighbors algorithm, wherein using the nearest-neighbors algorithm further comprises:

computing distances between trees using match values, wherein the distance from a trigger tree of the plurality of trigger trees to the metrical tree is an average chance of finding a labeled leaf from the trigger tree in leaf nodes connected to unlabeled internal nodes of the metrical tree; and
identifying at least a trigger tree having a minimal distance to the metrical tree;

modifying the score to represent an increased probability of trade irregularity as a function of the identification of the at least one trigger tree;
comparing the score to a preconfigured threshold; and
executing a corresponding action by a review system as a result of the comparison.

**8.** The method of claim 7, wherein the transforming comprises:

representing trade activities in the set as notes and trade inactivity as rests in the musical piece representation, wherein each note represents a trade order in the set of trade activities;
placing each note representing a buy order on a treble clef in the musical piece representation;
placing each note representing a sell order on a bass clef in the musical piece representation;
setting a pitch of each note in the musical piece representation according to a price value and length of time a corresponding trade order will remain open;
setting a tempo of the musical piece representation according to an average speed at which trade orders were filled; and
setting a time signature of the musical piece representation according to a combination of trade instrument type, venue, and market conditions of the set of trade activities.

**9.** The method of claim 7, wherein the converting comprises:
converting each note in the musical piece representation to a leaf node in the metrical tree by the data processor (1XX1101), comprising:

setting, by the data processor (1XX1101), a level of the leaf node in the metrical tree according to a duration of a corresponding note in the musical piece representation;
ordering, by the data processor (1XX1101), a plurality of nodes in the metrical tree according to a time order of the notes in the musical piece representation;
parsing the metrical tree into plurality of tracks, wherein each track comprises a smallest discrete trading unit of the set of trade activities;

aggregate tracks into dimensions using a partially labelled tree comparison method, wherein each dimension is an organized group of multiple discrete trading units.

**10.** The method of claim 7, wherein each trigger tree of the plurality of trigger trees includes data representing a pattern selected from a group consisting of potential market manipulation, market change signal, synthetically created trades, and probability that the set of trade activities will result in a market price move of one or more financial assets.

**11.** The method of claim 7, wherein comparing further comprises:
recursively performing a computation of an average of chances of finding a labelled leaf in a descendant of a non-labelled inner node in the metrical tree until no matching is found describing trade activity having a time span matching a time span of the data representing the series of trade activities.

**12.** The method of claim 7, further comprising storing the data representing the set of trade activities using time-lock cryptography.

**13.** A computer program comprising instructions which, when the program is executed by a computer, cause the computer to carry out the method of any one of claims 7-12.

## Patentansprüche

**1.** System zum Verarbeiten und Überwachen von Handelsdaten, wobei das System eine Computervorrichtung umfasst, die zumindest einen Prozessor (1XX1101) aufweist, wobei die Computervorrichtung konfiguriert ist, um:

Daten, die einen Satz von Handelsaktivitäten darstellen, zu empfangen;
die Daten, die den Satz von Handelsaktivitäten darstellen, in eine Musikstückdarstellung umzuwandeln:

die Musikstückdarstellung in einen metrischen Baum zu konvertieren, wobei Noten der Musikstückdarstellung in markierten Blattknoten des metrischen Baums aufgezeichnet werden und die markierten Blattknoten mit nichtmarkierten inneren Knoten verbunden werden;
einen anfänglichen Standardwert einer Kennzahl, die eine Wahrscheinlichkeit für Handelsunregelmäßigkeit darstellt, einzustellen;
den metrischen Baum mit einer Vielzahl von Triggerbäumen zu vergleichen, die in einer Lektionendatenbank (2TX0120) gespeichert sind, wobei jeder Triggerbaum aus der Vielzahl von Triggerbäumen eine Handelsunregelmäßigkeit darstellt;
zumindest einen Triggerbaum aus der Vielzahl von Triggerbäumen, die zumindest eine größte Übereinstimmung mit dem metrischen Baum angeben, unter Verwendung eines Nächster-Nachbar-Algorithmus zu identifizieren, wobei das Verwenden des Nächster-Nachbar-Algorithmus ferner Folgendes umfasst:

Berechnen von Abständen zwischen Bäumen unter Verwendung von Übereinstimmungswerten, wobei der Abstand von einem Triggerbaum aus der Vielzahl von Triggerbäumen zum metrischen Baum eine durchschnittliche Wahrscheinlichkeit für das Finden eines markierten Blatts vom Triggerbaum in Blattknoten, die mit nichtmarkierten inneren Knoten des metrischen Baums verbunden sind, ist; und
Identifizieren von zumindest einem Triggerbaum mit einem minimalen Abstand zum metrischen Baum;

die Kennzahl zu modifizieren, um eine erhöhte Wahrscheinlichkeit für Handelsunregelmäßigkeit als Funktion der Identifizierung des zumindest einen Triggerbaums darzustellen;
die Kennzahl mit einer vorkonfigurierten Schwelle zu vergleichen; und
eine entsprechende Handlung durch ein Überprüfungssystem (3XX0140) als Ergebnis des Vergleichs auszuführen.

**2.** System nach Anspruch 1, wobei das Umwandeln Folgendes umfasst:

Darstellen von Handelsaktivitäten in dem Satz aus Noten und von Handelsinaktivität als Pausen in der Musikstückdarstellung, wobei jede Note einen Handelsauftrag in dem Satz von Handelsaktivitäten darstellt;
Anordnen jeder Note, die einen Kaufauftrag darstellt, auf einem Violinschlüssel in der Musikstückdarstellung;
Anordnen jeder Note, die einen Verkaufsauftrag darstellt, auf einem Bassschlüssel in der Musikstückdarstellung;
Einstellen der Höhe jeder Note in der Musikstückdarstellung gemäß einem Preiswert und einem Zeitraum, für den der Handelsauftrag offen bleiben wird;
Einstellen des Tempos der Musikstückdarstellung gemäß einer durchschnittlichen Geschwindigkeit, mit der die Handelsaufträge ausgefüllt wurden; und
Einstellen einer Taktangabe der Musikstückdarstellung gemäß einer Kombination aus Typ des Handelsinstruments, Platz und Marktbedingungen des Satzes von Handelsaktivitäten.

**3.** System nach Anspruch 1, wobei das Konvertieren Folgendes umfasst:
Konvertieren jeder Note in der Musikstückdarstellung in einen Blattknoten im metrischen Baum durch den Datenprozessor (1XX1101), umfassend:

Einstellen einer Ebene des Blattknotens im metrischen Baum gemäß der Dauer einer entsprechenden Note in der Musikstückdarstellung durch den Datenprozessor (1XX1101);
Reihen einer Vielzahl von Knoten im metrischen Baum gemäß einer Zeitreihung der Noten in der Musikstückdarstellung durch den Datenprozessor (1XX1101);
Parsen des metrischen Baums in eine Vielzahl von Spuren, wobei jede Spur eine kleinste einzelne Handelseinheit des Satzes von Handelsaktivitäten umfasst;
Aggregieren von Spuren zu Dimensionen unter Verwendung eines teilweise markierten Baumvergleichsverfahrens, wobei jede Dimension eine organisierte Gruppe von mehreren einzelnen Handelseinheiten ist.

**4.** System nach Anspruch 1, wobei jeder Triggerbaum aus der Vielzahl von Triggerbäumen Daten umfasst, die ein Muster darstellen, das ausgewählt ist aus einer Gruppe bestehend aus potenzieller Marktmanipulierung, Marktänderungssignal, synthetisch geschaffenem Handel und Wahrscheinlichkeit dafür, dass der Satz von Handelsaktivitäten in einer Marktpreisbewegung von einem oder mehreren finanziellen Vermögenswerten resultieren wird.

**5.** System nach Anspruch 1, wobei das Vergleichen ferner Folgendes umfasst:
rekursives Durchführen einer Berechnung eines Durchschnitts von Wahrscheinlichkeiten für das Finden eines markierten Blatts in einem Nachkommen eines nichtmarkierten inneren Knotens im metrischen Baum, bis kein übereinstimmender Triggerbaum mehr gefunden wird, der eine Handelsaktivität mit einer Zeitspanne beschreibt, die mit der Zeitspanne der Daten, welche die Serie von Handelsaktivitäten darstellen, übereinstimmt.

**6.** System nach Anspruch 1, wobei die Computervorrichtung ferner dazu konfiguriert ist, die Daten, welche den Satz von Handelsaktivitäten darstellen, unter Verwendung von Zeitverriegelungskryptografie zu speichern.

**7.** Computerimplementiertes Verfahren zum Verarbeiten und Überwachen von elektronischen Handelsdaten, umfassend:

Empfangen von Daten, die einen Satz von Handelsaktivitäten darstellen, durch einen Datenprozessor (1XX1101);
Umwandeln der Daten, die den Satz von Handelsaktivitäten darstellen, in eine Musikstückdarstellung durch den Datenprozessor (1XX1101):

Konvertieren der Musikstückdarstellung in einen metrischen Baum durch den Datenprozessor (1XX1101), wobei Noten der Musikstückdarstellung in markierten Blattknoten des metrischen Baums aufgezeichnet werden und die markierten Blattknoten mit nichtmarkierten inneren Knoten verbunden werden;
Einstellen eines anfänglichen Standardwerts einer Kennzahl, die eine Wahrscheinlichkeit für Handelsunregelmäßigkeit darstellt;
Vergleichen des metrischen Baums mit einer Vielzahl von Triggerbäumen, die in einer Lektionendatenbank (2TX0120) gespeichert sind, durch den Datenprozessor (1XX1101), wobei jeder Triggerbaum aus der Vielzahl von Triggerbäumen eine Handelsunregelmäßigkeit darstellt;
Identifizieren von zumindest einem Triggerbaum aus der Vielzahl von Triggerbäumen, die zumindest eine größte Übereinstimmung mit dem metrischen Baum angeben, unter Verwendung eines Nächster-Nachbar-Algorithmus, wobei das Verwenden des Nächster-Nachbar-Algorithmus ferner Folgendes umfasst:

Berechnen von Abständen zwischen Bäumen unter Verwendung von Übereinstimmungswerten, wobei der Abstand von einem Triggerbaum aus der Vielzahl von Triggerbäumen zum metrischen Baum eine durchschnittliche Wahrscheinlichkeit für das Finden eines markierten Blatts vom Triggerbaum in Blattknoten, die mit nichtmarkierten inneren Knoten des metrischen Baums verbunden sind, ist; und
Identifizieren von zumindest einem Triggerbaum mit einem minimalen Abstand zum metrischen Baum;

Modifizieren der Kennzahl, um eine erhöhte Wahrscheinlichkeit für Handelsunregelmäßigkeit als Funktion der Identifizierung des zumindest einen Triggerbaums darzustellen;
Vergleichen der Kennzahl mit einer vorkonfigurierten Schwelle; und
Ausführen einer entsprechenden Handlung durch ein Überprüfungssystem als Ergebnis des Vergleichs.

**8.** Verfahren nach Anspruch 7, wobei das Umwandeln Folgendes umfasst:

Darstellen von Handelsaktivitäten in dem Satz aus Noten und von Handelsinaktivität als Pausen in der Musikstückdarstellung, wobei jede Note einen Handelsauftrag in dem Satz von Handelsaktivitäten darstellt;
Anordnen jeder Note, die einen Kaufauftrag darstellt, auf einem Violinschlüssel in der Musikstückdarstellung;
Anordnen jeder Note, die einen Verkaufsauftrag darstellt, auf einem Bassschlüssel in der Musikstückdarstellung;
Einstellen der Höhe jeder Note in der Musikstückdarstellung gemäß einem Preiswert und einem Zeitraum, für den der Handelsauftrag offen bleiben wird;
Einstellen des Tempos der Musikstückdarstellung gemäß einer durchschnittlichen Geschwindigkeit, mit der die Handelsaufträge ausgefüllt wurden; und
Einstellen einer Taktangabe der Musikstückdarstellung gemäß einer Kombination aus Typ des Handelsinstruments, Platz und Marktbedingungen des Satzes von Handelsaktivitäten.

**9.** Verfahren nach Anspruch 7, wobei das Konvertieren Folgendes umfasst:
Konvertieren jeder Note in der Musikstückdarstellung in einen Blattknoten im metrischen Baum durch den Datenprozessor (1XX1101), umfassend:

Einstellen einer Ebene des Blattknotens im metrischen Baum gemäß der Dauer einer entsprechenden Note in der Musikstückdarstellung durch den Datenprozessor (1XX1101);
Reihen einer Vielzahl von Knoten im metrischen Baum gemäß einer Zeitreihung der Noten in der Musikstückdarstellung durch den Datenprozessor (1XX1101);
Parsen des metrischen Baums in eine Vielzahl von Spuren, wobei jede Spur eine kleinste einzelne Handelseinheit des Satzes von Handelsaktivitäten umfasst;
Aggregieren von Spuren zu Dimensionen unter Verwendung eines teilweise markierten Baumvergleichsverfahrens, wobei jede Dimension eine organisierte Gruppe von mehreren einzelnen Handelseinheiten ist.

**10.** Verfahren nach Anspruch 7, wobei jeder Triggerbaum aus der Vielzahl von Triggerbäumen Daten umfasst, die ein Muster darstellen, das ausgewählt ist aus einer Gruppe bestehend aus potenzieller Marktmanipulierung, Marktveränderungssignal, synthetisch geschaffenem Handel und Wahrscheinlichkeit dafür, dass der Satz von Handelsaktivitäten in einer Marktpreisbewegung von einem oder mehreren finanziellen Vermögenswerten resultieren wird.

**11.** Verfahren nach Anspruch 7, wobei das Vergleichen ferner Folgendes umfasst:
rekursives Durchführen einer Berechnung eines Durchschnitts von Wahrscheinlichkeiten für das Finden eines markierten Blatts in einem Nachkommen eines nichtmarkierten inneren Knotens im metrischen Baum, bis keine Übereinstimmung mehr gefunden wird, die eine Handelsaktivität mit einer Zeitspanne beschreibt, die mit der Zeitspanne der Daten, welche die Serie von Handelsaktivitäten darstellen, übereinstimmt.

**12.** Verfahren nach Anspruch 7, ferner umfassend das Speichern von Daten, die den Satz von Handelsaktivitäten darstellen, unter Verwendung von Zeitverriegelungskryptografie.

**13.** Computerprogramm, umfassend Befehle, die, wenn das Programm von einem Computer ausgeführt wird, bewirken, dass der Computer ein Verfahren nach einem der Ansprüche 7 bis 12 ausführt.

## Revendications

**1.** Système pour traiter et surveiller des données commerciales, le système comprenant un dispositif informatique présentant au moins un processeur (1XX1101), le dispositif informatique étant configuré pour :

recevoir des données représentant un ensemble d’activités commerciales ;
transformer les données représentant l’ensemble d’activités commerciales en une représentation de pièce musicale ;
convertir la représentation de pièce musicale en un arbre métrique, dans lequel des notes de la représentation de pièce musicale sont enregistrées dans des nœuds de feuille étiquetés de l'arbre métrique, et les nœuds de feuille étiquetés sont connectés à des nœuds internes non étiquetés ;
définir une valeur initiale par défaut d'un score représentant une probabilité d'irrégularité commerciale ;
comparer l'arbre métrique à une pluralité d'arbres de déclenchement stockés dans une base de données de leçons (2TX0120), chaque arbre de déclenchement de la pluralité d'arbres de déclenchement représentant une irrégularité commerciale ;
identifier au moins un arbre de déclenchement de la pluralité d'arbres de déclenchement indiquant au moins une correspondance la plus proche par rapport à l'arbre métrique en utilisant un algorithme de voisins les plus proches, dans lequel l'utilisation de l'algorithme de voisins les plus proches comprend en outre les étapes consistant à :

calculer des distances entre des arbres en utilisant des valeurs de correspondance, dans lequel la distance entre un arbre de déclenchement de la pluralité d'arbres de déclenchement et l'arbre métrique est une chance moyenne de trouver une feuille étiquetée à partir de l'arbre de déclenchement dans des nœuds de feuille connectés à des nœuds internes non étiquetés de l'arbre métrique ; et
identifier au moins un arbre de déclenchement présentant une distance minimale par rapport à l'arbre métrique ;

modifier le score pour représenter une probabilité accrue d'irrégularité commerciale en fonction de l'identification du au moins un arbre de déclenchement ;
comparer le score à un seuil préconfiguré ; et
exécuter une action correspondante par un système de révision (3XX0140) à la suite de la comparaison.

**2.** Système selon la revendication 1, dans lequel la transformation comprend les étapes consistant à :

représenter des activités commerciales dans l'ensemble sous la forme de notes et l'inactivité commerciale sous la forme de restes dans la représentation de pièce musicale, dans lequel chaque note représente un ordre commercial dans l'ensemble d'activités commerciales ;
placer chaque note représentant un ordre d'achat sur une clef de sol dans la représentation de pièce musicale ;
placer chaque note représentant un ordre de vente sur une clef de basse dans la représentation de pièce musicale ;
définir une hauteur de chaque note dans la représentation de pièce musicale en fonction d'une valeur de prix et d'une durée pendant laquelle un ordre commercial correspondant va rester ouvert ;
définir un tempo de la représentation de pièce musicale en fonction d'une vitesse moyenne à laquelle des ordres commerciaux ont été exécutés ; et
définir une signature temporelle de la représentation de pièce musicale en fonction d'une combinaison de type d'instrument commercial, de lieu et de conditions de marché de l'ensemble d'activités commerciales.

**3.** Système selon la revendication 1, dans lequel la conversion comprend l'étape consistant à :
convertir chaque note dans la représentation de pièce musicale en un nœud de feuille dans l'arbre métrique par l'intermédiaire du processeur de données (1XX1101), comprenant :

définir, par l'intermédiaire du processeur de données (1XX1101), un niveau du nœud de feuille dans l'arbre métrique en fonction d'une durée d'une note correspondante dans la représentation de pièce musicale ;
ordonner, par l'intermédiaire du processeur de données (1XX1101), une pluralité de nœuds dans l'arbre métrique selon un ordre temporel des notes dans la représentation de pièce musicale ;
trier l'arbre métrique en une pluralité de pistes, dans lequel chaque piste comprend une plus petite unité de négociation discrète de l'ensemble d'activités commerciales ;
agréger des pistes en dimensions en utilisant un procédé de comparaison d'arbres partiellement étiquetés, dans lequel chaque dimension est un groupe organisé de plusieurs unités de négociation discrètes.

**4.** Système selon la revendication 1, dans lequel chaque arbre de déclenchement de la pluralité d'arbres de déclenchement inclut des données représentant un motif choisi dans un groupe comprenant une manipulation de marché potentielle, un signal de changement de marché, des transactions créées de manière synthétique, et une probabilité que l'ensemble d'activités commerciales entraîne un mouvement de prix de marché d'un ou plusieurs actifs financiers.

**5.** Système selon la revendication 1, dans lequel la comparaison comprend en outre l'étape consistant à :

effectuer de manière récursive un calcul d'une moyenne de chances de trouver une feuille étiquetée dans un descendant d'un nœud interne non étiqueté dans l'arbre métrique jusqu'à ce qu'aucun arbre de déclenchement correspondant ne soit trouvé décrivant une activité commerciale présentant un intervalle de temps correspondant à un intervalle de temps des données représentant la série d'activités commerciales.

**6.** Système selon la revendication 1, dans lequel le dispositif informatique est en outre configuré pour stocker les données représentant l'ensemble d'activités commerciales en utilisant une cryptographie à verrouillage temporel.

**7.** Procédé mis en œuvre par ordinateur pour traiter et surveiller des données commerciales électroniques, comprenant les étapes consistant à :

recevoir des données représentant un ensemble d'activités commerciales par l'intermédiaire d'un processeur de données (1XX1101) ;
transformer les données représentant l'ensemble d'activités commerciales en une représentation de pièce musicale par l'intermédiaire du processeur de données (1XX1101) ;
convertir la représentation de pièce musicale en un arbre métrique par l'intermédiaire du processeur de données (1XX1101), dans lequel des notes de la représentation de pièce musicale sont enregistrées dans des nœuds de feuille étiquetés de l'arbre métrique, et les nœuds de feuille étiquetés sont connectés à des nœuds internes non étiquetés ;
définir une valeur initiale par défaut d'un score représentant une probabilité d'irrégularité commerciale ;
comparer l'arbre métrique à une pluralité d'arbres de déclenchement stockés dans une base de données de leçons (2TX0120), chaque arbre de déclenchement de la pluralité d'arbres de déclenchement représentant une irrégularité commerciale ;
identifier au moins un arbre de déclenchement de la pluralité d'arbres de déclenchement indiquant au moins une correspondance la plus proche de l'arbre métrique en utilisant un algorithme de voisins les plus proches, dans lequel l'utilisation de l'algorithme de voisins les plus proches comprend en outre les étapes consistant à :

calculer des distances entre des arbres en utilisant des valeurs de correspondance, dans lequel la distance entre un arbre de déclenchement de la pluralité d'arbres de déclenchement et l'arbre métrique est une chance moyenne de trouver une feuille étiquetée à partir de l'arbre de déclenchement dans des nœuds de feuille connectés à des nœuds internes non étiquetés de l'arbre métrique ; et
identifier au moins un arbre de déclenchement présentant une distance minimale par rapport à l'arbre métrique ;

modifier le score pour représenter une probabilité accrue d'irrégularité commerciale en fonction de l'identification du au moins un arbre de déclenchement ;
comparer le score à un seuil préconfiguré ; et
exécuter une action correspondante par l'intermédiaire d'un système de révision en résultat de la comparaison.

**8.** Procédé selon la revendication 7, dans lequel la transformation comprend les étapes consistant à :

représenter des activités commerciales dans l'ensemble sous la forme de notes et l'inactivité commerciale sous la forme de restes dans la représentation de pièce musicale, dans lequel chaque note représente un ordre commercial dans l'ensemble d'activités commerciales ;
placer chaque note représentant un ordre d'achat sur une clef de sol dans la représentation de pièce musicale ;
placer chaque note représentant un ordre de vente sur une clef de basse dans la représentation de pièce musicale ;
définir un pas de chaque note dans la représentation de pièce musicale en fonction d'une valeur de prix et d'une durée pendant laquelle un ordre commercial correspondant va rester ouvert ;
définir un tempo de la représentation de pièce musicale en fonction d'une vitesse moyenne à laquelle des ordres commerciaux ont été exécutés ; et
définir une signature temporelle de la représentation de pièce musicale en fonction d'une combinaison de type d'instrument commercial, de lieu et de conditions de marché de l'ensemble d'activités commerciales.

**9.** Procédé selon la revendication 7, dans lequel la conversion comprend les étapes consistant à :
convertir chaque note dans la représentation de pièce musicale en un nœud de feuille dans l'arbre métrique par l'intermédiaire du processeur de données (1XX1101), comprenant :

définir, par l'intermédiaire du processeur de données (1XX1101), un niveau du nœud de feuille dans l'arbre métrique en fonction d'une durée d'une note correspondante dans la représentation de pièce musicale ;
ordonner, par l'intermédiaire du processeur de données (1XX1101), une pluralité de nœuds dans l'arbre métrique selon un ordre temporel des notes dans la représentation de pièce musicale ;
analyse de l'arbre métrique en une pluralité de pistes, dans lequel chaque piste comprend une plus petite unité de négociation discrète de l'ensemble d'activités commerciales ;
agréger des pistes en dimensions en utilisant un procédé de comparaison d'arbres partiellement étiquetés, dans lequel chaque dimension est un groupe organisé de plusieurs unités de négociation discrètes.

**10.** Procédé selon la revendication 7, dans lequel chaque arbre de déclenchement de la pluralité d'arbres de déclenchement inclut des données représentant un motif sélectionné dans un groupe comprenant une manipulation de marché potentielle, un signal de changement de marché, des transactions créées de manière synthétique et une probabilité que l'ensemble d'activités commerciales entraîne un mouvement de prix de marché d'un ou plusieurs actifs financiers.

**11.** Procédé selon la revendication 7, dans lequel la comparaison comprend en outre l'étape consistant à :
effectuer de manière récursive un calcul d'une moyenne de chances de trouver une feuille étiquetée dans un descendant d'un nœud interne non étiqueté dans l'arbre métrique jusqu'à ce qu'aucune correspondance ne soit trouvée décrivant une activité commerciale présentant un intervalle de temps correspondant à un intervalle de temps des données représentant la série d'activités commerciales.

**12.** Procédé selon la revendication 7, comprenant en outre l'étape consistant à stocker les données représentant l'ensemble d'activités commerciales en utilisant une cryptographie à verrouillage temporel.

**13.** Programme informatique comprenant des instructions qui, lorsque le programme est exécuté par un ordinateur, amènent l'ordinateur à exécuter le procédé de l'une quelconque des revendications 7 à 12.

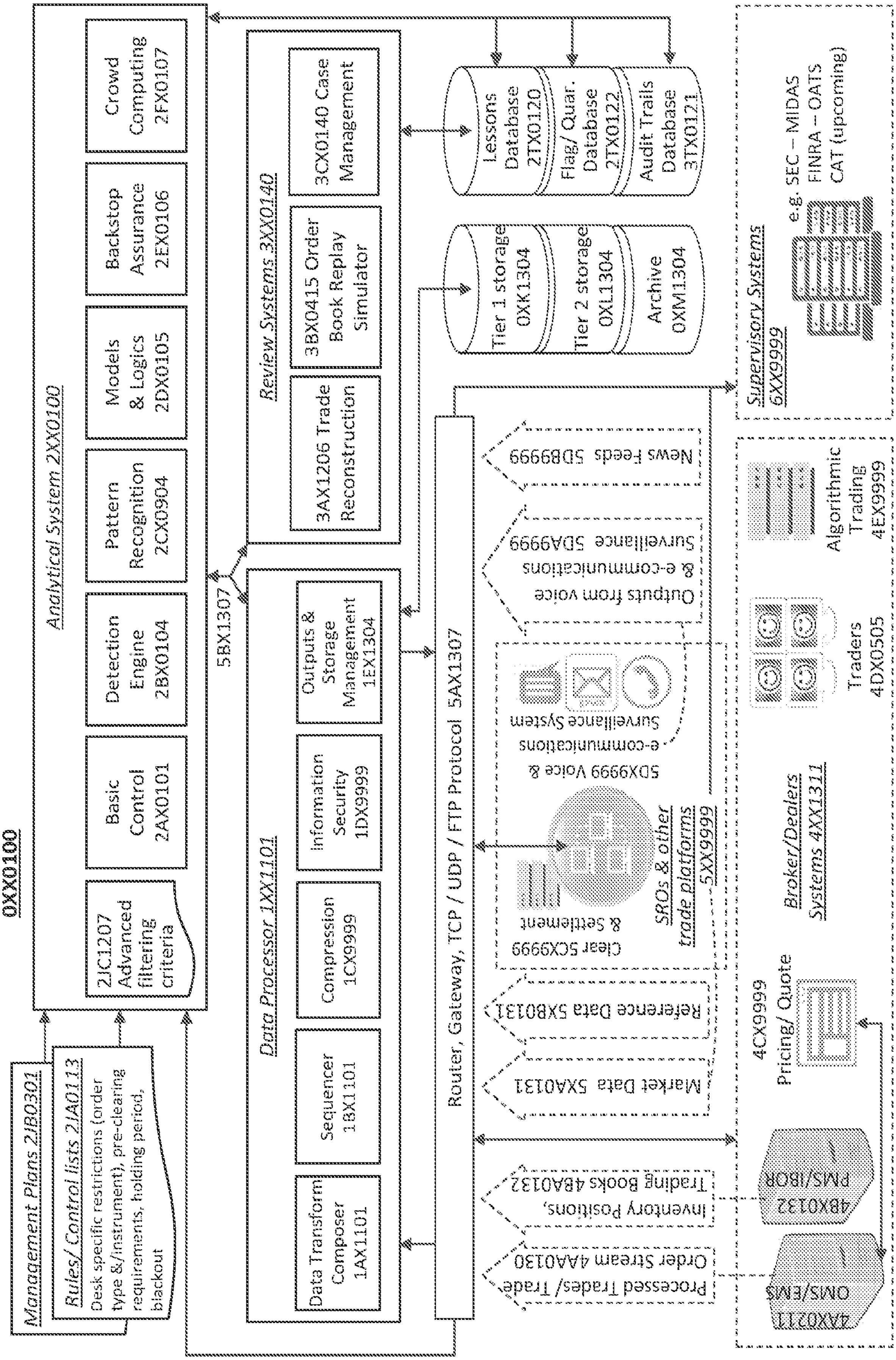
0XX0100
Management Plans 2JB0301
Rules/ Control lists 2JA0113
Desk specific restrictions (order type &/instrument), pre-clearing requirements, holding period, blackout
Analytical System 2XX0100
2JC1207 Advanced filtering criteria
Basic Control 2AX0101
Detection Engine 2BX0104
Pattern Recognition 2CX0904
Models & Logics 2DX0105
Backstop Assurance 2EX0106
Crowd Computing 2FX0107
5BX1307
Data Processor 1XX1101
Data Transform Composer 1AX1101
Sequencer 1BX1101
Compression 1CX9999
Information Security 1DX9999
Outputs & Storage Management 1EX1304
Review Systems 3XX0140
3AX1206 Trade Reconstruction
3BX0415 Order Book Replay Simulator
3CX0140 Case Management
Router, Gateway, TCP / UDP / FTP Protocol 5AX1307
Tier 1 storage 0XK1304
Tier 2 storage 0XL1304
Archive 0XM1304
Lessons Database 2TX0120
Flag/ Quar. Database 2TX0122
Audit Trails Database 3TX0121
Processed Trades/ Trade Order Stream 4AA0130
Inventory Positions, Trading Books 4BA0132
Market Data 5XA0131
Reference Data 5XB0131
Clear 5CX9999 & Settlement
SROs & other trade platforms 5XX9999
5DX9999 Voice & e-communications Surveillance System
Outputs from voice & e-communications Surveillance 5DA9999
News Feeds 5DB9999
4AX0211 OMS/EMS
4BX0132 PMS/IBOR
4CX9999 Pricing/ Quote
Broker/Dealers Systems 4XX1311
Traders 4DX0505
Algorithmic Trading 4EX9999
Supervisory Systems 6XX9999
e.g. SEC – MIDAS
FINRA – OATS
CAT (upcoming)

FIG. 1

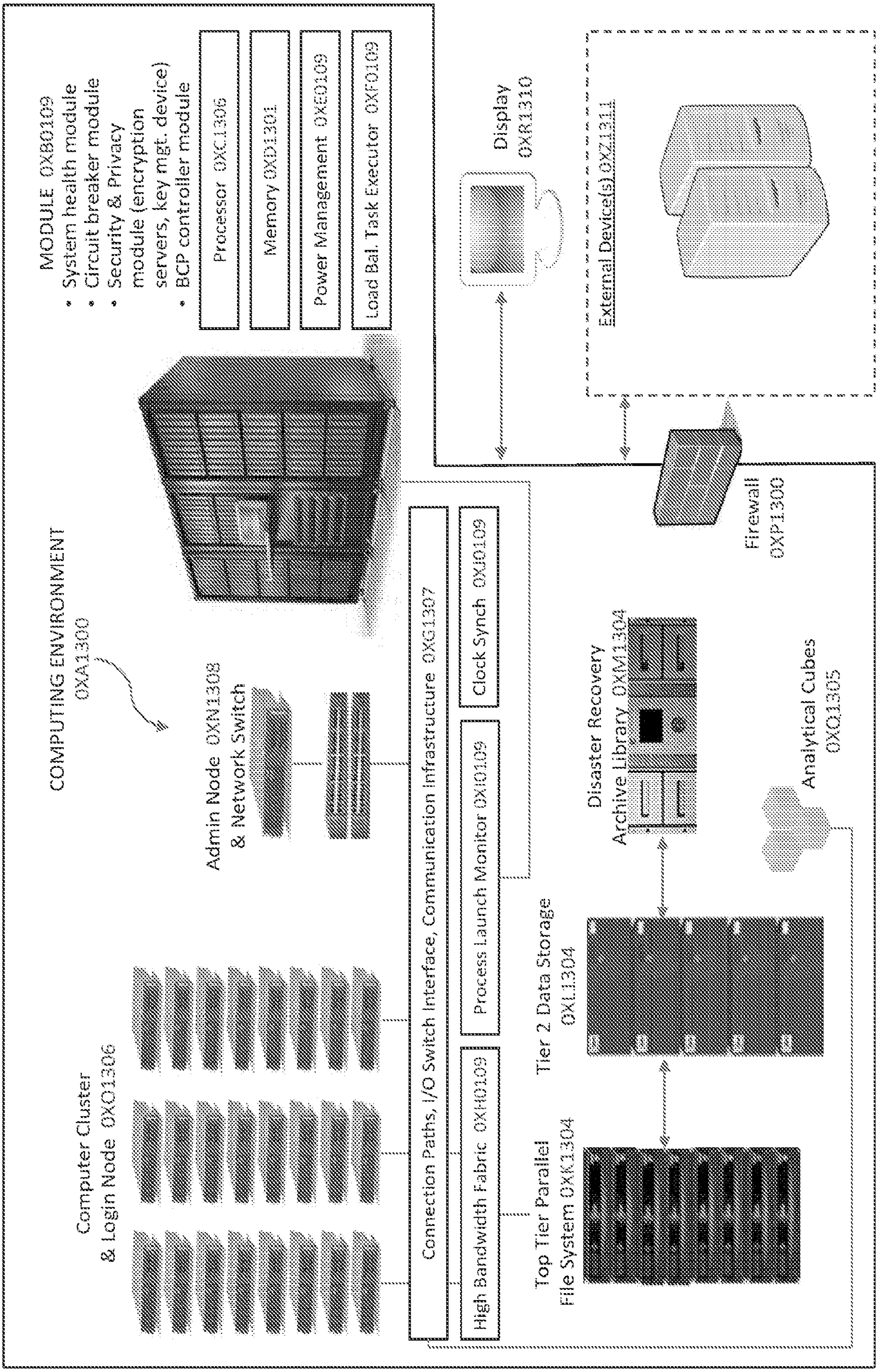
COMPUTING ENVIRONMENT
0XA1300
MODULE 0XB0109
• System health module
• Circuit breaker module
• Security & Privacy module (encryption servers, key mgt. device)
• BCP controller module
Processor 0XC1306
Memory 0XD1301
Power Management 0XE0109
Load Bal. Task Executor 0XF0109
Display
0XR1310
External Device(s) 0XZ1311
Computer Cluster
& Login Node 0XO1306
Admin Node 0XN1308
& Network Switch
Connection Paths, I/O Switch Interface, Communication Infrastructure 0XG1307
High Bandwidth Fabric 0XH0109
Process Launch Monitor 0XI0109
Clock Synch 0XJ0109
Top Tier Parallel
File System 0XK1304
Tier 2 Data Storage
0XL1304
Disaster Recovery
Archive Library 0XM1304
Analytical Cubes
0XQ1305
Firewall
0XP1300

FIG. 2

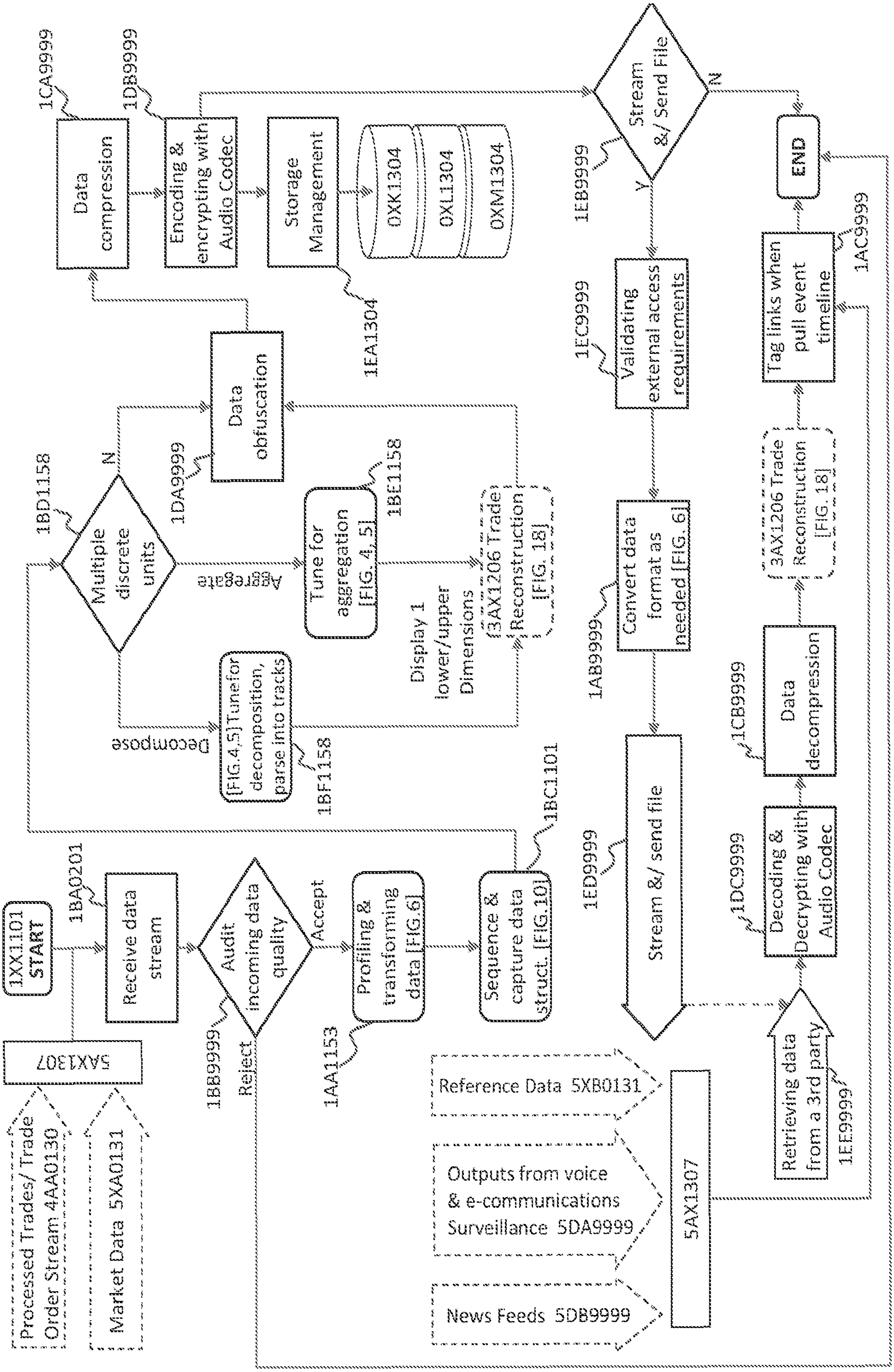

Processed Trades/ Trade Order Stream 4AA0130
Market Data 5XA0131
5AX1307
1XX1101 START
1BA0201
Receive data stream
Audit incoming data quality
1BB9999
Reject
Accept
Profiling & transforming data [FIG.6]
1AA1153
Sequence & capture data struct. [FIG.10]
1BC1101
Multiple discrete units
1BD1158
Decompose
Aggregate
N
[FIG.4,5]Tunefor decomposition, parse into tracks
1BF1158
Tune for aggregation [FIG. 4, 5]
1BE1158
Display 1 lower/upper Dimensions
3AX1206 Trade Reconstruction [FIG. 18]
Data obfuscation
1DA9999
Data compression
1CA9999
Encoding & encrypting with Audio Codec
1DB9999
Storage Management
1EA1304
0XK1304
0XL1304
0XM1304
Stream &/ Send File
1EB9999
Y
N
Validating external access requirements
1EC9999
Convert data format as needed [FIG. 6]
1AB9999
Stream &/ send file
1ED9999
Reference Data 5XB0131
Outputs from voice & e-communications Surveillance 5DA9999
News Feeds 5DB9999
5AX1307
Retrieving data from a 3rd party
1EE9999
Decoding & Decrypting with Audio Codec
1DC9999
Data decompression
1CB9999
3AX1206 Trade Reconstruction [FIG. 18]
Tag links when pull event timeline
1AC9999
END

FIG. 3

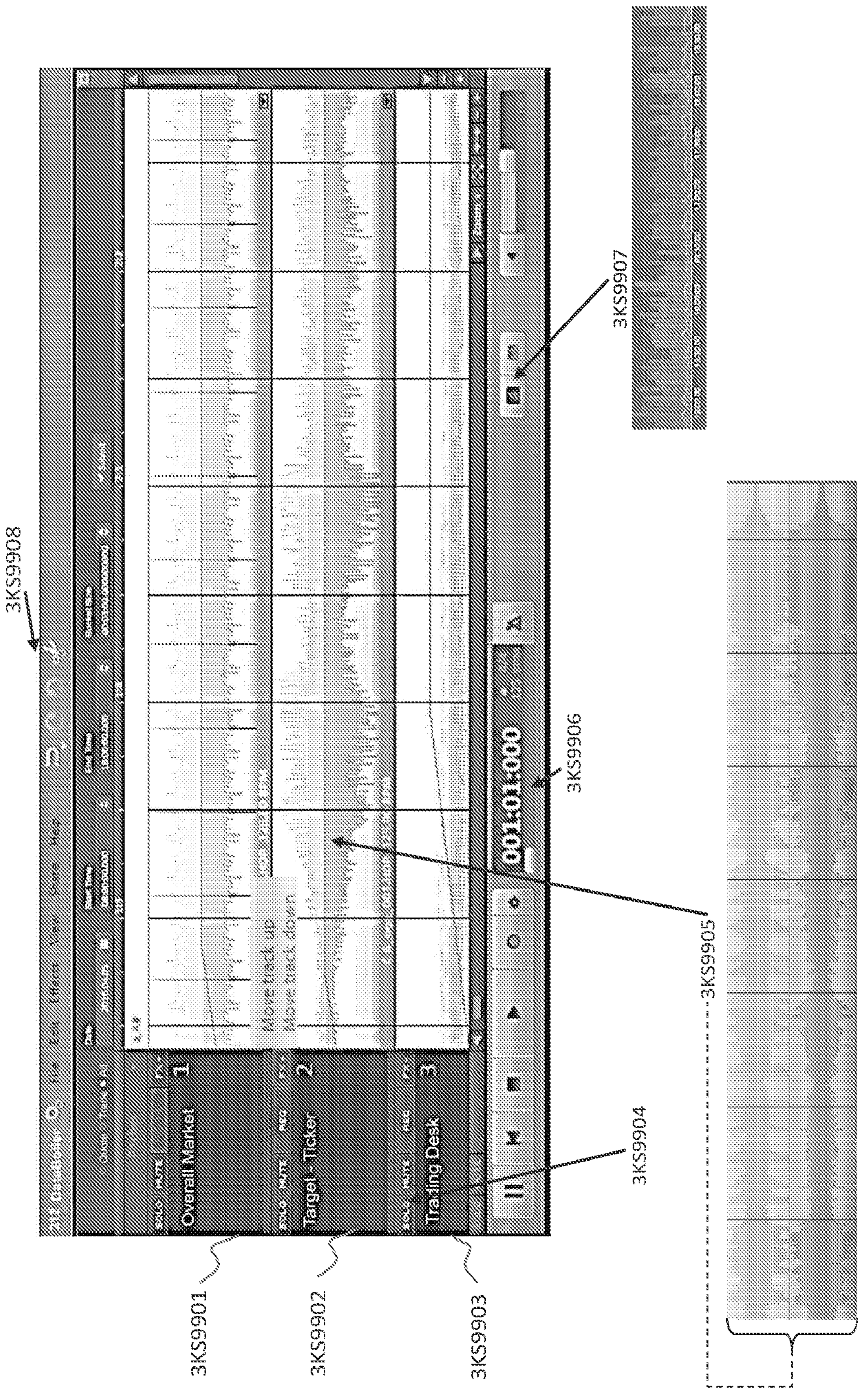
3KS9908
3KS9907
3KS9906
3KS9905
3KS9904
3KS9901
3KS9902
3KS9903
Overall Market
Target - Ticker
Trading Desk
1
2
3
Move track up
Move track down
001:01.000

FIG. 4

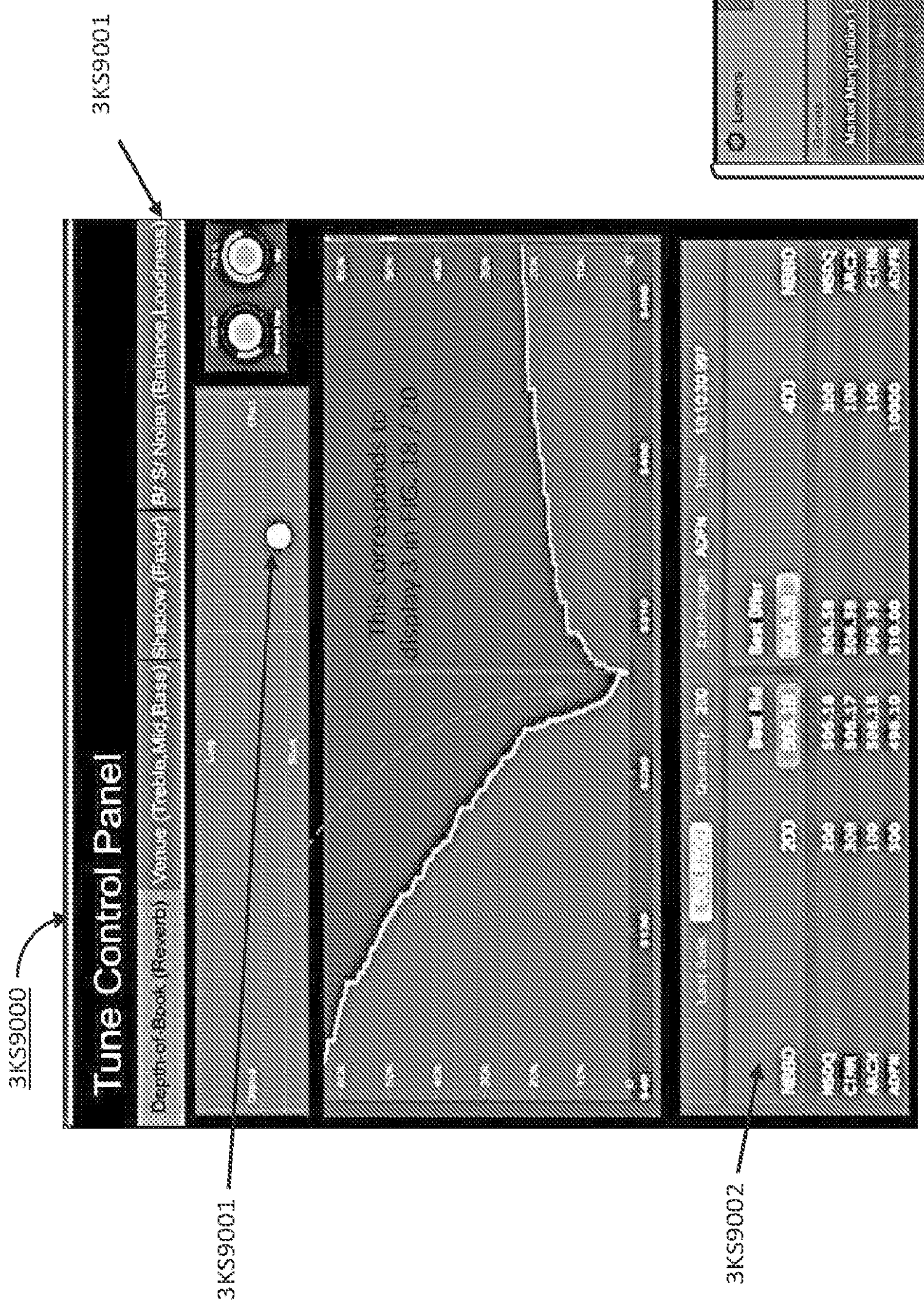
3KS9000
Tune Control Panel
Depth of Book (Reverb)
Venue (Treble/Mid/Bass)
Shadow (Fader)
B/S Noise (Balance/Loudness)
3KS9001
3KS9001
3KS9002

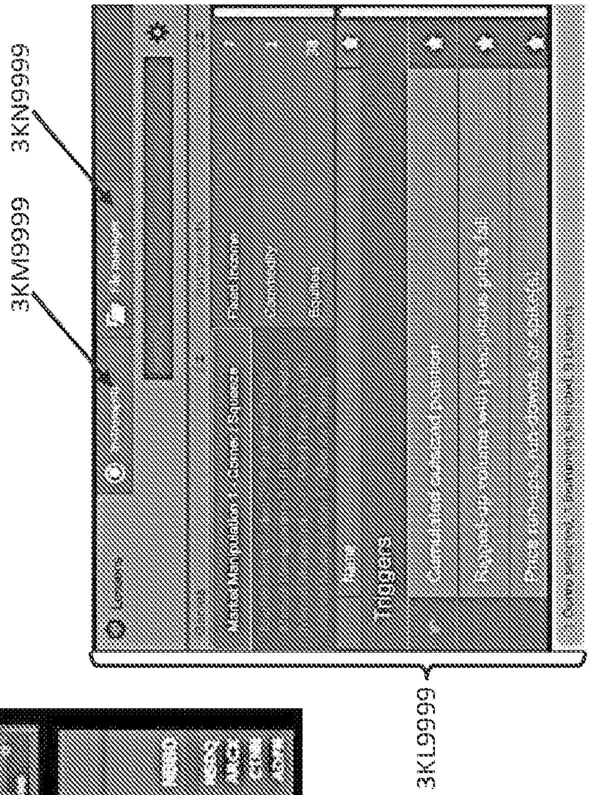
3KM9999
3KN9999
Triggers
3KL9999

FIG. 5

1AX1150

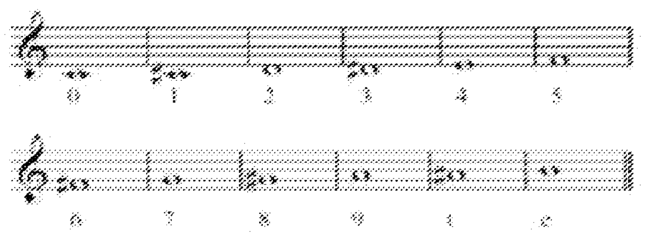


1AX1151

| Pitch Class | Tonal Counterparts |
|---|---|
| 0 | C (also B♯, D♭♭) |
| 1 | C♯, D♭ (also B♯♯) |
| 2 | D (also C♯♯, E♭♭) |
| 3 | D♯, E♭ (also F♭♭) |
| 4 | E (also D♯♯, F♭) |
| 5 | F (also E♯, G♭♭) |
| 6 | F♯, G♭ (also E♯♯) |
| 7 | G (also F♯♯, A♭♭) |
| 8 | G♯, A♭ |
| 9 | A (also G♯♯, B♭♭) |
| 10, t or A | A♯, B♭ (also C♭♭) |
| 11, e or B | B (also A♯♯, C♭) |

1BX1154

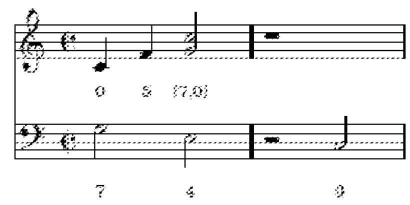


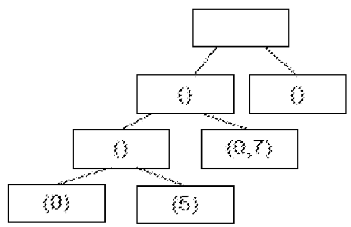


1BX1155 Top Voice Representation

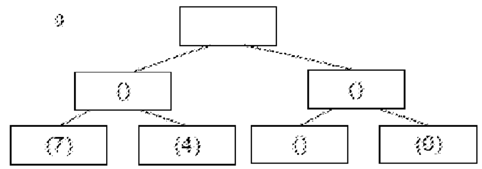


1BX1156 Bottom Voice Representation

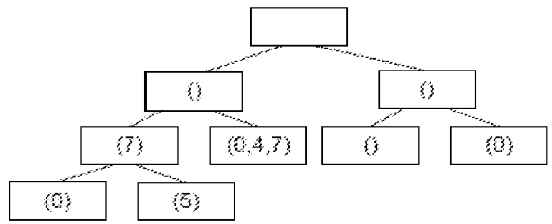


1BX1157 Top and Bottom Voice Representation

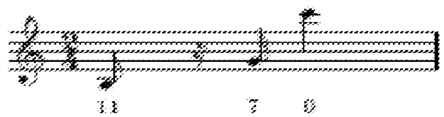


1AX1152

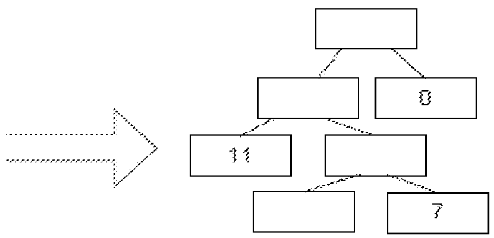


1AX1153

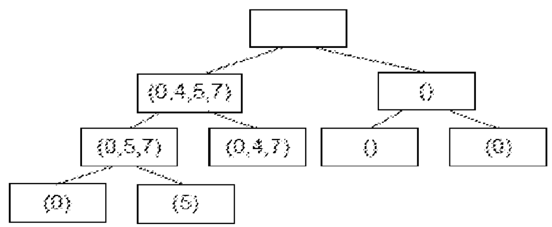


1BX1158 Top and Bottom Voice Representation with Propagation

FIG. 6

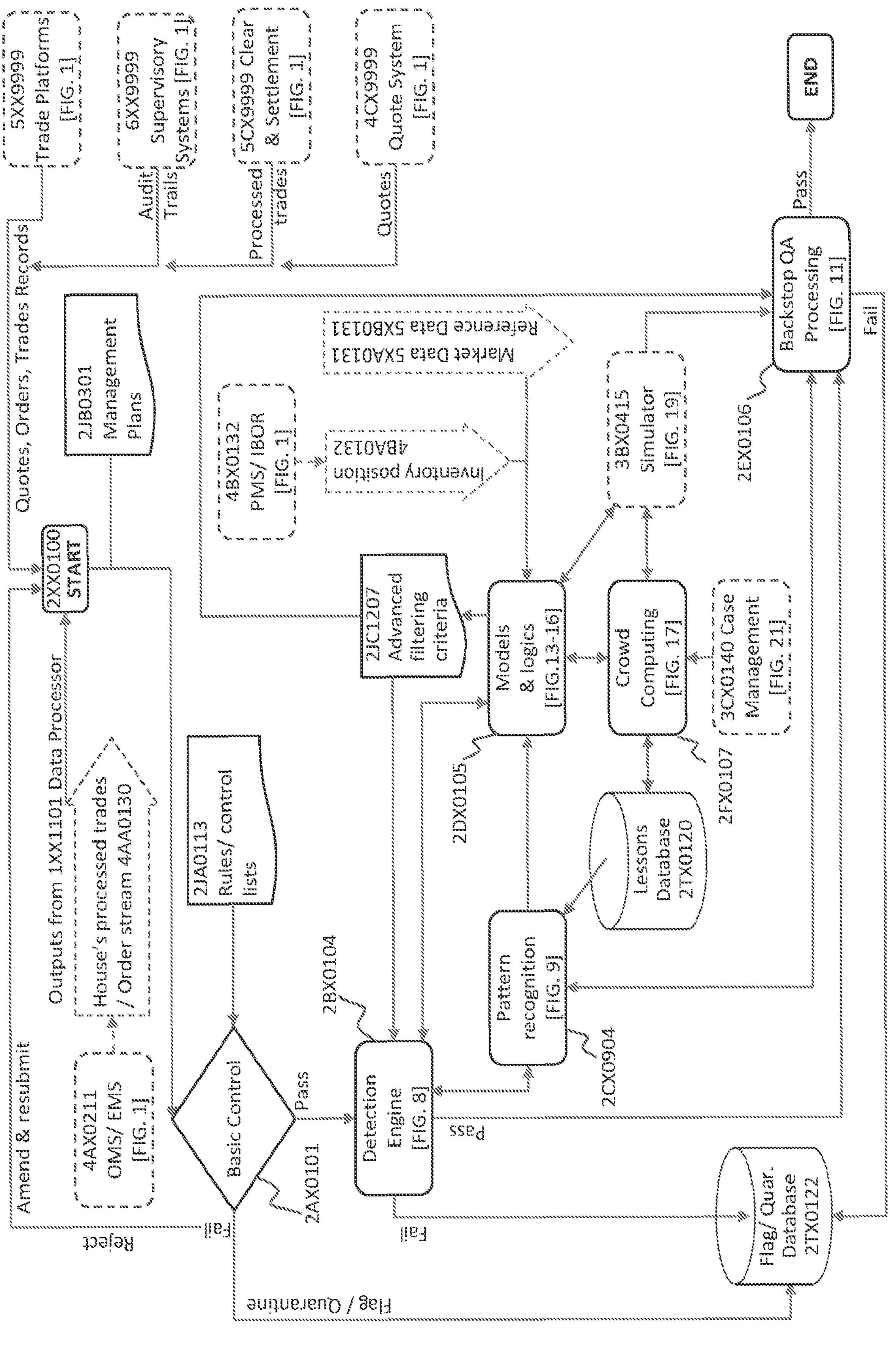

5XX9999 Trade Platforms [FIG. 1]
6XX9999 Supervisory Systems [FIG. 1]
5CX9999 Clear & Settlement [FIG. 1]
4CX9999 Quote System [FIG. 1]
Quotes, Orders, Trades Records
Audit Trails
Processed trades
Quotes
END
Pass
2JB0301 Management Plans
2XX0100 START
Market Data 5XA0131
Reference Data 5XB0131
4BX0132 PMS/ IBOR [FIG. 1]
Inventory position 4BA0132
3BX0415 Simulator [FIG. 19]
Backstop QA Processing [FIG. 11]
Fail
2EX0106
Amend & resubmit
Outputs from 1XX1101 Data Processor
House's processed trades / Order stream 4AA0130
2JA0113 Rules/ control lists
2JC1207 Advanced filtering criteria
Models & logics [FIG.13-16]
Crowd Computing [FIG. 17]
3CX0140 Case Management [FIG. 21]
2DX0105
2FX0107
Lessons Database 2TX0120
4AX0211 OMS/ EMS [FIG. 1]
Basic Control
Pass
2AX0101
2BX0104
Detection Engine [FIG. 8]
Pattern recognition [FIG. 9]
2CX0904
Pass
Reject
Fail
Fail
Flag/ Quar. Database 2TX0122
Flag / Quarantine


FIG. 7

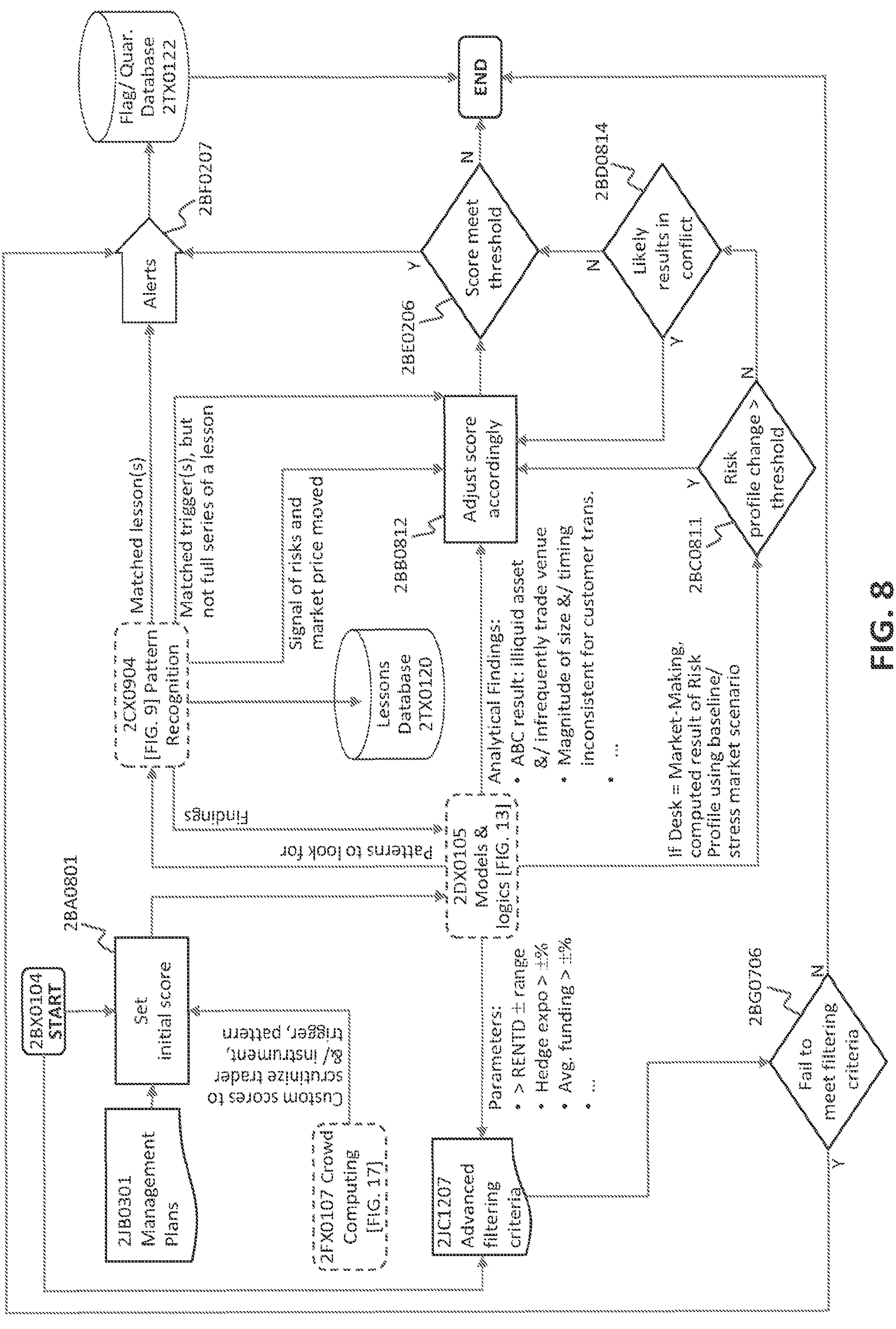
2BX0104 START
2BA0801
Set initial score
2JB0301 Management Plans
2FX0107 Crowd Computing [FIG. 17]
Custom scores to scrutinize trader &/ instrument, trigger, pattern
2DX0105 Models & logics [FIG. 13]
Parameters:
• > RENTD ± range
• Hedge expo > ±%
• Avg. funding > ±%
• ...
2JC1207 Advanced filtering criteria
2BG0706
Fail to meet filtering criteria
Y
N
Patterns to look for
Findings
2CX0904 [FIG. 9] Pattern Recognition
Matched lesson(s)
Matched trigger(s), but not full series of a lesson
Signal of risks and market price moved
Lessons Database 2TX0120
Analytical Findings:
• ABC result: illiquid asset &/ infrequently trade venue
• Magnitude of size &/ timing inconsistent for customer trans.
• ...
If Desk = Market-Making, computed result of Risk Profile using baseline/ stress market scenario
2BC0811
Risk profile change > threshold
2BB0812
Adjust score accordingly
2BE0206
Score meet threshold
2BD0814
Likely results in conflict
Alerts
2BF0207
Flag/ Quar. Database 2TX0122
END

FIG. 8

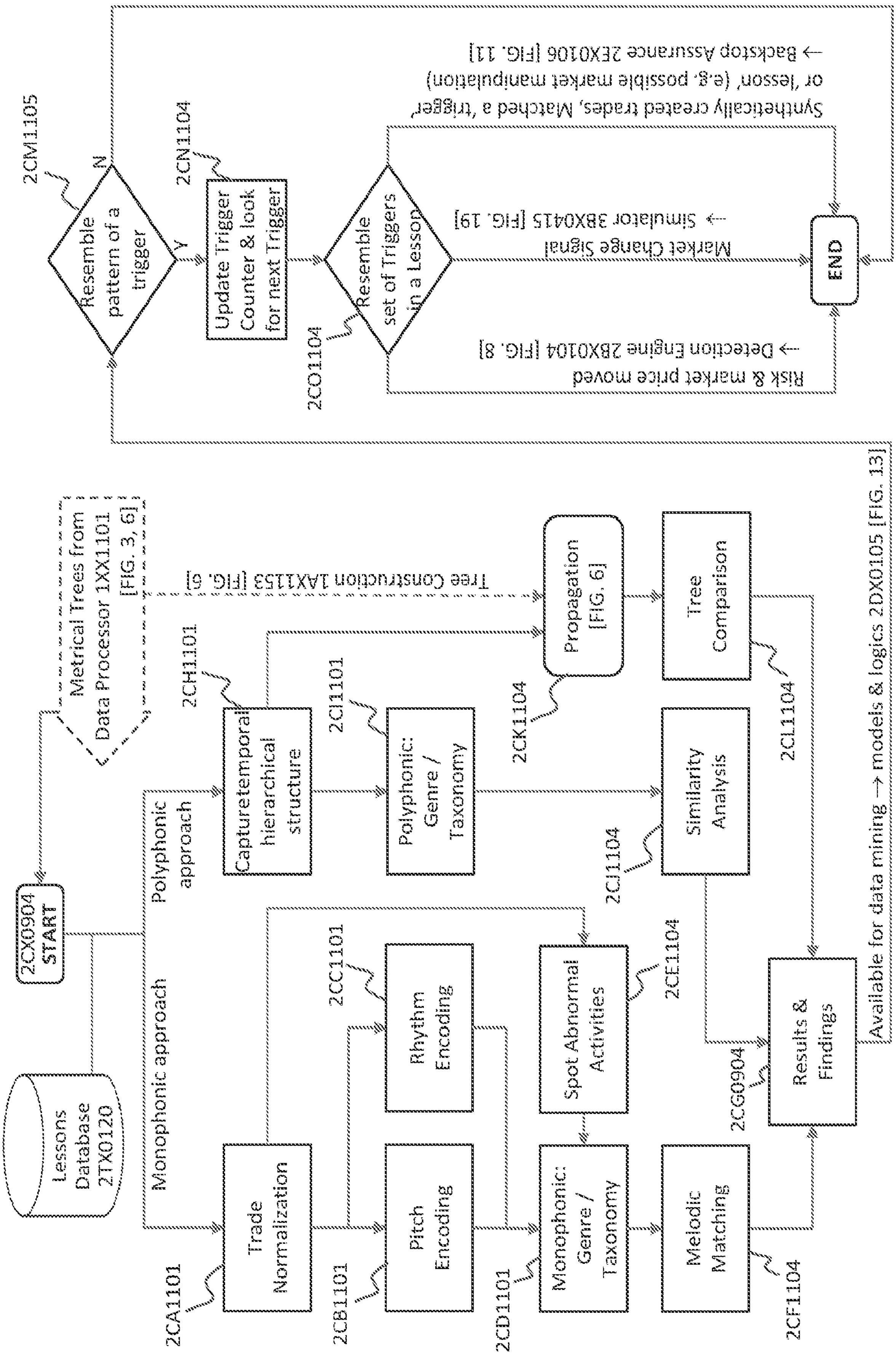
Lessons Database 2TX0120
2CX0904 START
Monophonic approach
Polyphonic approach
Metrical Trees from Data Processor 1XX1101 [FIG. 3, 6]
Tree Construction 1AX1153 [FIG. 6]
2CA1101
Trade Normalization
2CB1101
Pitch Encoding
2CC1101
Rhythm Encoding
2CD1101
Monophonic: Genre / Taxonomy
2CE1104
Spot Abnormal Activities
2CF1104
Melodic Matching
2CG0904
Results & Findings
2CH1101
Capturetemporal hierarchical structure
2CI1101
Polyphonic: Genre / Taxonomy
2CJ1104
Similarity Analysis
2CK1104
Propagation [FIG. 6]
2CL1104
Tree Comparison
Available for data mining → models & logics 2DX0105 [FIG. 13]
2CM1105
Resemble pattern of a trigger
N
Y
2CN1104
Update Trigger Counter & look for next Trigger
2CO1104
Resemble set of Triggers in a Lesson
Risk & market price moved → Detection Engine 2BX0104 [FIG. 8]
Market Change Signal → Simulator 3BX0415 [FIG. 19]
Synthetically created trades, Matched a 'trigger' or 'lesson' (e.g, possible market manipulation) → Backstop Assurance 2EX0106 [FIG. 11]
END

FIG. 9

Table 1

| | Manipulation | Pattern | Flag / Quarantine &/ skew scores |
|---|---|---|---|
| (i) | Corner/ squeeze | jbeno | Stop trades that will impair clients with squeezed prices |
| (ii) | Pump and dump scheme | bcine | Stop heavy sell orders |
| (iii) | Boiler room tactics | lim bcne | Stop further sales of poor perform asset to retail |
| (iv) | Paint the tape/ wash trade | fbd | Stop further sales of poor perform asset to retail |
| (v) | Circular trading/ primary dealer scheme | ghica | Stop trades that will impair clients with discriminated prices |
| (vi) | Forced liquidity scheme | kjunot | Stop strong buy orders |
| (vii) | Stock bashing/ reverse corner/squeeze | kpcq | Stop strong buy orders |
| (viii) | Manipulate price to prevent margin call | arce | Stop the related call option / synthetic call order |
| (ix) | Spoofing/ layering/ stuff quote | vuce | Stop further cancel/amend activities |
| (x) | Marking the close | fgdc | Stop trades that will destabilize price |
| (xi) | Manipulated trade spikes | scuv | Stop quick reverse direction trades |

FIG. 10

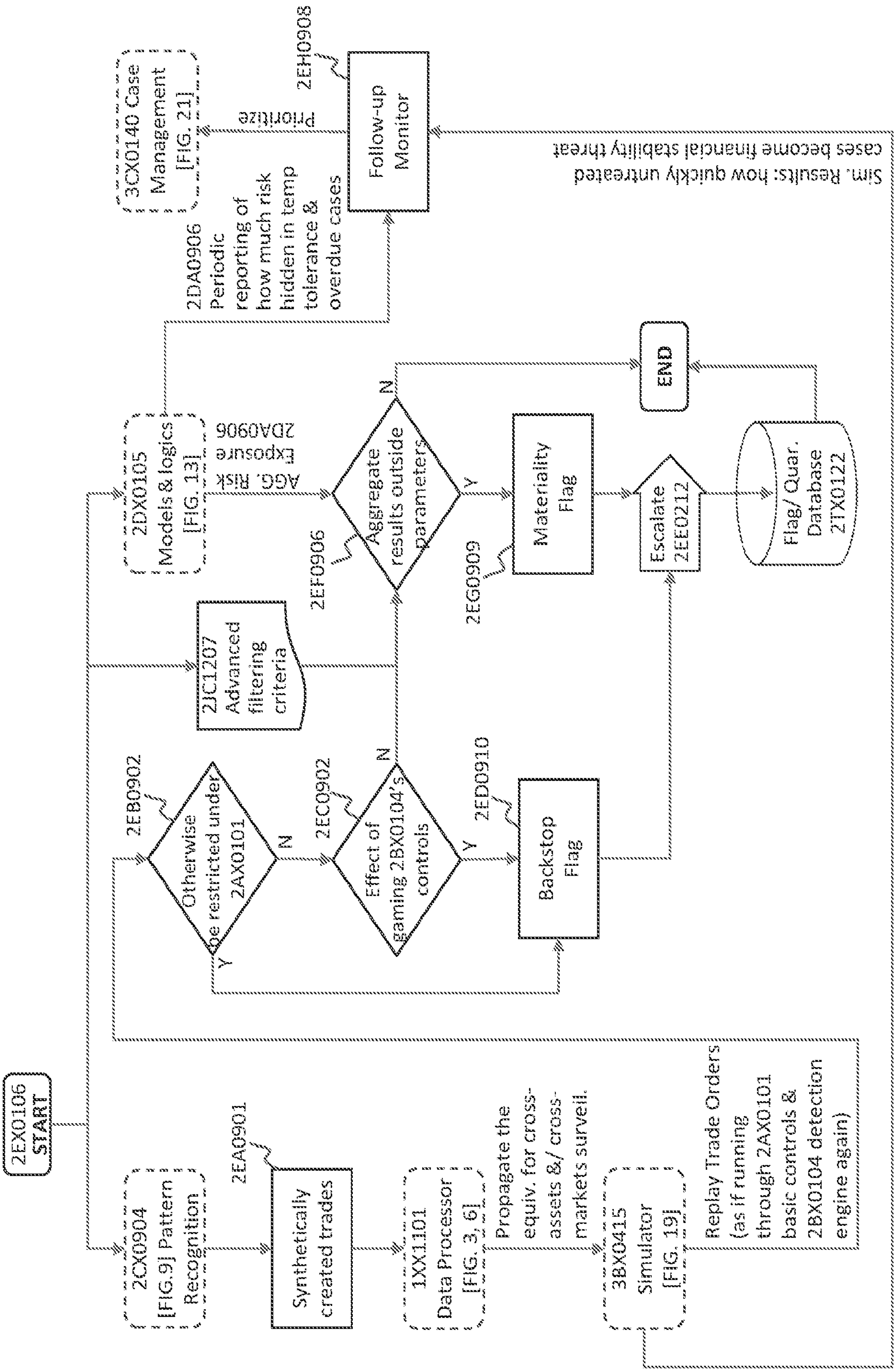
2EX0106
START
2CX0904
[FIG.9] Pattern
Recognition
2EA0901
Synthetically
created trades
1XX1101
Data Processor
[FIG. 3, 6]
Propagate the
equiv. for cross-
assets &/ cross-
markets surveil.
3BX0415
Simulator
[FIG. 19]
Replay Trade Orders
(as if running
through 2AX0101
basic controls &
2BX0104 detection
engine again)
2EB0902
Otherwise
be restricted under
2AX0101
Y
N
2EC0902
Effect of
gaming 2BX0104's
controls
Y
N
2ED0910
Backstop
Flag
2JC1207
Advanced
filtering
criteria
2DX0105
Models & logics
[FIG. 13]
AGG. Risk
Exposure
2DA0906
2EF0906
Aggregate
results outside
parameters
Y
N
2EG0909
Materiality
Flag
Escalate
2EE0212
Flag/ Quar.
Database
2TX0122
END
2DA0906
Periodic
reporting of
how much risk
hidden in temp
tolerance &
overdue cases
3CX0140 Case
Management
[FIG. 21]
Prioritize
2EH0908
Follow-up
Monitor
Sim. Results: how quickly untreated
cases become financial stability threat

FIG. 11

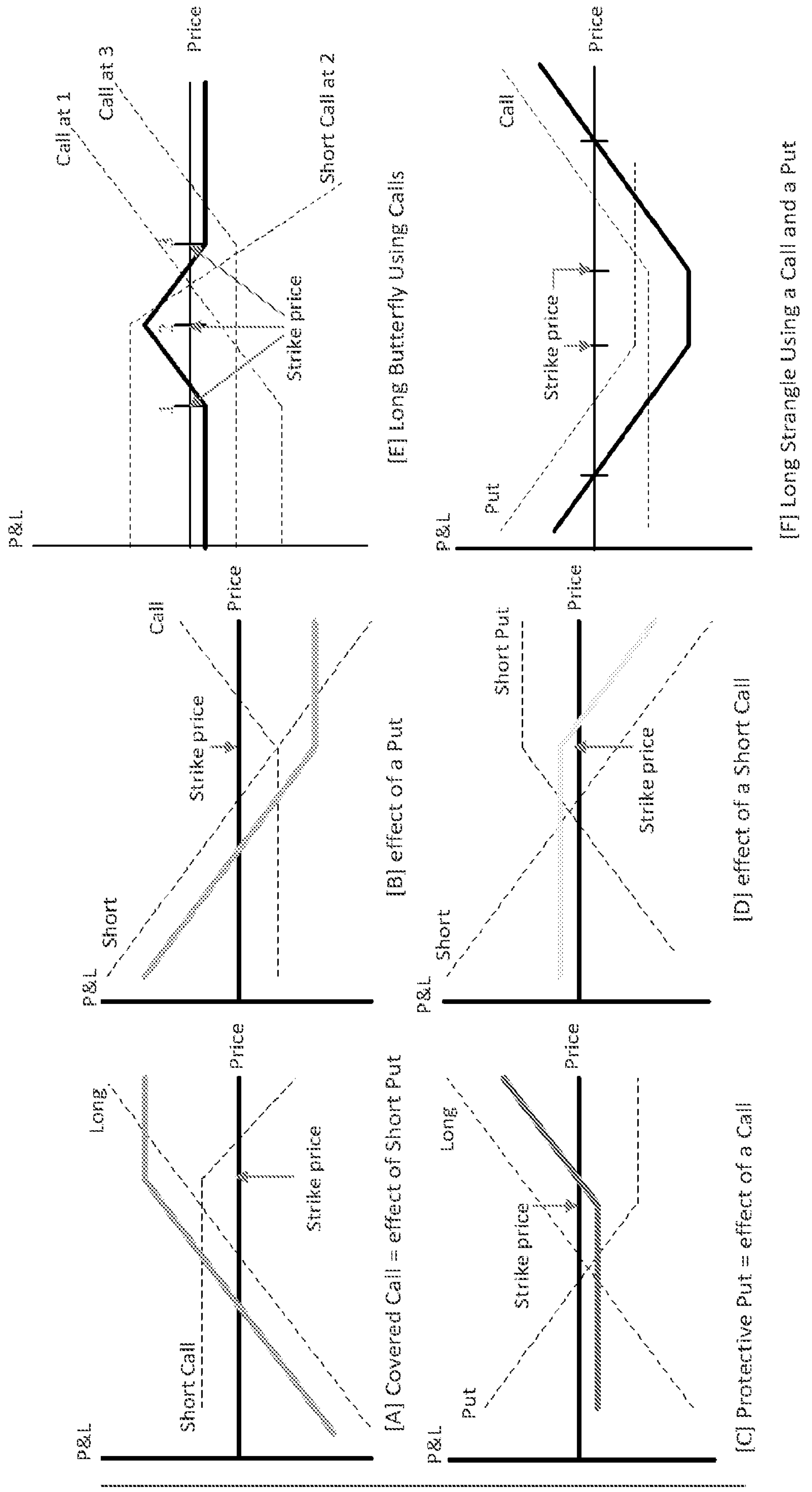
P&L
Price
Long
Short Call
Strike price
[A] Covered Call = effect of Short Put
P&L
Price
Short
Call
Strike price
[B] effect of a Put
P&L
Price
Call at 1
Call at 3
Short Call at 2
Strike price
[E] Long Butterfly Using Calls
P&L
Price
Long
Put
Strike price
[C] Protective Put = effect of a Call
P&L
Price
Short
Short Put
Strike price
[D] effect of a Short Call
P&L
Price
Put
Call
Strike price
[F] Long Strangle Using a Call and a Put

FIG. 12

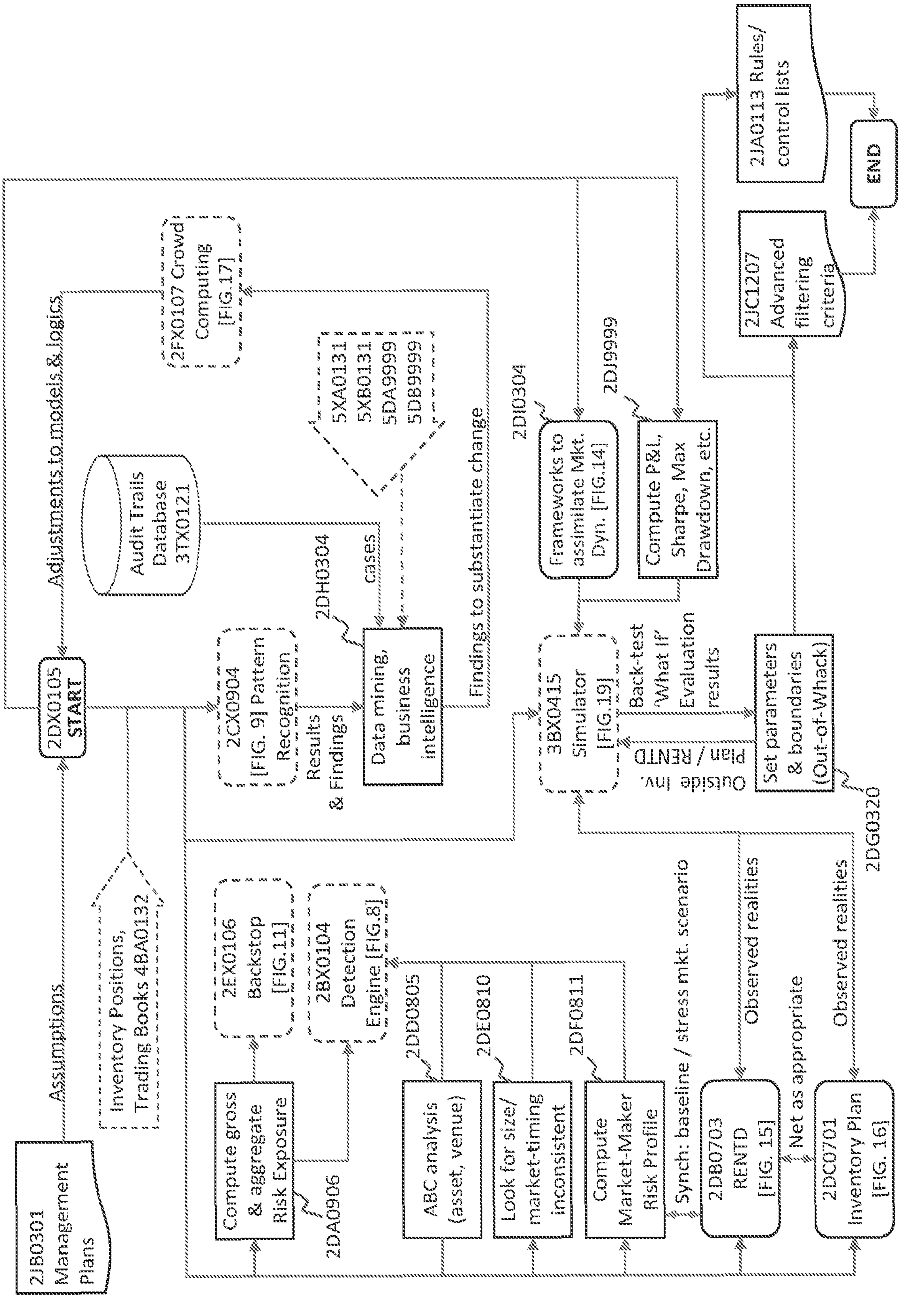
2JB0301 Management Plans
Assumptions
Inventory Positions, Trading Books 4BA0132
2DX0105 START
Adjustments to models & logics
Audit Trails Database 3TX0121
2FX0107 Crowd Computing [FIG.17]
5XA0131 5XB0131 5DA9999 5DB9999
2CX0904 [FIG. 9] Pattern Recognition
Results & Findings
2DH0304
cases
Data mining, business intelligence
Findings to substantiate change
Compute gross & aggregate Risk Exposure
2DA0906
2EX0106 Backstop [FIG.11]
2BX0104 Detection Engine [FIG.8]
2DD0805
ABC analysis (asset, venue)
2DE0810
Look for size/ market-timing inconsistent
2DF0811
Compute Market-Maker Risk Profile
Synch: baseline / stress mkt. scenario
2DB0703 RENTD [FIG. 15]
Net as appropriate
2DC0701 Inventory Plan [FIG. 16]
Observed realities
Observed realities
3BX0415 Simulator [FIG.19]
Outside Inv. Plan / RENTD
Back-test 'What If' Evaluation results
2DI0304
Frameworks to assimilate Mkt. Dyn. [FIG.14]
2DJ9999
Compute P&L, Sharpe, Max Drawdown, etc.
Set parameters & boundaries (Out-of-Whack)
2DG0320
2JC1207 Advanced filtering criteria
2JA0113 Rules/ control lists
END

FIG. 13

*Frameworks & Algorithms*

| | Market | Clients/ Counterparties | Instruments |
|---|---|---|---|
| Risk | Market depth, Sharpe ratio, imbalance, stress/ baseline scenarios per CCAR/ DFAST/ COREP/ FINREP (e.g. shock on derivatives, significant price decline/ increase in risk premia), flash crash & other events | Likely results in conflict; how much, how quickly, & life of hedges; observed variance on non-informed (noise) traders' inventory & number of core market-makers to gauge price fairness & best execution timing; changes in market-maker's risk profile, etc. | Likely results in risk & price move; materiality, concentration; observed variance on asset payoff; likely losses from non-marketable collaterals; delta hedge of non-linear positions with linear instruments, etc. |
| Liquidity | Duration gap, portfolio immunization, liquidity coverage, opportunity costs (refinancing), etc. | Client's/own funding stability; initial/ variable margins; end-of-date repo, concentration, > threshold % of capital, etc. | Cross-markets/ venues liquidity sourcing, foreign exposure; contingent liquidity premia, etc. |
| Inventory | Maker-taker model, trade-through, price/ time/ size priorities; statistical arbitrage vs market making & other roles played in market; meaningful quote vs demand toxicity, etc. | Consistent timing & order size to route/ execute clients' trades; channel strategy/ appetite that maximize P&L and product availability; individual counterparty exposure > threshold; related party trans. > threshold, etc. | ABC analysis (fast/slow); Supply/ demand reliability & elasticity; agent-based model, migration analysis, transaction cost analyzer, net exposure on particular asset class &/ instrument > threshold, etc. |

FIG. 14

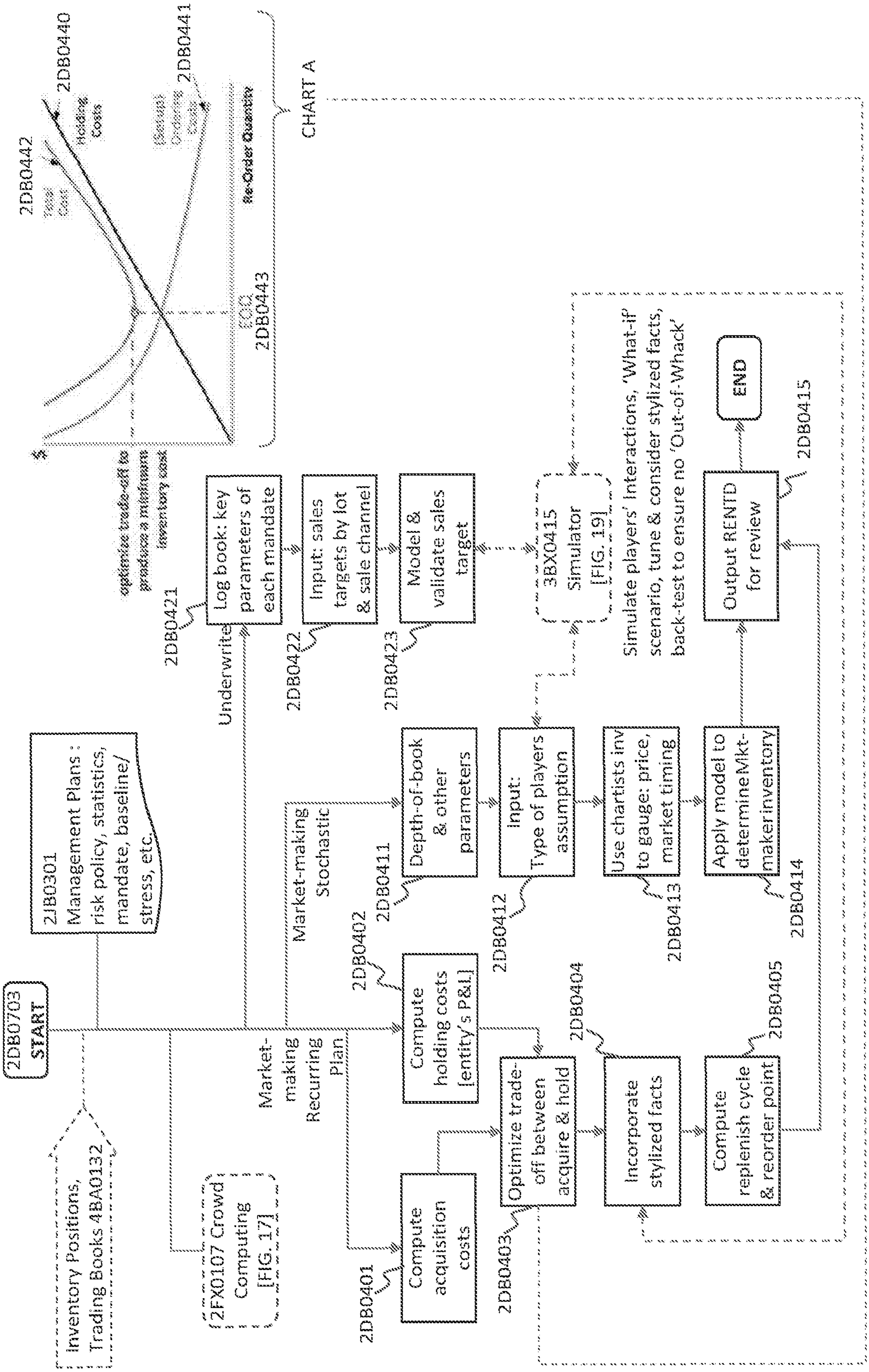

Inventory Positions, Trading Books 4BA0132
2DB0703
START
2JB0301
Management Plans : risk policy, statistics, mandate, baseline/ stress, etc.
2FX0107 Crowd Computing [FIG. 17]
Market-making Recurring Plan
Market-making Stochastic
Underwrite
2DB0401
Compute acquisition costs
2DB0402
Compute holding costs [entity's P&L]
2DB0403
Optimize trade-off between acquire & hold
2DB0404
Incorporate stylized facts
2DB0405
Compute replenish cycle & reorder point
2DB0411
Depth-of-book & other parameters
2DB0412
Input: Type of players assumption
2DB0413
Use chartists inv to gauge: price, market timing
2DB0414
Apply model to determine Mkt-maker inventory
2DB0421
Log book: key parameters of each mandate
2DB0422
Input: sales targets by lot & sale channel
2DB0423
Model & validate sales target
3BX0415
Simulator [FIG. 19]
Output RENTD for review
2DB0415
END
Simulate players' Interactions, 'What-if' scenario, tune & consider stylized facts, back-test to ensure no 'Out-of-Whack'
optimize trade-off to produce a minimum inventory cost
$
2DB0442
Total Cost
2DB0440
Holding Costs
2DB0441
Setup/ Ordering Costs
EOQ
2DB0443
Re-Order Quantity
CHART A


FIG. 15

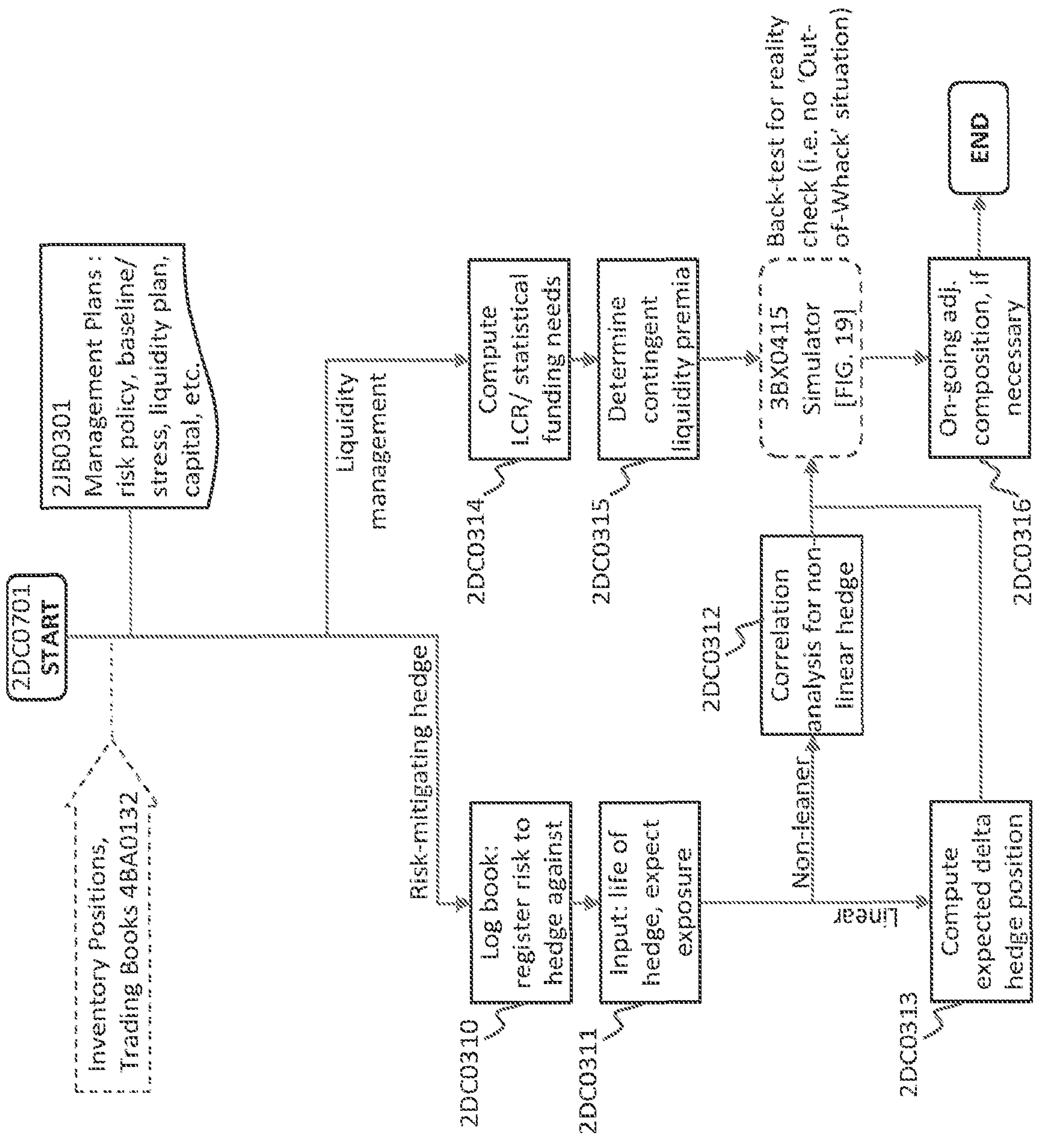
Inventory Positions, Trading Books 4BA0132
2DC0701
START
2JB0301
Management Plans : risk policy, baseline/ stress, liquidity plan, capital, etc.
Risk-mitigating hedge
Liquidity management
2DC0310
Log book: register risk to hedge against
2DC0311
Input: life of hedge, expect exposure
2DC0314
Compute LCR/ statistical funding needs
2DC0315
Determine contingent liquidity premia
Non-leaner
Linear
2DC0312
Correlation analysis for non-linear hedge
3BX0415
Simulator
[FIG. 19]
Back-test for reality check (i.e. no 'Out-of-Whack' situation)
2DC0313
Compute expected delta hedge position
2DC0316
On-going adj. composition, if necessary
END

FIG. 16

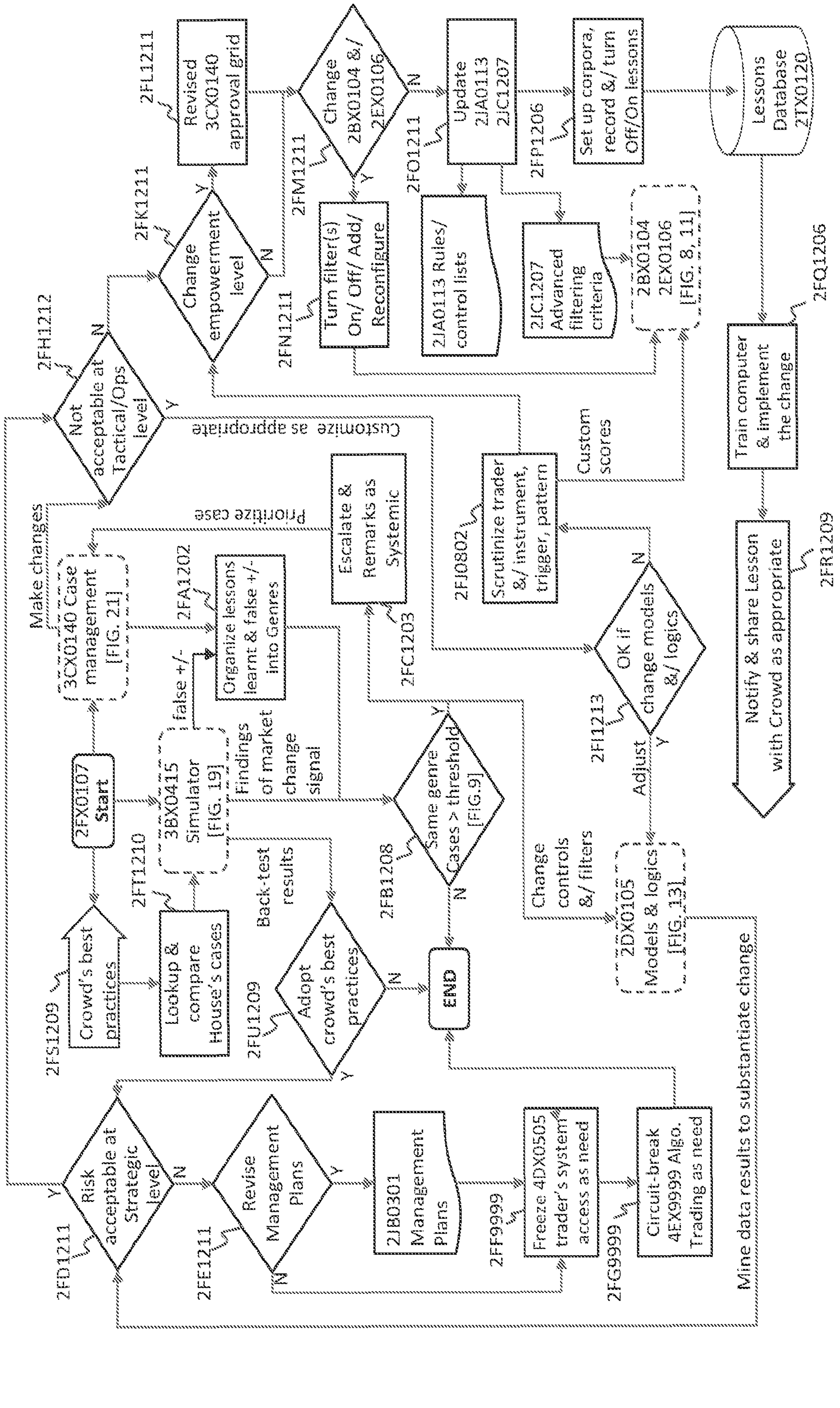

2FX0107
Start
Crowd's best practices
2FS1209
Lookup & compare House's cases
2FT1210
3BX0415 Simulator [FIG. 19]
3CX0140 Case management [FIG. 21]
Make changes
false +/-
2FA1202
Organize lessons learnt & false +/- into Genres
Findings of market change signal
Back-test results
Adopt crowd's best practices
2FU1209
Same genre Cases > threshold [FIG.9]
2FB1208
Escalate & Remarks as Systemic
2FC1203
Prioritize case
END
Not acceptable at Tactical/Ops level
2FH1212
Customize as appropriate
Change empowerment level
2FK1211
Revised 3CX0140 approval grid
2FL1211
Change 2BX0104 &/ 2EX0106
2FM1211
Turn filter(s) On/ Off/ Add/ Reconfigure
2FN1211
Update 2JA0113 2JC1207
2FO1211
2JA0113 Rules/ control lists
2JC1207 Advanced filtering criteria
2BX0104 2EX0106 [FIG. 8, 11]
Set up corpora, record &/ turn Off/On lessons
2FP1206
Lessons Database 2TX0120
Scrutinize trader &/ instrument, trigger, pattern
2FJ0802
Custom scores
OK if change models &/ logics
2FI1213
Adjust
Change controls &/ filters
2DX0105 Models & logics [FIG. 13]
Train computer & implement the change
2FQ1206
Notify & share Lesson with Crowd as appropriate
2FR1209
Risk acceptable at Strategic level
2FD1211
Revise Management Plans
2FE1211
2JB0301 Management Plans
Freeze 4DX0505 trader's system access as need
2FF9999
Circuit-break 4EX9999 Algo. Trading as need
2FG9999
Mine data results to substantiate change
Y
N


FIG. 17

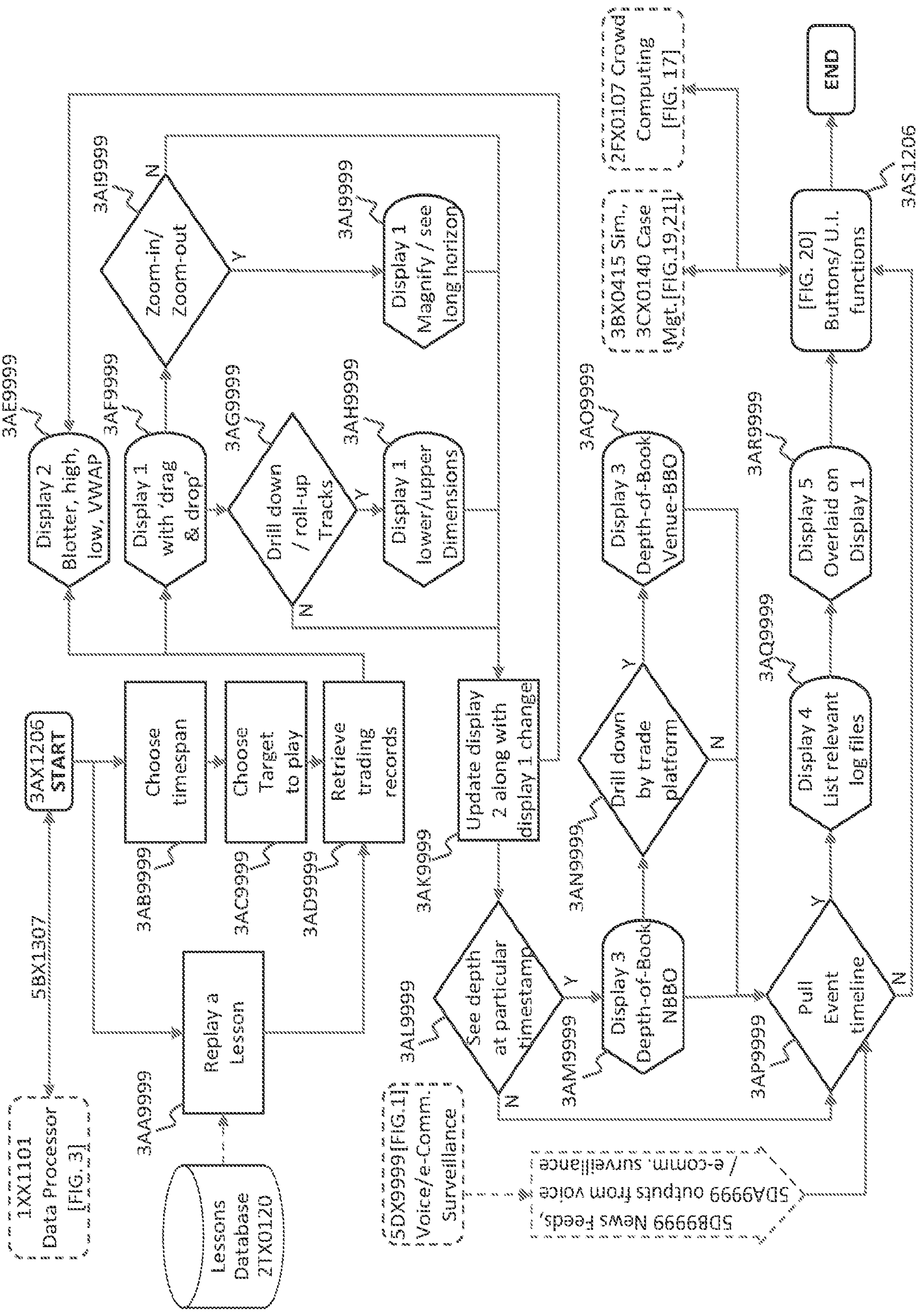

1XX1101 Data Processor [FIG. 3]
5BX1307
3AX1206 START
Lessons Database 2TX0120
3AA9999
Replay a Lesson
3AB9999
Choose timespan
3AC9999
Choose Target to play
3AD9999
Retrieve trading records
3AE9999
Display 2 Blotter, high, low, VWAP
3AF9999
Display 1 with 'drag & drop'
3AG9999
Drill down / roll-up Tracks
3AH9999
Display 1 lower/upper Dimensions
3AI9999
Zoom-in/ Zoom-out
3AJ9999
Display 1 Magnify / see long horizon
3AK9999
Update display 2 along with display 1 change
3AL9999
See depth at particular timestamp
3AM9999
Display 3 Depth-of-Book NBBO
3AN9999
Drill down by trade platform
3AO9999
Display 3 Depth-of-Book Venue-BBO
3AP9999
Pull Event timeline
3AQ9999
Display 4 List relevant log files
3AR9999
Display 5 Overlaid on Display 1
[FIG. 20] Buttons/U.I. functions
3AS1206
END
3BX0415 Sim., 3CX0140 Case Mgt.[FIG.19,21]
2FX0107 Crowd Computing [FIG. 17]
5DX9999[FIG.1] Voice/e-Comm. Surveillance
5DB9999 News Feeds, 5DA9999 outputs from voice / e-comm. surveillance
Y
N


FIG. 18

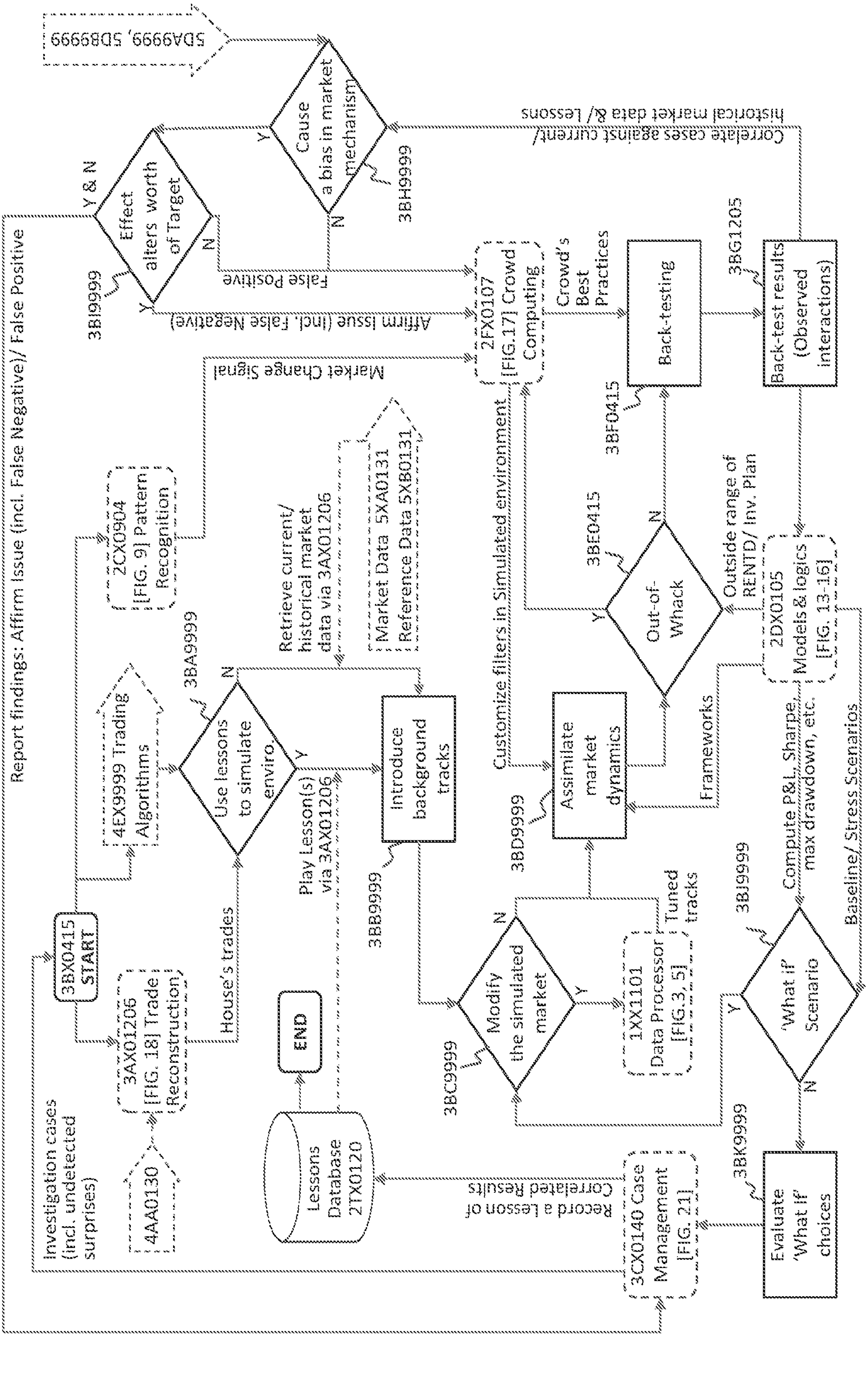
3BX0415 START
4AA0130
3AX01206 [FIG. 18] Trade Reconstruction
House's trades
4EX9999 Trading Algorithms
2CX0904 [FIG. 9] Pattern Recognition
Use lessons to simulate enviro.
3BA9999
Y
N
Retrieve current/ historical market data via 3AX01206
Market Data 5XA0131
Reference Data 5XB0131
Play Lesson(s) via 3AX01206
Introduce background tracks
3BB9999
END
Lessons Database 2TX0120
Modify the simulated market
3BC9999
1XX1101 Data Processor [FIG.3, 5]
Tuned tracks
Assimilate market dynamics
3BD9999
Customize filters in Simulated environment
Frameworks
Out-of-Whack
3BE0415
Outside range of RENTD/ Inv. Plan
2DX0105 Models & logics [FIG. 13-16]
Compute P&L, Sharpe, max drawdown, etc.
Baseline/ Stress Scenarios
'What if' Scenario
3BJ9999
Evaluate 'What If' choices
3BK9999
3CX0140 Case Management [FIG. 21]
Record a Lesson of Correlated Results
Investigation cases (incl. undetected surprises)
Report findings: Affirm Issue (incl. False Negative)/ False Positive
Market Change Signal
2FX0107 [FIG.17] Crowd Computing
Crowd's Best Practices
Back-testing
3BF0415
Back-test results (Observed interactions)
3BG1205
Correlate cases against current/ historical market data &/ Lessons
Cause a bias in market mechanism
3BH9999
Effect alters worth of Target
3BI9999
Y & N
Affirm Issue (incl. False Negative)
False Positive
5DA9999, 5DB9999

FIG. 19

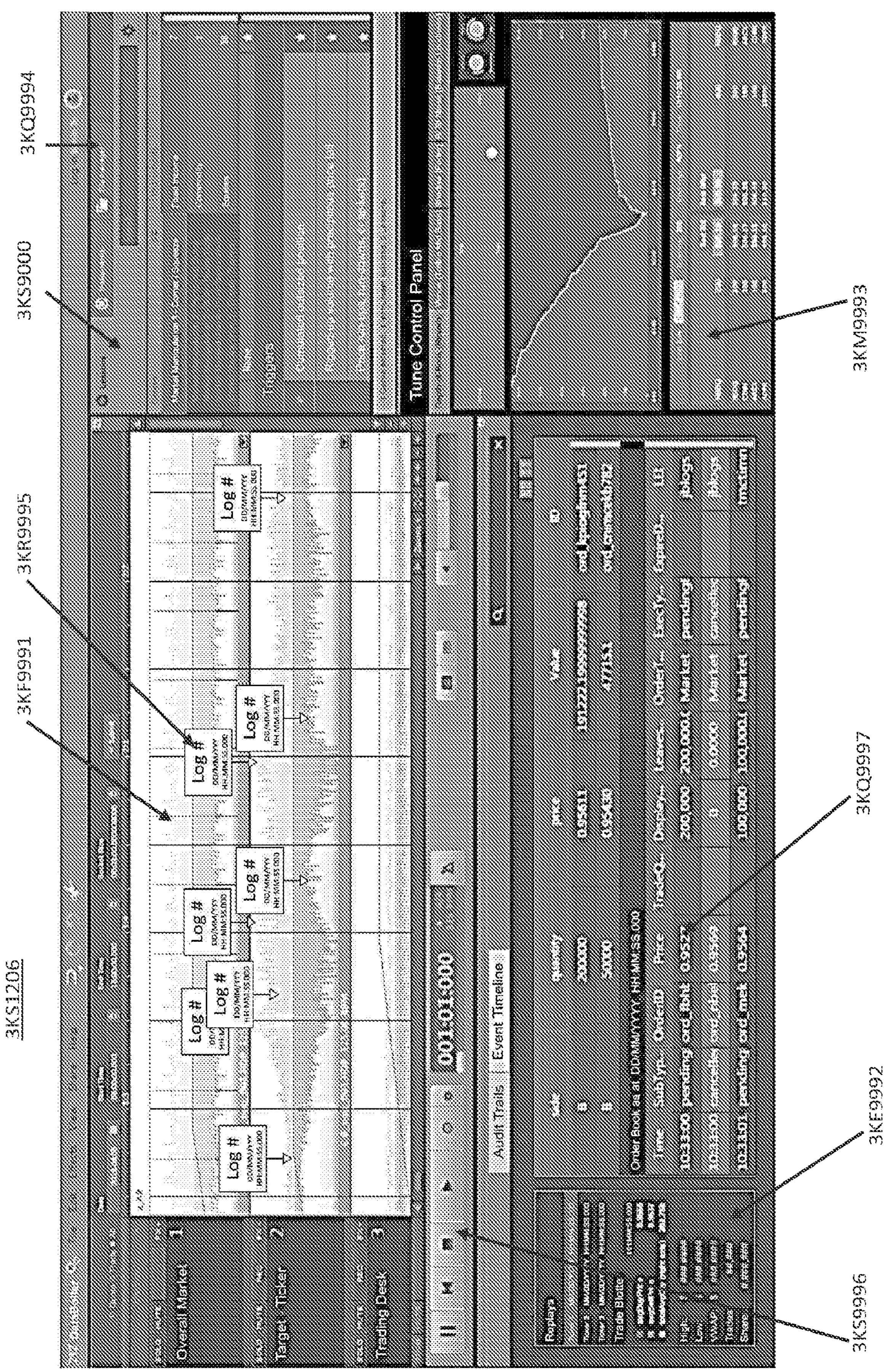
3KS1206
3KF9991
3KR9995
3KS9000
3KQ9994
Overall Market
Target Ticker
Trading Desk
Log #
Audit Trails
Event Timeline
Tune Control Panel
Replays
Trade Blotter
001:01:000
Order Book as at DD/MM/YYYY HH:MM:SS.000
3KS9996
3KE9992
3KQ9997
3KM9993

FIG. 20

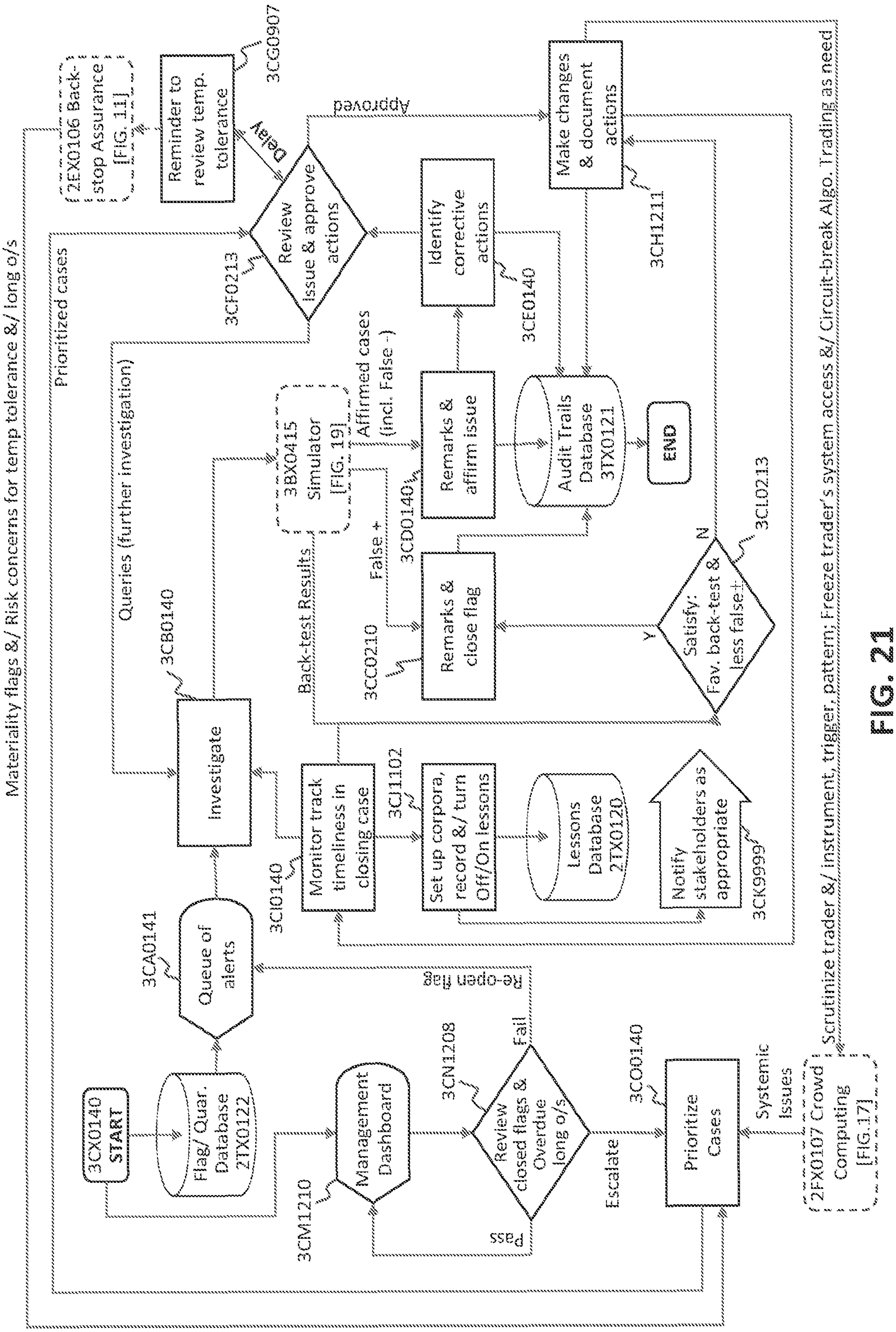
3CX0140
START
Flag/ Quar. Database 2TX0122
3CA0141
Queue of alerts
3CB0140
Investigate
Queries (further investigation)
3BX0415 Simulator [FIG. 19]
Back-test Results
Affirmed cases (incl. False -)
False +
3CD0140
Remarks & affirm issue
3CC0210
Remarks & close flag
3CI0140
Monitor track timeliness in closing case
3CJ1102
Set up corpora, record &/ turn Off/On lessons
Lessons Database 2TX0120
3CK9999
Notify stakeholders as appropriate
Audit Trails Database 3TX0121
END
3CL0213
Satisfy: Fav. back-test & less false±
Y
N
3CE0140
Identify corrective actions
3CF0213
Review Issue & approve actions
Delay
Approved
3CG0907
Reminder to review temp. tolerance
2EX0106 Back-stop Assurance [FIG. 11]
3CH1211
Make changes & document actions
3CM1210
Management Dashboard
3CN1208
Review closed flags & Overdue long o/s
Pass
Fail
Re-open flag
Escalate
3CO0140
Prioritize Cases
Systemic Issues
2FX0107 Crowd Computing [FIG.17]
Prioritized cases
Materiality flags &/ Risk concerns for temp tolerance &/ long o/s
Scrutinize trader &/ instrument, trigger, pattern; Freeze trader's system access &/ Circuit-break Algo. Trading as need

FIG. 21

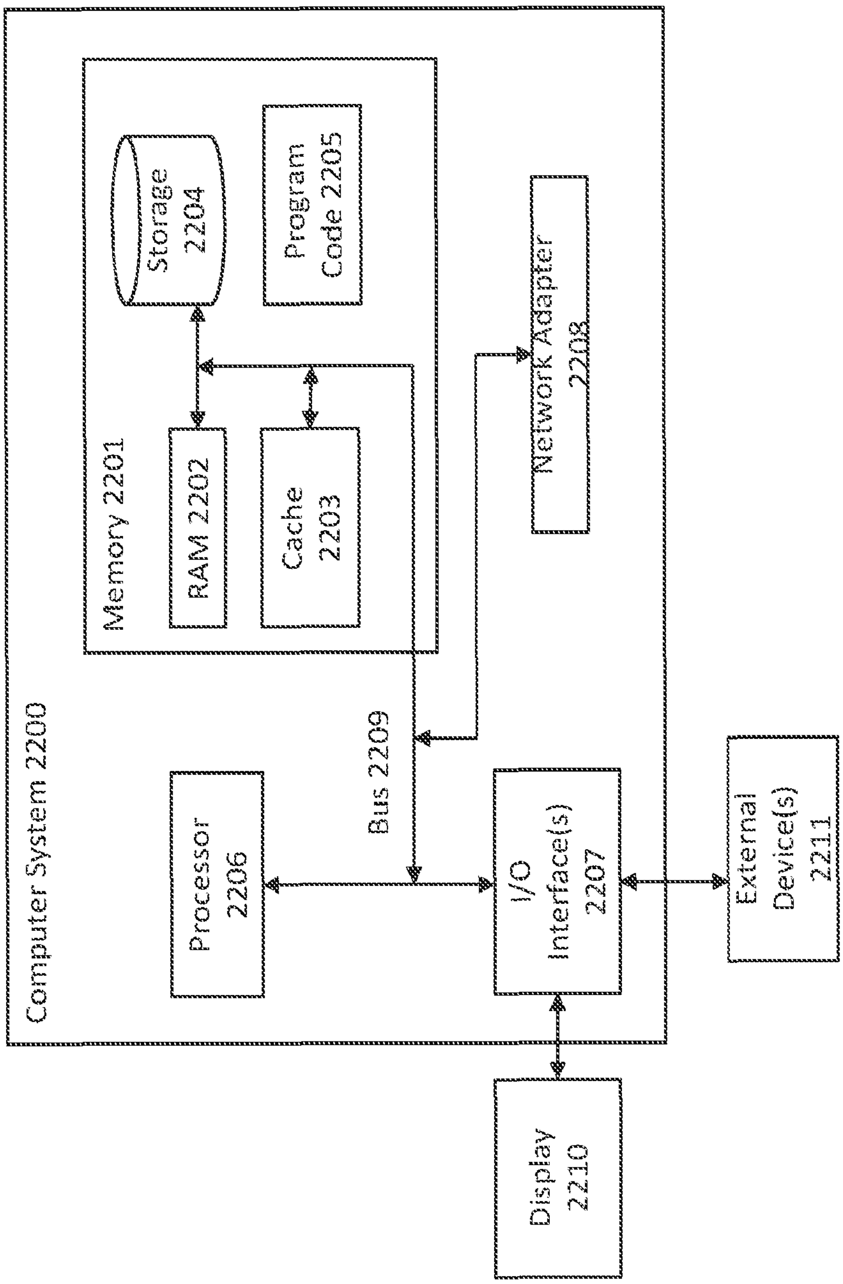
Computer System 2200
Memory 2201
RAM 2202
Cache 2203
Storage 2204
Program Code 2205
Processor 2206
Bus 2209
Network Adapter 2208
I/O Interface(s) 2207
External Device(s) 2211
Display 2210

FIG. 22

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 37362519
- US 97572015
- US 62094287
- US 20040055447 A1
- FR 1209


### Non-patent literature cited in the description


- Symbolic music comparison with tree data. **DAVID RIZO VALERO**. Ph.D. thesis. Universidad de Alicante, August 2010